# EUROPEAN PATENT APPLICATION

(11) **EP 4 793 561 A1**
(43) Date of publication of application: **19.08.2026**
(21) Application number: 25859475.3
(22) Date of filing: 01.09.2025
(51) Int. Cl.: F24F 1/0011, F24F 13/22, F24F 13/14

(54) **AIR CONDITIONING INDOOR UNIT AND AIR CONDITIONING SYSTEM**

(30) Priority: 02.09.2024 CN 202411227031
(71) Applicant: Xiaomi Technology (Wuhan) Co., Ltd., Wuhan, Hubei 430000 (CN); Xiaomi Smart Appliances (Wuhan) Co., Ltd., Wuhan, Hubei 430073 (CN); Beijing Xiaomi Mobile Software Co., Ltd., Beijing 100085 (CN)
(72) Inventor: MU, Yuan, Wuhan, Hubei 430000 (CN); WU, Junhong, Wuhan, Hubei 430000 (CN); ZHANG, Huazhong, Wuhan, Hubei 430000 (CN); YU, Jiebin, Wuhan, Hubei 430000 (CN); LI, Shuyun, Wuhan, Hubei 430000 (CN); PENG, Guangqian, Wuhan, Hubei 430000 (CN); ZHOU, Shufeng, Wuhan, Hubei 430000 (CN); MENG, Hongwu, Wuhan, Hubei 430000 (CN)
(74) Representative: Stöckeler, Ferdinand
(86) International application number: PCT/CN2025/118326
(87) International publication number: WO 2026/046402

(57) **Abstract**

An air conditioner indoor unit and an air conditioning system are provided. The air conditioner indoor unit includes a frame, a base, a heat exchanger, an air guiding frame and a cross-flow assembly. The frame has an air inlet and an air outlet, and the air outlet is located above the air inlet. The base is connected with the frame, an air duct extending in a first direction is defined between the base and the frame, and the base and the frame are arranged opposite to each other in a second direction orthogonal to the first direction. The heat exchanger is arranged in the air duct, and the heat exchanger is arranged adjacent to the air inlet and protrudes toward the air inlet. The air guiding frame is detachably connected with the base and arranged adjacent to the air outlet, and is configured to guide an airflow in the air duct to the air outlet. The cross-flow assembly is arranged in the air duct and located between the air guiding frame and the heat exchanger in the third direction, and is configured to convey the airflow from the air inlet to the air outlet. The third direction is perpendicular to the first direction and the second direction.

## Description

### CROSS-REFERENCE TO RELATED APPLICATION

The present disclosure is based on and claims the benefit of priority to Chinese application No. 202411227031.0, filed on September 2, 2024, the contents of which are incorporated herein by reference in their entireties for all purposes.

### FIELD

The present disclosure relates to the technical field of air conditioners, and more particularly to an air conditioner indoor unit and an air conditioning system.

### BACKGROUND

An air conditioner is a control and regulation device used to adjust an indoor temperature, an indoor humidity and other environmental parameters. With the increasing demand for the home living quality in recent years, the air conditioner has also been greatly popularized. However, the air conditioner in the related art has some problems, such as a large installation distance from an indoor ceiling, a limited air supply range and a low overall heat exchange efficiency.

### SUMMARY

Therefore, embodiments of the present disclosure propose an air conditioner indoor unit, which has a small installation distance from an indoor ceiling, a wide air supply range and high overall heat exchange efficiency.

Embodiments of the present disclosure further propose an air conditioning system including the air conditioner indoor unit.

The air conditioner indoor unit according to the embodiments of the present disclosure includes:
a frame having an air inlet and an air outlet, and the air outlet being located above the air inlet;
a base connected with the frame, where an air duct extending in a first direction is defined between the base and the frame, and the base and the frame are arranged opposite to each other in a second direction orthogonal to the first direction;
a heat exchanger arranged in the air duct, adjacent to the air inlet and protruding toward the air inlet;
an air guiding frame detachably connected with the base and arranged adjacent to the air outlet, and configured to guide an airflow in the air duct to the air outlet; and
a cross-flow assembly arranged in the air duct and located between the air guiding frame and the heat exchanger in a third direction, and configured to convey the airflow from the air inlet to the air outlet, where the third direction is perpendicular to the first direction and the second direction.

In some embodiments, the air conditioner indoor unit further includes a mounting seat and an air swinging motor, the air guiding frame has an accommodating cavity and a recess, the mounting seat is mounted on the air guiding frame and arranged opposite to the accommodating cavity, the air swinging motor is mounted on the mounting seat, at least part of the motor is embedded in the accommodating cavity, and the recess is arranged at at least one end of the air guiding frame in the first direction, and is configured to avoid a driving mechanism for driving an air deflector to move; and/or
one of the base and the air guiding frame has a first plug-in hole, and the other of the base and the air guiding frame includes a first plug-in part, where the first plug-in part is inserted and fitted in the first plug-in hole to realize plug-in assembling of the base and the air guiding frame; and/or
the air conditioner indoor unit further includes a motor cover, and the motor cover is connected with the base; one of the motor cover and the air guiding frame has a second plug-in hole, and the other of the motor cover and the air guiding frame includes a second plug-in part; and the second plug-in part is inserted and fitted in the second plug-in hole.

In some embodiments, the air conditioner indoor unit further includes an air sweeping assembly, and the air swinging assembly includes:
a plurality of blades and a connecting rod, where the plurality of blades are arranged at intervals in the first direction, each blade is provided with a first swinging rod for driving the blade to rotate, the connecting rod extends in the first direction, and the connecting rod is rotatably connected with the first swinging rods of the plurality of blades;
a transmission shaft, one end of the transmission shaft being rotatably connected with an end of the connecting rod, and the other end of the transmission shaft being connected with a driving shaft of a driver, where a length of the transmission shaft is larger than a length of the first swinging rod, so as to increase an acting force applied to the connecting rod by the transmission shaft in a case that the connecting rod is driven by the transmission shaft to move in the first direction; and/or
an air swinging seat, the frame including a plurality of mounting points connected with the air guiding frame, and the air swinging seat shielding the plurality of mounting points.

In some embodiments, an inner wall surface of the air duct is provided with one protrusion or at least two protrusions, and the at least two protrusions are arranged at intervals in the third direction, where the protrusion is arranged to extend in the first direction, and the protrusion is configured to change a flow direction of a condensate flowing along the inner wall surface so that the condensate is configured to be discharged to the heat exchanger located below the air duct.

In some embodiments, the air conditioner indoor unit further includes a heat exchanger bracket, and the heat exchanger bracket includes a bracket body, a fixing part, a water baffle plate and a wiring part, where the fixing part is arranged on the bracket body for a metal tube of the heat exchanger to pass through, the water baffle plate and the fixing part are both arranged on a side of the bracket body facing away from the heat exchanger, the water baffle plate is arranged at an outer edge of the bracket body and extends gradually toward a lower end of the bracket body, the wiring part is arranged on the bracket body, and the wiring part is configured to fix a wire harness.

In some embodiments, a back surface of the base has a wall mounting hole, the base includes a first support part at a bottom of the base, and the air conditioner indoor unit further includes a decorative plate and a wall mounting plate, where the decorative plate is clamped at the bottom of the base and encloses a limiting cavity with the first support part, an upper end of the wall mounting plate includes a hanging hook, the wall mounting plate includes a supporting hook, the hanging hook is hooked in the wall mounting hole, and the supporting hook is arranged in the limiting cavity and supports a bottom surface of the first support part.

In some embodiments, an inner wall surface of the frame is provided with a wire fixing part, the air conditioner indoor unit further includes an air guiding assembly, the air guiding assembly includes an air guiding driving part and an air deflector, the air deflector is arranged at the air outlet, the air guiding driving part is arranged on the frame and connected with the air deflector, the air guiding driving part has a first wire harness, and the first wire harness is mounted in the wire fixing part.

In some embodiments, the air conditioner indoor unit further includes a display module, the display module includes a display box, the display box is mounted on the frame, a first electric control board is arranged in the display box, at least part of the wire fixing part and the display box define a wire fixing channel, and the wire fixing channel is configured to fix the first wire harness; and/or
the air conditioner indoor unit further includes a display module, the display module includes a humidity sensor and a display box, a first electric control board is arranged in the display box, and the humidity sensor is mounted on the first electric control board.

In some embodiments, the air conditioner indoor unit further includes an air guiding assembly, where the air guiding assembly includes an air deflector and an air guiding driving part, the air deflector is movably arranged at the air outlet to open or close the air outlet, and the air guiding driving part is connected with the air deflector to drive the air deflector to move, where the air guiding frame is spaced apart from the frame, and the air guiding driving part is arranged between the air guiding frame and the frame.

In some embodiments, the air deflector includes a first air guiding surface, a transitional air guiding surface and a second air guiding surface arranged in sequence along a width direction of the air deflector, at least part of the first air guiding surface is obliquely arranged relative to the transitional air guiding surface in a direction facing away from the transitional air guiding surface, and at least part of the second air guiding surface is obliquely arranged relative to the transitional air guiding surface in another direction facing away from the transitional air guiding surface.

In some embodiments, the air guiding assembly includes a mounting frame, and the air guiding driving part includes:
a driving member and a rocker arm, where the driving member is connected with the mounting frame, the driving member is drivingly connected with the rocker arm to drive the rocker arm to rotate relative to the mounting frame, and the rocker arm is provided with a rocker arm protrusion on an axial side of a rotating shaft of the rocker arm; and
a limiting piece connected with the mounting frame, and arranged on a side of the rocker arm facing the rocker arm protrusion, and the rocker arm protrusion being rotatably connected with the limiting piece.

In some embodiments, the air deflector includes an outer air deflector, a cover plate and an inner lining plate, where the cover plate is arranged at either end of the outer air deflector in a length direction of the outer air deflector, and the cover plate is located on a side of the outer air deflector in a thickness direction of the outer air deflector; the inner lining plate is arranged on the outer air deflector, the inner lining plate and the cover plate are located on the same side of the outer air deflector in the thickness direction of the outer air deflector, and the inner lining plate and the cover plate are arranged in sequence and clamped with each other along the length direction of the outer air guide plate.

In some embodiments, the frame includes a frame body and a front panel, and the front panel is arranged at a front end of the frame body and located below the air outlet; the front panel extends from top to bottom and is obliquely arranged rearward, and an included angle between the front panel and a vertical plane ranges from 6 degrees to 14 degrees; and/or
a protruding part is arranged at an air duct outlet of the air duct, and the air duct outlet is in communication with the air outlet.

In some embodiments, the base includes a base body and a base extension part, and the base extension part is arranged at an end of the base body in the second direction; and
a cross-flow fan is mounted on the base body, the cross-flow fan and the base extension part are located at the same end of the base body in the second direction, and the cross-flow fan and the base extension part are arranged at intervals in the first direction, where the cross-flow fan includes a cover, and the cover, the base extension part and one end face of the base body in the third direction jointly support the base body in a case that the base body is erected in the third direction.

In some embodiments, the air conditioner indoor unit further includes an ion generator, and the ion generator includes a high-voltage pack and a probe electrically connected with each other; the high-voltage pack is arranged on the base extension part, the base extension part is spaced apart from the air duct and arranged adjacent to the air outlet, the cross-flow assembly is arranged on a side of the base body in the first direction, and the base extension part is located on another side of the base body in the first direction; the probe is arranged on the base, the air guiding frame has a frame through hole, and an emitting end of the probe extends into the air duct through the frame through hole.

In some embodiments, the air conditioner indoor unit further includes a bottom support, and the bottom support includes:
a first reinforcing piece, where the base includes a main section and a cantilever arranged at intervals in the first direction, a base body notch for a pipeline to pass through is defined between the main section and the cantilever, and the first reinforcing piece is configured to connect the main section with the cantilever; and
a second reinforcing piece connected with the first reinforcing piece and extending in the second direction, and configured to abut against an opposite side surface of the cantilever in the first direction.

In some embodiments, a first end of the base in the second direction has a bearing housing mounting groove, an inner wall surface of the bearing housing mounting groove has a first drainage hole penetrating through the base in the second direction, and the first drainage hole is configured to guide condensed water in the bearing housing mounting groove to a second end of the base in the second direction; and/or
a second end of the base in the second direction is connected with a wall mounting vertical plate, an isolation cavity is defined between the wall mounting vertical plate and the base, and a first water guiding rib is arranged on a surface of the second end of the base in the second direction, where an extension direction of the first water guiding rib is at an acute angle with the first direction, a part of the first water guiding rib is located in the isolation cavity, and a lower end of the first water guiding rib is located outside the isolation cavity.

In some embodiments, the air conditioner indoor unit further includes a condensate pan,
where the condensate pan has a condensate-pan water receiving groove extending in the first direction, and the condensate pan includes a first layer, a third layer and a second layer arranged in sequence along the third direction, where a surface of the first layer facing away from the second layer forms a bottom surface of the condensate pan, at least part of a surface of the second layer facing away from the first layer forms a wall surface of the condensate-pan water receiving groove, and an outer edge of the first layer in a width direction of the condensate pan is clamped with an outer edge of the second layer in the second direction; and/or
the condensate pan includes a pan body and a first pan extension part, where the pan body has a water receiving groove extending in the first direction, the water receiving groove is configured to receiving condensed water on the heat exchanger, the first pan extension part is arranged at at least one end of the pan body in the first direction, the first pan extension part extends forward from a front side of a right end of the pan body, the first pan extension part has a first extension groove extending along an extension direction of the first pan extension part, the first extension groove is in communication with the water receiving groove, and the first extension groove is at least configured to receive condensed water on a wire clamping assembly and/or a grounding wire on an evaporator bracket.

In some embodiments, the air conditioner indoor unit further includes a water guiding assembly, an inner wall surface of the air duct includes a first wall surface and a second wall surface, the heat exchanger is arranged in the air duct, the heat exchanger has a first end and a second end, the first end of the heat exchanger is opposite to the first wall surface, and the second end of the heat exchanger is opposite to the second wall surface, where the water guiding assembly includes a first water guiding strip and a second water guiding strip, the first water guiding strip is arranged on the first wall surface, a free end of the first water guiding strip abuts against a lower side of the first end of the heat exchanger, the second water guiding strip is arranged on the second wall surface, and a free end of the second water guiding strip at least abuts against a lower side of the second end of the evaporator; and/or
the air guiding frame includes a frame mating part opposite to an end of the heat exchanger, and the frame mating part has a first side surface and a second side surface arranged opposite to each other in the third direction, where the first side surface is adjacent to and opposite to the end of the heat exchanger, the frame mating part has a drainage slot, and the drainage slot penetrates through the air guiding frame in the third direction and is configured to guide condensed water on the air guiding frame onto the heat exchanger through the drainage slot.

The air conditioning system according to the embodiments of the present disclosure includes the air conditioner indoor unit according to any of the above embodiments.

Beneficial effects: in the air conditioner indoor unit and the air conditioning system including the air conditioner indoor unit according to the embodiments of the present disclosure, the air conditioner indoor unit has a small installation distance from an indoor ceiling, a wide air supply range and high overall heat exchange efficiency.

### BRIEF DESCRIPTION OF THE DRAWINGS

Fig. 1 is a cross-sectional view of an air conditioner indoor unit according to an embodiment of the present disclosure.
Fig. 2 is a top view of an air swinging motor and an air guiding frame which are assembled according to an embodiment of the present disclosure.
Fig. 3 shows a rear perspective view and a partially enlarged view of an air guiding frame according to an embodiment of the present disclosure.
Fig. 4 is a rear perspective view of a mounting seat according to an embodiment of the present disclosure.
Fig. 5 is a schematic view of an air guiding frame with a driving mechanism assembled in a recess of the air guiding frame according to an embodiment of the present disclosure.
Fig. 6 is a schematic view showing an arrangement of a second plug-in part, a fourth pillar, a third plug-in part and a fifth pillar on a motor cover according to an embodiment of the present disclosure.
Fig. 7 is a schematic view showing an arrangement of a second fixing hole in an air guiding frame according to an embodiment of the present disclosure.
Fig. 8 is a schematic view of a plurality of air swinging plates of an air swinging assembly in a forward air supply state according to an embodiment of the present disclosure.
Fig. 9 is a schematic view showing positions of a first swinging rod and a transmission shaft of an air swinging assembly during forward air supply and lateral air supply according to an embodiment of the present disclosure.
Fig. 10 is a sectional view of an air duct in a plane perpendicular to a left-right direction.
Fig. 11 is a schematic view showing a mounting point on a frame according to an embodiment of the present disclosure.

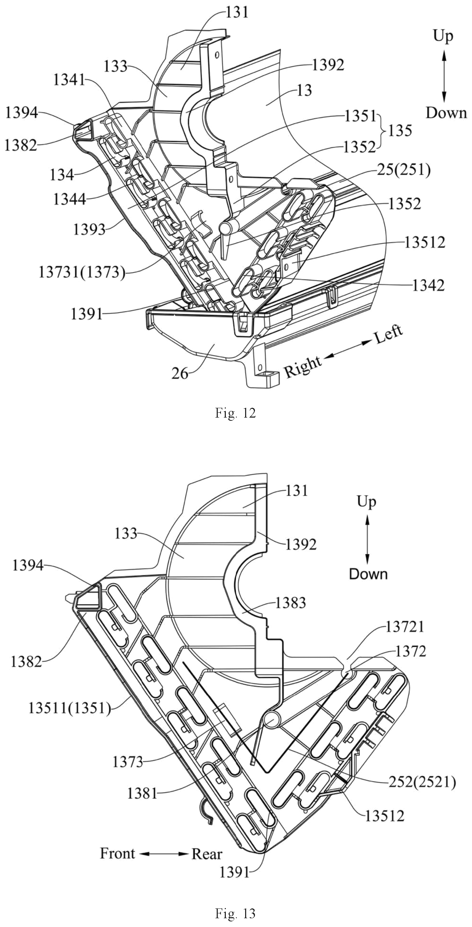

Fig. 12 is a partial installation schematic view of a heat exchanger bracket, a heat exchanger and a condensate pan of an air conditioner indoor unit according to an embodiment of the present disclosure.
Fig. 13 is a left side view of a heat exchanger bracket of an air conditioner indoor unit according to an embodiment of the present disclosure.
Fig. 14 is a right side view of a heat exchanger bracket of an air conditioner indoor unit according to an embodiment of the present disclosure.
Fig. 15 is a partial installation schematic view of a base, a motor cover and a cross-flow fan of an air conditioner indoor unit according to an embodiment of the present disclosure.
Fig. 16 is an installation sectional view of a frame and a filter screen of an air conditioner indoor unit according to an embodiment of the present disclosure.
Fig. 17 is an exploded view of an air conditioner according to an embodiment of the present disclosure.
Fig. 18 is an installation schematic view of a base and a decorative plate of an air conditioner indoor unit according to an embodiment of the present disclosure.
Fig. 19 is an installation schematic view of a frame of an air conditioner indoor unit according to an embodiment of the present disclosure.
Fig. 20 is another partial installation schematic view of a frame of an air conditioner indoor unit according to an embodiment of the present disclosure.
Fig. 21 is an internal schematic view of a display module of an air conditioner indoor unit according to an embodiment of the present disclosure.
Fig. 22 is a partial schematic view of an air conditioner indoor unit according to an embodiment of the present disclosure.
Fig. 23 is a sectional view of an air deflector in a first position of an air conditioner indoor unit according to an embodiment of the present disclosure.
Fig. 24 is a sectional view of an air deflector in a second position of an air conditioner indoor unit according to an embodiment of the present disclosure.
Fig. 25 is a partial schematic view of an air conditioner indoor unit according to an embodiment of the present disclosure.
Fig. 26 is a sectional view of an air deflector of an air conditioner indoor unit according to an embodiment of the present disclosure.
Fig. 27 is a schematic view of an air guiding driving part of an air conditioner indoor unit according to an embodiment of the present disclosure.
Fig. 28 is a sectional view of an air guiding driving part of an air conditioner indoor unit according to an embodiment of the present disclosure.
Fig. 29 is a schematic view of an air duct in use of an air conditioner indoor unit according to an embodiment of the present disclosure.
Fig. 30 is a sectional view of an air duct in use of an air conditioner indoor unit according to an embodiment of the present disclosure.
Fig. 31 is a perspective view of an air guiding frame of an air conditioner indoor unit according to an embodiment of the present disclosure.
Fig. 32 is a partial schematic view of an air conditioner indoor unit according to an embodiment of the present disclosure (an output member is in a second position).
Fig. 33 is a schematic view of a base, a heat exchanger and a cross-flow fan of an air conditioner indoor unit according to an embodiment of the present disclosure.
Fig. 34 is a right side view of a base, a heat exchanger and a cross-flow fan of an air conditioner indoor unit according to an embodiment of the present disclosure.
Fig. 35 is a left side view of a base, a heat exchanger and a cross-flow fan of an air conditioner indoor unit according to an embodiment of the present disclosure.
Fig. 36 is a schematic view of a base and a bottom support of an air conditioner indoor unit according to an embodiment of the present disclosure.
Fig. 37 is a schematic view of a bottom support of an air conditioner indoor unit according to an embodiment of the present disclosure.
Fig. 38 is a schematic view of a base, a vertical plate and a horizontal plate of an air conditioner indoor unit according to an embodiment of the present disclosure.
Fig. 39 is a sectional view of an air conditioner indoor unit according to an embodiment of the present disclosure.
Fig. 40 is a schematic view of a water baffle plate according to an embodiment of the present disclosure.
Fig. 41 is a schematic view of a base of an air conditioner indoor unit according to an embodiment of the present disclosure.
Fig. 42 is an enlarged view of portion A in Fig. 41.
Fig. 43 shows a schematic view and a partially enlarged view of a base according to an embodiment of the present disclosure.
Fig. 44 shows a schematic view and a partially enlarged view of a base extension part according to an embodiment of the present disclosure.
Fig. 45 shows a schematic view and a partially enlarged view of a base and an air guiding frame according to an embodiment of the present disclosure.
Fig. 46 shows a schematic view and a partially enlarged view of an air guiding frame according to an embodiment of the present disclosure.
Fig. 47 is a schematic view of a condensate pan according to an embodiment of the present disclosure.
Fig. 48 is a sectional view of a condensate pan according to an embodiment of the present disclosure.
Fig. 49 shows a schematic view and a partially enlarged view of a heat exchanger and a condensate pan according to an embodiment of the present disclosure.
Fig. 50 shows a schematic view and a partially enlarged view of a water guiding assembly according to an embodiment of the present disclosure.
Fig. 51 shows a schematic view and a partially enlarged view of a frame mating part of an air guiding frame according to an embodiment of the present disclosure.
Fig. 52 is a schematic view of an outer air deflector, a cover plate and an inner lining plate according to an embodiment of the present disclosure.
Fig. 53 is a schematic view of a frame body and a front panel according to an embodiment of the present disclosure.

### Reference signs:

10 frame; 101 air inlet; 102 air outlet; 103 mounting point; 108 wire fixing part; 1081 first pressing plate; 1082 second pressing plate; 1084 first wire fixing clip; 1103 first wall surface; 1104 second wall surface; 1101 frame body; 1102 front panel; 11021 front side surface of front panel; 11022 rear side surface of front panel;
11 base; 111 first plug-in hole; 112 third pillar; 1141 wall mounting hole; 1142 first support part; 1143 limiting cavity; 1150 base body; 1151 first end face; 1153 base body notch; 116 base extension part; 1161 third end face; 117 first supporting part; 118 second supporting part; 1181 third supporting surface; 119 frame clamping part; 1023 cantilever; 1024 main section; 10262 isolation cavity; 1027 first water guiding rib; 1032 water receiving plate; 10321 water receiving groove; 1034 bearing housing mounting groove; 10341 water retaining rib; 1035 first drainage hole; 1036 second drainage hole; 1037 third drainage hole; 11601 high-voltage transformer mounting groove; 1400 base clamping groove; 1401 main base body; 1402 first mating part; 14021 rear side surface of first mating part; 1403 second mating part; 14031 front side surface of second mating part; 1404 first limiting part; 1405 second limiting part;
12 air duct; 121 protruding part; 122 air duct curved surface; 1213 first surface; 1214 first end; 1215 second surface; 1216 second end; 1217 connection surface; 123 air duct shell; 1231 air duct body; 1234 air duct outlet; **1**23**5** mounting wall; 124 protruding part;
13 heat exchanger; 131 heat exchanger bracket; 1311 third plug-in part; 1312 fifth pillar; 133 bracket body; 134 fixing part; 1341 first fixing part; 1342 second fixing part; 1344 fixing sleeve; 135 water guiding part; 1351 water baffle plate; 13511 first water baffle plate; 13512 second water baffle plate; 1352 water guiding plate; 137 wiring part; 1371 first wiring slot; 1372 wire exit hole; 13721 notch; 1373 wiring clip; 13731 wire threading hole; 1381 mounting boss; 13811 plug-in interface; 1382 protruding pillar; 1383 bearing housing; 1391 first support portion; 1392 second support portion; 1393 third support portion; 1394 fourth support portion; 1331 grounding part; 1396 second bracket; 13962 third folded edge; 1397 first heat exchange part; 1398 second heat exchange part; 14004 first end of heat exchanger; 14005 second end of heat exchanger; 14051 upper side surface of second end of heat exchanger; 14052 lower side surface of second end of heat exchanger; 14054 recessed portion;
14 air guiding frame; 141 accommodating cavity; 142 first pillar; 143 first snapping groove; 144 recess; 1441 inlet/outlet opening; 1442 first accommodating part; 1443 second accommodating part; 146 first plug-in part; 147 first fixing hole; 148 second plug-in hole; 149 second fixing hole; 1410 third plug-in hole; 1411 third fixing hole; 1415 air guiding channel; 1423 frame through hole; 1424 mating plane; 1425 frame fitting part; 14251, first side surface; **1**4252 second side surface; 14253 drainage slot; 1426 frame reinforcing rib;
15 cross-flow fan assembly; 151 cross flow fan; 1511 motor body; 1512 first motor wire; 152 air impeller; 1514 cover; 15141 fourth end face;
16 mounting seat; 161 first hole; 162 first boss; 163 first plate portion; 164 second plate portion;
17 air swinging assembly; 171 air swinging motor; 172 transmission shaft; 173 connecting rod; 1731 first rod; 1732 second rod; 174 air swinging plate; 175 first swinging rod; 177 air swinging seat;
18 driving mechanism;
19 motor cover; 191 second plug-in part; 1911 plate body; 192 fourth pillar; 193 cover body; 1931 motor cavity; 194 wiring case; 1941 receiving cavity; 1942 opening;
20 electric control assembly; 202 electric control box; 20246 grounding wire plate; 20247 first grounding wire; 20251 first wire threading part;
25 heating module; 251 heater; 252 heating wire;
26 condensate pan; 260 pan body; 261 condensate-pan water receiving groove; 262 first layer; 263 second layer; 265 third layer; 266 pan extension; 2662 first pan extension part; 2663 second pan extension; 26621 first extension groove;
28 filter screen;
31 decorative plate;
32 wall mounting plate; 321 wall mounting vertical plate; 323 hanging hook; 324 supporting hook;
33 air guiding assembly; 331 air deflector; 3311 air deflector body; 33111 first air guiding surface; 33112 first portion; 33113 second portion; 33114 second air guiding surface; 33115 third portion; 33116 fourth portion; 33117 transitional air guiding surface; 3312 interlayer; 3313 outer plate of air deflector; 3314 rotating rod; 3315 outer air deflector; 33151 fourth plate clamping part; 3316 cover plate; 33161 first plate clamping part; 33162 plate extension; 3317 inner lining plate; 33171 second plate clamping part; 33172 third plate clamping part; 3318 front side surface of air deflector;
332 air guiding driving part; 3321 first motor module; 3322 second motor module; 3323 rocker arm; 3324 first wire harness; 33211 driving member; 33231 rod body; 33232 extension section; 33233 limiting rod; 33234 first section; 33235 rocker arm protrusion; 33236 connecting part; 3325 limiting piece; 33251 limiting body; 33252 first insertion hole; 33253 guide hole; 33254 fixing lug; 33255 fourth fixing hole; 3326 reduction gearbox; 33261 box body; 33262 connecting lug; 33263 fourth connecting hole; 33264 output shaft; 33265 gear protrusion; 3327 output member; 33271 fifth portion; 33272 sixth portion;
34 display module; 342 display box; 3422 detection hole; 3421 first wire retaining block; 343 wire fixing channel; 344 first electric control board; 345 humidity sensor;
35 bottom support; 351 first reinforcing piece; 3511 first connecting portion; 3512 reinforcing portion; 3513 second connecting portion; 352 second reinforcing piece; 36 pipeline pressing plate; 37 water retaining piece; 371 main plate body; 3711 guide surface; 3712 avoidance groove; 372 first connecting plate; 3721 first clamping groove; 373 side baffle;
38 ion generator; 381 probe; 3811 transmitting end of probe; 382 high-voltage transformer;
40 wire clamping assembly; 41 grounding sheet; 42 water guiding assembly; 421 first water guiding strip; 422 first water absorption member; 423 second water guiding strip; 424 second water absorption member.

### DETAILED DESCRIPTION

Hereinafter, embodiments of the present disclosure will be described in detail, examples of which are illustrated in the accompanying drawings. The embodiments described below with reference to the accompanying drawings are illustrative and are intended to explain the present disclosure, and should not be construed as limiting the present disclosure.

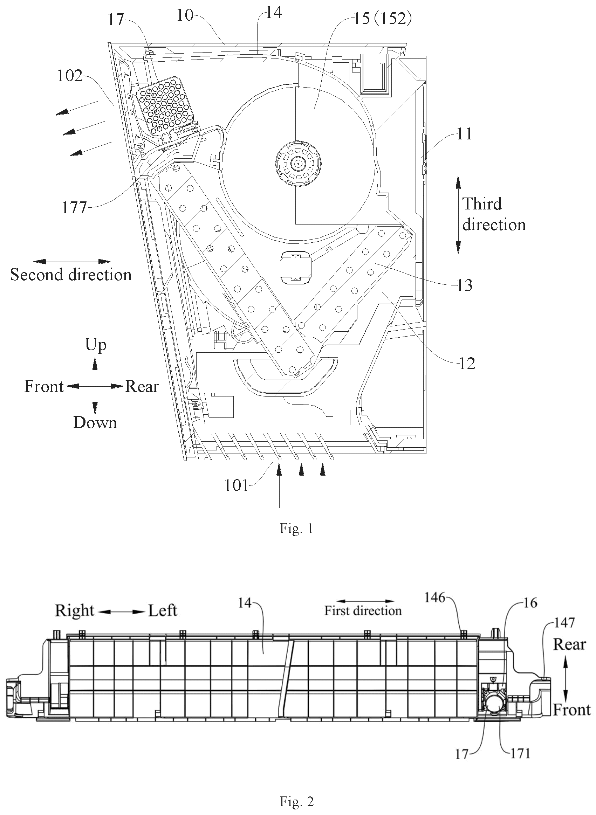

As shown in Fig. 1, the air conditioner indoor unit in embodiments of the present disclosure includes a frame 10, a base 11, a heat exchanger 13, an air guiding frame 14 and a cross-flow assembly 15.

The frame 10 has an air inlet 101 and an air outlet 102, and the air outlet 102 is located above the air inlet 101 when in use. For example, as shown in Fig. 1, the frame 10 may be an integral injection-molded part, and both the air inlet 101 and the air outlet 102 may be arranged in the frame 10 by means of integral injection molding.

When the air conditioner indoor unit is mounted on a wall, the air inlet 101 may be located at a bottom side of the frame 10, and the air outlet 102 may be located at a front side of a top of the frame 10. When in use, air may be taken in through the air inlet 101, and then may be discharged through the air outlet 102, thus meeting the use requirements of bottom air intake and top air discharge.

The base 11 is connected with the frame 10, an air duct 12 extending along a first direction is defined between the base 11 and the frame 10, and the base 11 and the frame 10 are arranged opposite to each other in a second direction orthogonal to the first direction.

For example, as shown in Fig. 1, the base 11 may be vertically arranged and arranged at a rear side of the frame 10. When the base 11 and the frame 10 are mounted and fixed, an internal space may be enclosed between the base 11 and the frame 10, and the internal space may be regarded as the air duct 12. The air duct 12 may be generally L-shaped. A bottom end of the air duct 12 is in communication with the air inlet 101, and a front end of the air duct 12 is in communication with the air outlet 102.

It should be noted that, as shown in Figs. 1 and 2, in this embodiment, the first direction may be a left-right direction, and the second direction may be a front-rear direction, and the base 11 and the frame 10 may be arranged opposite to each other, connected and fixed in the front-rear direction.

The heat exchanger 13 is arranged in the air duct 12, is arranged adjacent to and protrudes toward the air inlet 101, and is used as an evaporator or a condenser. For example, as shown in Fig. 1, the whole heat exchanger 13 may be assembled in the air duct 12. When refrigeration is needed, the heat exchanger 13 may be used as an evaporator. In some other embodiments, the heat exchanger 13 may also be used as a condenser, for example, when heating is needed.

The whole heat exchanger 13 may have a V-shaped structure. For example, the heat exchanger 13 may be formed by combining two independent plate heat exchangers 13, and a joint of the two plate heat exchangers 13 may protrude downward and be arranged opposite to the air inlet 101 in an up-down direction.

Therefore, on one hand, it is convenient for the collection of condensed water on the heat exchanger 13, and on the other hand, this downward protruding design may achieve the effect of air diversion, that is, an airflow at the air inlet 101 may be diverted to a front side and a rear side of the heat exchanger 13 respectively, which is beneficial to reducing a speed of the airflow, thus improving the overall heat exchange effect, and also achieving a certain noise reduction effect.

The air guiding frame 14 is connected with the base 11 and arranged adjacent to the air outlet 102, and is used to guide the airflow in the air duct 12 to the air outlet 102. For example, as shown in Fig. 1, the air guiding frame 14 may be mounted at a front side of the base 11 and at a top of the air conditioner indoor unit. The air guiding frame 14 may have a hollow structure, and a hollow interior of the air guiding frame 14 may be connected between the air duct 12 and the air outlet 102, so that the air flowing out of the air duct 12 may be guided to the air outlet 102.

The cross-flow assembly 15 is arranged in the air duct 12 and located between the air guiding frame 14 and the heat exchanger 13 in a third direction, which is perpendicular to the first direction and the second direction, and the cross-flow assembly 15 is used to convey the airflow from the air inlet 101 to the air outlet 102.

For example, as shown in Fig. 1, the cross-flow assembly 15 may include a cross-flow fan 151 that drives blades to rotate, and the cross-flow fan 151 of the cross-flow assembly 15 may also be mounted in the air duct 12. The third direction may be the up-down direction. In the up-down direction, the cross-flow fan of the cross-flow assembly 15 may be located in a space of the air duct 12 between the air guiding frame 14 and the heat exchanger 13.

When in use, the cross-flow assembly 15 may drive the blades to rotate, thus meeting the use requirements that external air is sucked from the air inlet 101, exchanges heat with the heat exchanger 13, and then is discharged through the air guiding frame 14 and the air outlet 102.

Due to the design of bottom air intake and top air discharge, the air conditioner indoor unit in embodiments of the present disclosure may substantially be installed against a ceiling, which avoids the situation that the influence of installing the air conditioner indoor unit against the ceiling on the air intake needs to be considered for the top air intake in the related art, shortens the installation distance between the air conditioner indoor unit and the indoor ceiling, and improves the installation appearance.

Further, since the air conditioner indoor unit may be installed on a higher wall, an overhead angle of the air conditioner indoor unit may be increased, and thus an air supply range of the air conditioner indoor unit may be improved. In addition, the design of the heat exchanger 13 protruding toward the air inlet 101 may achieve the effect of air diversion, which is helpful to improve the overall heat exchange efficiency and reduce the air intake noise.

In some embodiments, the air conditioner indoor unit further includes a mounting seat 16 and an air swinging motor 171, the air guiding frame 14 has an accommodating cavity 141, the mounting seat 16 is detachably assembled to the air guiding frame 14 and arranged opposite to the accommodating cavity 141, the air swinging motor 171 is detachably assembled to the mounting seat 16, and at least part of the air swinging motor 171 is embedded in the accommodating cavity 141.

As shown in Fig. 2, the air guiding frame 14 has the accommodating cavity 141. For example, as shown in Fig. 2, the material of the air guiding frame 14 may be plastic, etc. The air guiding frame 14 may be integrally injection-molded and may extend in the left-right direction. The accommodating cavity 141 may be a groove-shaped structure integrally formed in the air guiding frame 14, and the accommodating cavity 141 may be located in a left side portion of the air guiding frame 14.

The mounting seat 16 is detachably assembled on the air guiding frame 14 and arranged opposite to the accommodating cavity 141. For example, as shown in Fig. 2, the mounting seat 16 may be made of plastic or the like, and the mounting seat 16 may be formed by integral injection molding. The mounting seat 16 may be assembled to a rear side of the air guiding frame 14 by means of screw fixing, clamping or the like, and the accommodating cavity 141 may be located in front of the mounting seat 16 in the front-rear direction, so that a rear side of the accommodating cavity 141 may be blocked by the mounting seat 16.

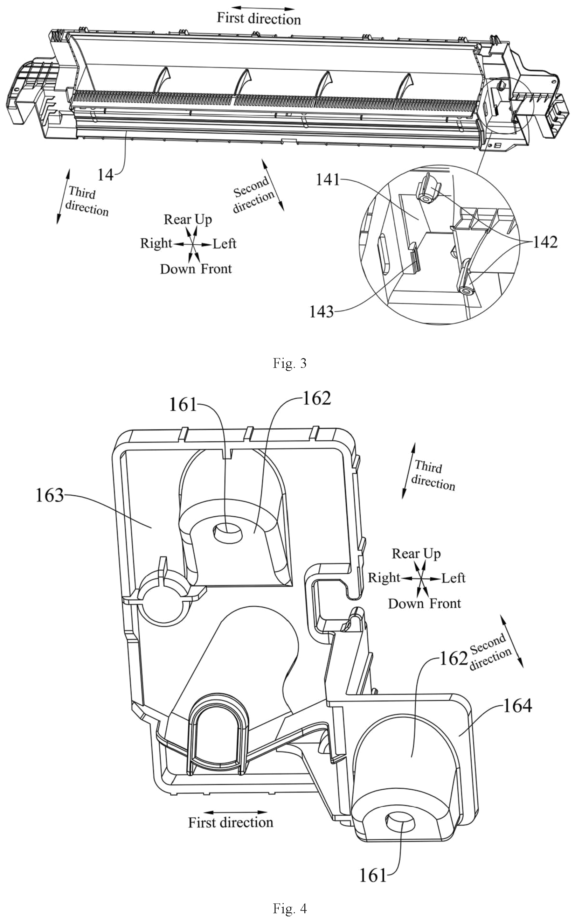

The air swinging motor 171 is detachably assembled to the mounting seat 16, and at least part of the air swinging motor 171 is embedded in the accommodating cavity 141. For example, as shown in Fig. 2, the air swinging motor 171 may be a stepping motor, and the air swinging motor 171 may be a part of the air swinging assembly 17. The air swinging motor 171 may be fixed to a front side of the mounting seat 16 by means of screw fixing, clamping or the like, and the whole air swinging motor 171 may be inserted into the accommodating cavity 141, as shown in Fig. 3, which facilitates the mounting and fixing of the air swinging motor 171, realizes the precise mating of the air guiding frame 14 and the air swinging motor 171, and also achieves the protecting effect for the air swinging motor 171.

It should be noted that the air swinging motor 171 may also be connected with a plurality of air swinging plates 174 through a corresponding transmission mechanism. When in use, the air swinging motor 171 may rotate to drive the plurality of air swinging plates 174 to swing synchronously, so that the adjustment of the air discharge direction and the gentle wind mode (in this case, micropores for airflow to pass through need to be uniformly distributed on each air swinging plate 174) may be realized.

The air guiding frame 14 and the mounting seat 16 of the air conditioner indoor unit in embodiments of the present disclosure are separately arranged, which facilitates the processing and demolding of the mounting seat 16 and improves the convenience of mounting and detaching thereof.

In some embodiments, the air guiding frame 14 is connected with the mounting seat 16 through first fasteners. One of the air guiding frame 14 and the mounting seat 16 includes a plurality of first pillars 142 connected with the first fasteners, and the other of the air guiding frame 14 and the mounting seat 16 has a plurality of first holes 161 for the first fasteners to pass through.

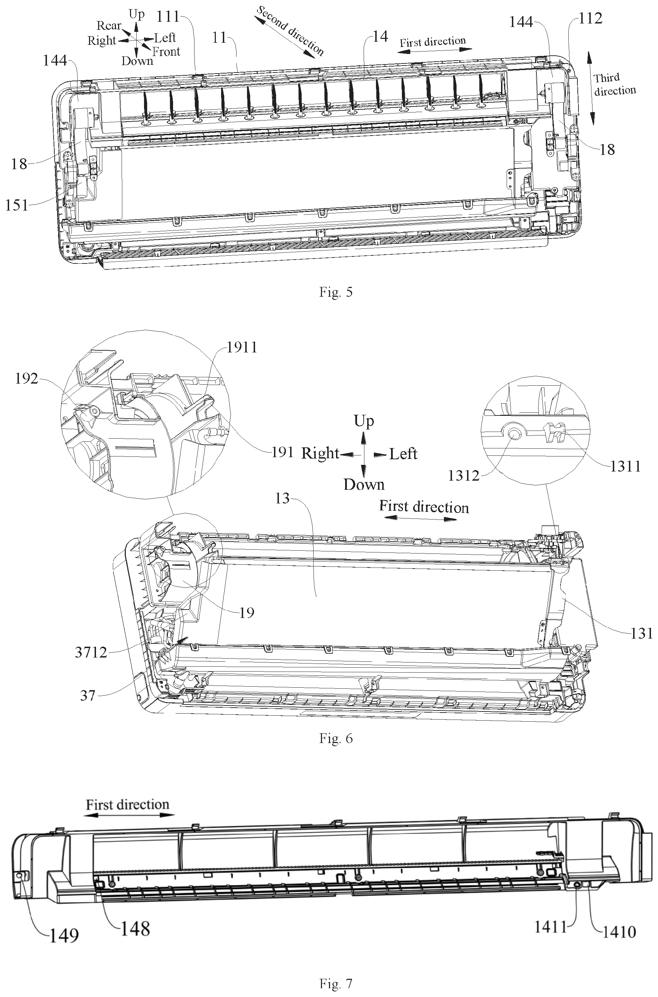

For example, as shown in Fig. 3, the first pillar 142 may be integrally formed on the air guiding frame 14, the first pillar 142 may be cylindrical, and a threaded hole may be formed inside the first pillar 142. As shown in Figs. 4 and 5, the first hole 161 may be a circular hole, and the first hole 161 may penetrate through the mounting seat 16 along a thickness direction of the mounting seat 16.

The first fastener may be a screw, etc. During assembling, the first fastener may pass through the first hole 161 and be screwed with the first pillar 142, thus ensuring the structural stability of the connection between the air guiding frame 14 and the mounting seat 16.

In some embodiments, the first pillar 142 is arranged on the air guiding frame 14, and the mounting seat 16 includes a plurality of first bosses 162, and the plurality of first bosses 162 protrude from an inner side of the mounting seat 16 and form grooves on an outer side of the mounting seat 16 facing away from the base 11. The first pillar 142 is inserted and fitted in the groove, and the first hole 161 is arranged in a groove bottom wall of the groove.

For example, as shown in Fig. 3, two first pillars 142 are provided, both of the two first pillars 142 may be integrally formed on the air guiding frame 14 by means of injection molding, and both of the two first pillars 142 may be located on the rear side of the air guiding frame 14.

As shown in Fig. 4, two first bosses 162 may be arranged on the mounting seat 16, both of the two first bosses 162 may be integrally formed on the mounting seat 16 by means of injection molding, and the first bosses 162 may have an arch structure. Each first boss 162 may protrude from a rear side of the mounting seat 16 and define the groove on a front side of the mounting seat 16, and each first boss 162 may have one first hole 161.

During assembling, the two first pillars 142 on the air guiding frame 14 may be inserted into the grooves of the two first bosses 162 in one-to-one correspondence, so that the limiting and restraining effect between the air guiding frame 14 and the mounting seat 16 may be enhanced. Further, the arrangement of the first boss 162 may also enhance the structural strength of the mounting seat 16.

In some embodiments, the mounting seat 16 includes a first plate portion 163 and a second plate portion 164 arranged in a staggered manner in an inner-outer direction of the mounting seat 16, and both the first plate portion 163 and the second plate portion 164 are provided with the first boss 162.

For example, as shown in Fig. 4, both the first plate portion 163 and the second plate portion 164 may be flat-plate-shaped, and the size of the first plate portion 163 is larger than the size of the second plate portion 164. One first boss 162 may be integrally formed on both the first plate portion 163 and the second plate portion 164.

The inner-outer direction of the mounting seat 16 may also be the front-rear direction, and the first plate portion 163 may be located at a front side of the second plate portion 164. During assembling, the first plate portion 163 may be arranged opposite to a cavity opening on the rear side of the accommodating cavity 141, and the second plate portion 164 may be lapped on a peripheral portion of the cavity opening of the accommodating cavity 141, so that the limiting and restraining effect of the mounting seat 16 and the air guiding frame 14 may be enhanced. In some embodiments, one of the air guiding frame 14 and the mounting seat 16 is provided with a snap, the other of the air guiding frame 14 and the mounting seat 16 is provided with a first snapping groove 143, and the snap is snap-fitted in the first snapping groove 143.

For example, the snap may be integrally formed on the mounting seat 16, and may be specifically arranged at a peripheral edge of the first plate portion 163. As shown in Fig. 3, the first snapping groove 143 may be arranged on the air guiding frame 14, and the first snapping groove 143 may be located in the accommodating cavity 141.

During assembling, the mounting seat 16 and the air guiding frame 14 may be pre-positioned and pre-fixed through the snap fit of the snap and the first snapping groove 143, and then the air guiding frame 14 and the mounting seat 16 may be connected and fixed by screws, so that the assembling efficiency may be improved and the structural stability of the assembling of the air guiding frame 14 and the mounting seat 16 may be enhanced.

In some embodiments, the air guiding frame 14 is detachably assembled to the base 11. The air guiding frame 14 extends along the first direction and includes a recess 144. The recess 144 is arranged at at least one end of the air guiding frame 14 in the first direction, and the recess 144 is used to avoid a driving mechanism 18 that drives the air deflector to move.

For example, as shown in Fig. 5, the whole air guiding frame 14 may extend in the left-right direction, and the left and right ends of the air guiding frame 14 may be integrally formed with the recess 144. The recess 144 may be a step, a groove or the like, and may be recessed rearward.

The driving mechanism 18 may include a motor, a transmission mechanism, etc. The air deflector may be arranged at a front side of the air guiding frame 14 and connected with the driving mechanism 18. By means of the driving mechanism 18, the air deflector may be driven to swing, so as to facilitate opening or closing the air outlet 102 or adjusting the size of the air outlet 102. The driving mechanism 18 may be located at a front side of the recess 144, and the motor or transmission mechanism may be fitted in the recess 144, thus avoiding the assembling interference between the driving mechanism 18 and the air guiding frame 14.

According to embodiments of the present disclosure, the air conditioner indoor unit may improve the fit between the air guiding frame 14 and the driving mechanism 18 by arranging the recess 144 on the air guiding frame 14, and may also improve the fit between the air guiding frame 14 and the motor by arranging the accommodating cavity 141 on the air guiding frame 14, so that the compactness of assembling may be increased and the overall space utilization rate may be improved.

In some embodiments, one of the base 11 and the air guiding frame 14 is provided with a first plug-in hole 111, the other of the base 11 and the air guiding frame 14 is provided with a first plug-in part 146, and the first plug-in part 146 is inserted and fitted in the first plug-in hole 111 to realize the plug-in assembling of the base 11 and the air guiding frame 14.

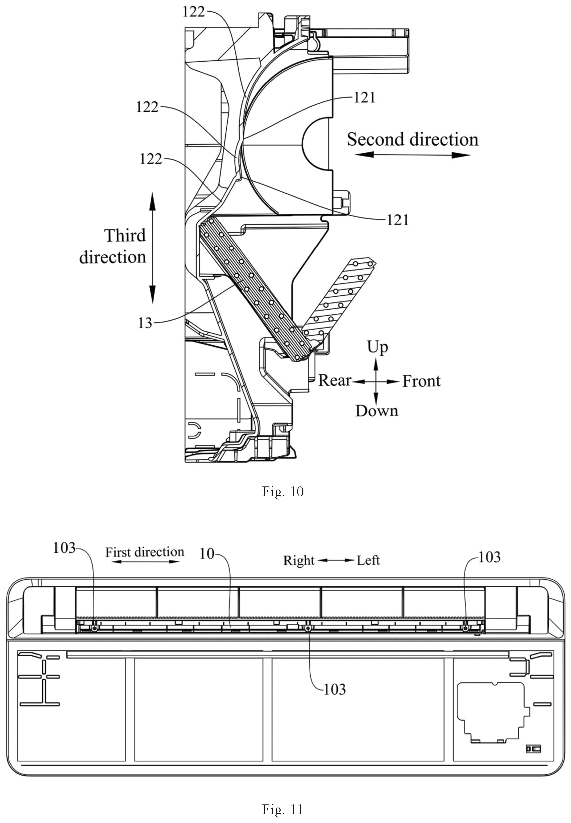

For example, as shown in Fig. 5, the first plug-in hole 111 may be formed in the top of the base 11 and located at the front side of the base 11, and as shown in Fig. 10, the first plug-in part 146 may be integrally formed on a top of the air guiding frame 14 and located at the rear side of the air guiding frame 14. During assembling, the first plug-in part 146 of the air guiding frame 14 may be directly inserted and fitted into the first plug-in hole 111, so that the air guiding frame 14 and the base 11 may be pre-fixed, which is beneficial to improving the assembling efficiency.

In some embodiments, the base 11 and the air guiding frame 14 are connected by a third fastener, the base 11 includes a third pillar 112 connected with the third fastener, and the air guiding frame 14 has a first fixing hole 147 through which the third fastener passes.

In some embodiments, as shown in Fig. 6, the air conditioner indoor unit includes a motor cover 19, and the motor cover 19 is arranged opposite to the recess 144 in the second direction orthogonal to the first direction. One of the motor cover 19 and the air guiding frame 14 has a second plug-in hole 148, as shown in Fig. 7; and the other of the motor cover 19 and the air guiding frame 14 includes a second plug-in part 191, and the second plug-in part 191 is inserted and fitted in the second plug-in hole 148 to realize the plug-in assembling of the air guiding frame 14 and the motor cover 19.

In some embodiments, the motor cover 19 and the air guiding frame 14 are connected by a fourth fastener, the motor cover 19 includes a fourth pillar 192 connected with the fourth fastener, and the air guiding frame 14 has a second fixing hole 149 through which the fourth fastener passes, as shown in Fig. 7.

In some embodiments, as shown in Fig. 6, the air conditioner indoor unit includes a heat exchanger 13, and an end of the heat exchanger 13 in the first direction is provided with a heat exchanger bracket 131. One of the heat exchanger bracket 131 and the air guiding frame 14 has a third plug-in hole 1410, the other of the heat exchanger bracket 131 and the air guiding frame 14 includes a third plug-in part 1311, and the third plug-in part 1311 is inserted and fitted in the third plug-in hole 1410, as shown in Figs. 6 and 7.

During assembling, the third plug-in part 1311 may be inserted and fitted into the third plug-in hole 1410, so that the plug-in assembling and fixing of the air guiding frame 14 and the heat exchanger 13 may be achieved, thus realizing their pre-positioning and pre-fixing.

In some embodiments, the heat exchanger bracket 131 and the air guiding frame 14 are connected by a fifth fastener, the heat exchanger bracket 131 includes a fifth pillar 1312 connected with the fifth fastener, and the air guiding frame 14 has a third fixing hole 1411 through which the fifth fastener passes, as shown in Figs. 6 and 7.

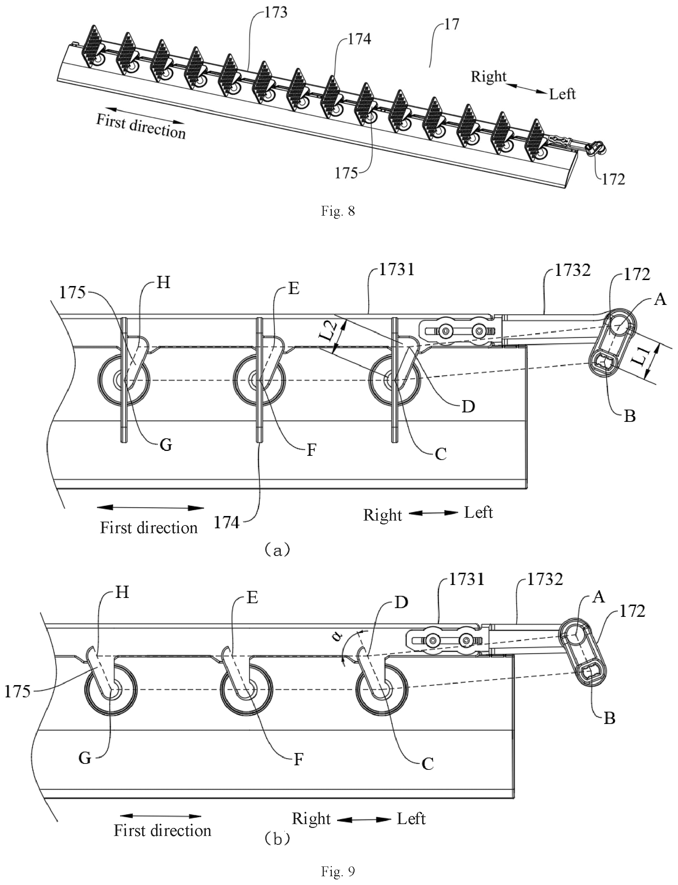

In some embodiments, as shown in Fig. 8, the air swinging assembly 17 of embodiments of the present disclosure includes a plurality of air swinging plates 174 and a connecting rod 173. Each air swinging plate 174 may be rectangular and plate-shaped, and a plurality of through holes may be uniformly distributed on each air swinging plate 174.

The plurality of air swinging plates 174 may be arranged at equal intervals in the left-right direction, and the plurality of air swinging plates 174 may be generally arranged in parallel, that is, any one of the plurality of air swinging plates 174 may be obtained by translating other air swinging plates 174 in the left-right direction.

Each air swinging plate 174 is provided with a first swing lever 175 for driving the air swinging plate 174 to rotate, the connecting rod 173 extends along the first direction, and the connecting rod 173 is rotatably connected with the first swing levers 175 of the plurality of air swinging plates 174. For example, the material of each air swinging plate 174 may be plastic, a first swinging rod 175 may be integrally injection-molded on each air swinging plate 174, and an extension direction of the first swinging rod 175 may form an included angle with a plane in which the air swinging plate 174 lies.

The material of the connecting rod 173 may also be plastic, etc. The connecting rod 173 may be straight and may extend in the left-right direction, and the connecting rod 173 may be arranged on the same side of the plurality of air swinging plates 174. One end of each first swing lever 175 may be located at a rotation axis of the air swinging plate 174 and fixedly connected with the air swinging plate 174, and the other end of each first swing lever 175 may be rotatably connected with the connecting rod 173.

One end of a transmission shaft 172 is rotatably connected with an end of the connecting rod 173, and the other end of the transmission shaft 172 is connected with a driving shaft of the air swinging motor 171. For example, as shown in Figs. 8 and 9, the transmission shaft 172 may be of a short rod shape, one end of the transmission shaft 172 may be pivotally assembled with a left end of the connecting rod 173, and the other end of the transmission shaft 172 may be fixedly connected with the driving shaft of the air swinging motor 171, where the air swinging motor 171 may be a stepping motor or the like.

When in use, the air swinging motor 171 may drive the transmission shaft 172 to swing in the left-right direction. For example, when the transmission shaft 172 swings to the left, the connecting rod 173 may translate to the left. At this time, the plurality of air swinging plates 174 may swing to a position where they are perpendicular to the left-right direction, and in this case, the plurality of air swinging plates 174 are switched to a state of forward air discharge, as shown in Fig. 8. When the transmission shaft 172 swings to the right, the connecting rod 173 may translate to the right. At this time, the plurality of air swinging plates 174 may swing to a position where the air is discharged laterally.

It should be noted that, as shown in Fig. 9(a) and Fig. 9(b), the length and size of the first swinging rod 175 of each air swinging plate 174 may be the same, and a plurality of first swinging rods 175 may be arranged in parallel and at intervals along the left-right direction, so that any two adjacent first swinging rods 175 may form a parallelogram structure. For details, reference may be made to the parallelograms CDEF and EFHG in Fig. 9(a) and Fig. 9(b). Thus, the synchronization of the swinging of the plurality of air swinging plates 174 is ensured.

A length of the transmission shaft 172 is larger than a length of the first swinging rod 175. For example, as shown in Fig. 9, the length of the transmission shaft 172 may be L1, the length of the first swinging rod 175 may be L2, and L1 is larger than L2. Therefore, when the transmission shaft 172 swings around point B in Fig. 9, this may play a role in increasing a length of a lever arm between point A and point B, thereby increasing an acting force exerted on the connecting rod 173 at point A, and also may play a role in completely flattening and closing the plurality of air swinging plates 174.

According to the air swinging assembly 17 of embodiments of the present disclosure, the force arm may be increased by increasing the length of the transmission shaft 172, and then the acting force exerted on the connecting rod 173 at point A may be increased, so that the connecting rod 173 may be pushed to the right under a larger force, which avoids the situation that some air swinging plates 174 on the right side have a large rotation angle difference from some air swinging plates 174 on the left side due to the large length of the connecting rod 173 and a small force exerted on the connecting rod 173 in the related art, thus ensuring the consistency of the rotation adjustment range of the plurality of air swinging plates 174, and enabling the plurality of air swinging plates 174 to be completely closed and flattened.

In some embodiments, as shown in Fig. 9, the connecting rod 173 includes a first rod 1731 and a second rod 1732, both the first rod 1731 and the second rod 1732 extend along the first direction, the plurality of first swinging rods 175 are rotatably connected with the first rod 1731, one end of the second rod 1732 is connected with the first rod 1731, and the other end of the second rod 1732 is rotatably connected with the transmission shaft 172.

Since the air swinging motor 171 and the plurality of air swinging plates 174 of the air swinging assembly 17 may be assembled separately, the split design of the connecting rod 173 meets the use needs of the separate assembling. After the two parts of the air swinging assembly are mounted separately, the first rod 1731 and the second rod 1732 may be connected and fixed, thus facilitating the assembling.

In some embodiments, the air duct 12 may be mounted or integrally formed on the front side of the base 11 of the air conditioner indoor unit. The air duct 12 may generally expand in the up-down direction, and the air duct 12 may generally extend in the left-right direction, that is, a length direction of the air duct 12 may be the left-right direction.

An inner wall surface of the air duct 12 is provided with one protrusion 121 or at least two protrusions 121, and the at least two protrusions 121 are arranged at intervals along the third direction. The protrusion 121 extends along the first direction orthogonal to the third direction, and the protrusion 121 is used for changing a flow direction of a condensate flowing along the inner wall surface, so that the condensate may be drained to the heat exchanger 13 located below the air duct 12.

For example, as shown in Fig. 10, the protrusion 121 may be a ridge, and the protrusion 121 may be integrally formed on the inner wall surface of the air duct 12, where the inner wall surface is a front wall surface of the air duct 12 in Fig. 10. There may be only one protrusion 121. In other embodiments, there may be two, three or four protrusions 121, etc. In this case, a plurality of protrusions 121 may be arranged at intervals along the up-down direction, and each protrusion 121 may extend along the left-right direction.

During assembling, as shown in Fig. 10, the heat exchanger 13 of the air conditioner indoor unit may be mounted at a front side of the air duct 12 and located at a bottom of the air duct 12. The plurality of protrusions 121 may be located above the heat exchanger 13.

When in use, external air may flow through the heat exchanger 13 along the air duct 12 from the air inlet 101 on a bottom side of the air conditioner indoor unit, and then may be discharged from the air outlet 102 located at a top side of the air conditioner indoor unit and arranged in a front side of the air conditioner indoor unit. Since a chamber in the air duct 12 in use is a cold chamber, water vapor in the air duct 12 will condense and liquefy to form condensed water, and the condensed water will adhere to the inner wall surface of the air duct 12 and flow from top to bottom.

Since the inner wall surface of the air duct 12 is provided with the plurality of protrusions 121, the plurality of protrusions 121 may play a role similar to an eave, that is, the protrusions 121 may play a role of guiding the flow of the condensed water and changing the flow direction of the condensed water, thus facilitating the dripping of the condensed water to the heat exchanger 13, and enabling the condensed water to finally converge into the condensate pan at the bottom of the evaporator.

In the air duct 12 of embodiments of the present disclosure, the air duct 12 is provided with the plurality of protrusions 121, and the protrusions 121 may play a flow guiding role, so that it is avoided that the condensed water drips outside the heat exchanger 13, thus facilitating the convergence and collection of the condensed water.

Secondly, the arrangement of the protrusion 121 may also play a role in enhancing the overall structural strength of the air duct 12, that is, the protrusion 121 may play a role similar to a reinforcing rib, thus fully meeting the requirements for use.

In some embodiments, the inner wall surface of the air duct 12 is provided with a plurality of air duct curved surfaces 122, the plurality of air duct curved surfaces 122 are arranged at intervals along the third direction, and the protrusion 121 is arranged between two adjacent air duct curved surfaces 122 of the plurality of air duct curved surfaces 122.

For example, as shown in Fig. 10, the inner wall surface may be provided with three air duct curved surfaces 122, the three air duct curved surfaces 122 may be sequentially arranged in the up-down direction, and one protrusion 121 may be arranged between every two adjacent air duct curved surfaces 122. The protrusion 121 is a convex ridge and may be constructed by designing two adjacent air duct curved surfaces 122 with different curvatures.

When in use, the condensed water may sequentially flow through each air duct curved surface 122 from top to bottom, thus facilitating the downward flow of the condensed water, reducing the air resistance and facilitating the flow of air. In some embodiments, the air conditioner indoor unit includes the air swinging assembly 17, and the frame 10 is provided with a plurality of mounting points 103 for connecting with the air guiding frame 14. For example, the top side of the frame 10 may be provided with three mounting points 103. As shown in Fig. 11, the mounting points 103 may be hole structures. During assembling, the air guiding frame 14 may be connected and fixed with the frame 10 through fasteners such as screws, and three fasteners are respectively assembled at the three hole structures.

The air swinging assembly 17 is arranged on a side of the frame 10 facing a panel 24. For example, the side of the frame 10 facing the panel 24 may be a front side of the frame 10, and the air swinging assembly 17 may be generally arranged on the front side of the frame 10.

As shown in Fig. 1, the air swinging assembly 17 includes an air swinging seat 177, and the air swinging seat 177 is detachably mounted on the frame 10. For example, the air swinging seat 177 may be fixed on the front side of the frame 10 by snap-fit connection. The air swinging seat 177 may be generally flat-plate-shaped. After the air swinging seat 177 is assembled and fixed, the plurality of mounting points 103 may be hidden by the air swinging seat 177, thus avoiding the exposure of the mounting points 103 and fasteners.

By fittingly mounting the air swinging assembly 17 on the frame 10, the air swinging seat 177 of the air swinging assembly 17 may shield and hide the plurality of mounting points 103, thus avoiding the exposure of the plurality of mounting points 103 and improving the overall appearance and user experience.

The air conditioner indoor unit of embodiments of the present disclosure further includes the heat exchanger bracket 131, the heat exchanger bracket 131 includes a bracket body 133, a fixing part 134, a water guiding part 135 and a wiring part 137, the fixing part 134 is arranged on the bracket body 133 for a metal tube of the heat exchanger 13 to pass through, both the water guiding part 135 and the fixing part 134 are arranged on a side of the bracket body 133 facing away from the heat exchanger 13, the water guiding part 135 extends toward a lower end of the bracket body 133, and the wiring part 137 is arranged on the bracket body 133, and is configured to fix a wire harness.

In the heat exchanger bracket 131 of the air conditioner indoor unit of embodiments of the present disclosure, since the fixing part 134 is used for the metal tube of the heat exchanger 13 to pass through, and the water guiding part 135 and the fixing part 134 are both arranged on the side of the bracket body 133 facing away from the heat exchanger 13, the condensed water gathered at the position of the fixing part 134 may be gradually guided toward the lower end of the bracket body 133 through the water guiding part 135, so as to avoid the problem of water leakage of the air conditioner indoor unit caused by disorderly dripping of the condensed water. On the other hand, since the wiring part 137 is arranged on the bracket body 133 and used to fix the wire harness, the problem that the wire harness shakes relative to the heat exchanger bracket 131 may be avoided, which is beneficial to reducing the potential electrical safety hazard. Therefore, the heat exchanger bracket 131 of the air conditioner indoor unit of embodiments of the present disclosure may not only fix the heat exchanger 13, but also have the functions of water guiding and wire routing, with a high degree of integration.

In some embodiments, the water guiding part 135 includes a water baffle plate 1351 protruding from the side of the bracket body 133 facing away from the heat exchanger 13, and the water baffle plate 1351 is arranged at an outer edge of the bracket body 133 and gradually extends toward the lower end of the bracket body 133. It may be understood that when the heat exchanger 13 works, the condensed water will gather at a portion of the fixing part 134 through which the metal tube passes. Since the water baffle plate 1351 is arranged at the outer edge of the bracket body 133, the condensed water gathered at the fixing part 134 and an end of the metal tube may drip onto the water baffle plate 1351. A condensate pan 26 is usually arranged below the heat exchanger bracket 131, and the water baffle plate 1351 may guide the condensed water downward to the condensate pan 26, thus avoiding the problem of water leakage of the air conditioner indoor unit caused by direct downward dripping of the condensed water.

Therefore, the heat exchanger bracket 131 of embodiments of the present disclosure may guide the condensed water generated by the operation of the heat exchanger 13 through the water baffle plate 1351, thus avoiding the problem of water leakage of the air conditioner inner unit, which is beneficial to improving the user experience.

In an example of the present disclosure, a dimension by which the water baffle plate 1351 protrudes from the bracket body 133 is larger than a dimension by which the fixing part 134 protrudes from the bracket body 133. It may be understood that an extension length of the water baffle plate 1351 is longer than an extension length of the fixing part 134, so that the condensed water at an end of the fixing part 134 may also be caught by the water baffle plate 1351 when dripping downward, thus further improving the water retaining and guiding effects of the heat exchanger bracket 131.

The end of the metal tube of the heat exchanger 13 is located in the fixing part 134. In other words, the end of the metal tube does not extend beyond the end of the fixing part 134. On the one hand, the metal tube may be prevented from being bumped during assembling, and on the other hand, the condensed water generated on the metal tube may all drip onto the bracket body 133 and the water baffle plate 1351, so as to improve the guiding effect of the condensed water.

Specifically, the fixing part 134 includes a first fixing part 1341 and a second fixing part 1342. The first fixing part 1341 and the second fixing part 1342 enclose a V-shaped structure, and a tip of the V-shaped structure is oriented downward. The first fixing part 1341 is arranged at a front side of the second fixing part 1342, and the water baffle plate 1351 includes a first water baffle plate 13511. The first water baffle plate 13511 is arranged at a front side of the first fixing part 1341, and extends in a length direction of the first fixing part 1341. It should be noted that the front-rear direction of the heat exchanger bracket 131 is consistent with the front-rear direction of the air conditioner indoor unit. The front side of the first fixing part 1341 is a front side of the heat exchanger bracket 131.

Since the first fixing part 1341 and the second fixing part 1342 form the V-shaped structure with the tip oriented downward, the length direction of the first fixing part 1341 gradually is inclined downward from front to rear, and the first water baffle plate 13511 also gradually is inclined downward from front to rear. The first water baffle plate 13511 is arranged at the front side of the first fixing part 1341, so that the first water baffle plate 13511 may guide the condensed water dripping from the first fixing part 1341.

In an example of the present disclosure, the dimension by which the first water baffle plate 13511 protrudes from the bracket body 133 is larger than the dimension by which the first fixing part 1341 protrudes from the bracket body 133. Therefore, when the condensed water at the end of the first fixing part 1341 drips downward, it may also be caught by the first water baffle plate 13511, thus further improving the water retaining and guiding effects of the heat exchanger bracket 131.

In some embodiments, the water baffle plate 1351 further includes a second water baffle plate 13512, the second water baffle plate 13512 is arranged at a rear side of the second fixing part 1342 and extends in a length direction of the second fixing part 1342. Since the first fixing part 1341 and the second fixing part 1342 enclose the V-shaped structure with the tip oriented downward, the length direction of the second fixing part 1342 gradually is inclined downward from rear to front, and the second water baffle plate 13512 also gradually is inclined downward from rear to front. In other words, the first water baffle plate 13511 and the second water baffle plate 13512 together enclose another V-shaped structure. The second water baffle plate 13512 is arranged at the rear side of the second fixing part 1342, so that the second water baffle plate 13512 may guide the condensed water dripping from the second fixing part 1342.

In an example of the present disclosure, a dimension by which the second water baffle plate 13512 protrudes from the bracket body 133 is larger than a dimension by which the second fixing part 1342 protrudes from the bracket body 133. Therefore, when the condensed water at an end of the second fixing part 1342 drips downward, it may also be caught by the second water baffle plate 13512, thus further improving the water retaining and guiding effects of the heat exchanger bracket 131.

In some embodiments, the water guiding part 135 includes a water guiding plate 1352 protruding from the side of the bracket body 133 facing away from the heat exchanger 13, and the water guiding plate 1352 is inclined in the front-rear direction of the bracket body 133 and extends downward. It may be understood that the condensed water gathered on an outer wall surface of the bracket body 133 (a wall surface facing away from the heat exchanger 13) may converge downward to the water guiding plate 1352, and under the guiding effect of the water guiding plate 1352, the gathered condensed water may be guided to the lower end of the heat exchanger bracket 131, so that the condensed water may fall into the condensate pan 26, thereby greatly reducing the probability of the condensed water dripping out of the condensate pan 26 and hence improving the guiding effect of the heat exchanger bracket 131 on the condensed water.

For example, the water guiding part 135 may be only the water guiding plate 1352. For another example, the water guiding part may be only the water baffle plate 1351.

In an example of the present disclosure, the water guiding part 135 includes both the water guiding plate 1352 and the water baffle plate 1351. It may be understood that under the cooperative action of the water guiding plate 1352 and the water baffle plate 1351, the condensed water on the fixing part 134 and the bracket body 133 may be jointly guided to the lower end of the heat exchanger bracket 131, thus further avoiding the problem of water leakage of the air conditioner indoor unit caused by disorderly dripping of the condensed water.

Specifically, the water guiding plate 1352 is arranged between the first fixing part 1341 and the second fixing part 1342, an upper end of the water guiding plate 1352 is arranged adjacent to the second fixing part 1342, and a lower end of the water guiding plate 1352 extends toward the tip of the V-shaped structure of the heat exchanger bracket 131.

It may be understood that the water guiding plate 1352 mainly guides the condensed water on the outer wall surface of the bracket body 133, and the water baffle plate 1351 (the first water baffle plate 13511 and the second water baffle plate 13512) mainly guides the condensed water generated on the fixing part 134 (the first fixing part 1341 and the second fixing part 1342). That is, under the cooperative action of the water guiding plate 1352 and the water baffle plate 1351, the condensed water on the fixing part 134 and the bracket body 133 may be jointly guided to the lower end of the heat exchanger bracket 131, so that the condensed water may just fall into the condensate pan 26, thereby greatly reducing the probability of the condensed water dripping out of the condensate pan 26 and hence improving the guiding effect of the heat exchanger bracket 131 on the condensed water.

In some embodiments, the heat exchanger bracket 131 further includes a mounting boss 1381 for mounting a heater 251, and the wiring part 137 includes a first wiring slot 1371. Both the first wiring slot 1371 and the mounting boss 1381 are arranged on a side of the bracket body 133 adjacent to the heat exchanger 13, and at least part of a heating wire 252 of the heater 251 is arranged in the first wiring slot 1371, so that the heating wire 252 may be prevented from shaking relative to the heat exchanger bracket 131.

Specifically, the air conditioner indoor unit further includes a heating module 25, and the heating module 25 includes the heater 251 and the heating wire 252. The heater 251 and an electric control assembly 20 are respectively arranged on both sides of the heat exchanger bracket 131 in a thickness direction thereof. One end of the heating wire 252 is electrically connected with the heater 251 and arranged adjacent to the heat exchanger bracket 131, the other end of the heating wire 252 is electrically connected with the electric control assembly 20, and the heating wire 252 is fixed to the wiring part 137.

Since one end of the heating wire 252 is electrically connected with the heater 251 and arranged adjacent to the heat exchanger bracket 131, and the other end of the heating wire 252 is electrically connected with the electric control assembly 20, a wire exit position of the heater 251 may be closer to the electric control assembly 20, and an arrangement length of the heating wire 252 may be reduced. In addition, since the heating wire 252 is fixed to the wiring part 137, the heating wire 252 may be fixed to avoid the problem that the heating wire 252 shakes relative to the heat exchanger bracket 131. Therefore, the heat exchanger bracket of embodiments of the present disclosure reduces the arrangement length of the heating wire 252, and also fixes the arrangement of the heating wire 252, which is beneficial to reducing the potential electrical safety hazard and providing a lower cost.

It may be understood that the wire exit position of the heater 251 is arranged adjacent to the heat exchanger bracket 131. Since the electronic control assembly 20 is arranged on the other side of the heat exchanger bracket 131 in the thickness direction thereof, the wire exit position of the heater 251 may be closer to the electronic control assembly 20, so as to reduce the arrangement length of the heating wire 252. Compared with the scheme that the heating wire 252 bypasses the heat exchanger 13 or the base 11, embodiments of the present disclosure may greatly reduce the arrangement length of the heating wire 252.

For example, the heating wire 252 may cross (bypass) or pass through the heat exchanger bracket 131 to be connected with the electronic control assembly 20.

In some embodiments, the wiring part 137 includes a first wiring slot 1371, the first wiring slot 1371 is arranged on the side of the bracket body 133 adjacent to the heat exchanger 13, and at least part of the heating wire 252 is arranged in the first wiring slot 1371. Therefore, the heating wire 252 arranged on the heat exchanger bracket 131 may be hidden, so as to prevent the heating wire 252 from interfering with other parts (for example, an air impeller 152) and reduce the wire routing space of the heating wire 252. It should be noted that an extension path of the first wiring slot 1371 may be designed according to an arrangement path of the heating wire 252, and the shape and length of the first wiring slot 1371 are not specifically limited in the present disclosure.

In order to further improve the reliability of fixing the heating wire 252, the wiring part 137 further includes a press clamp (not shown), the press clamp is arranged at an opening of the first wiring slot 1371, and defines a clamping channel together with the first wiring slot 1371, and the heating wire 252 is clamped in the clamping channel. Thus, the heating wire 252 may be prevented from coming out of the first wiring slot 1371, which is beneficial to improve the reliability of fixing the heating wire 252 and facilitates assembling and disassembling.

In some embodiments, the wiring part 137 further includes a wire exit hole 1372, the wire exit hole 1372 is arranged at an end of the first wiring slot 1371 facing away from the mounting boss 1381, and penetrates through the heat exchanger bracket 131 along the thickness direction of the heat exchanger bracket 131. It may be understood that the heating wire 252 passes through the heat exchanger bracket 131 through the wire exit hole 1372, to be connected with the electronic control assembly 20, so that the arrangement length of the heating wire 252 may be further shortened, and the wire exit hole 1372 may restrict the wire exit direction and the wire exit position of the heating wire 252, so as to improve the mounting firmness of the heating wire 252.

In order to avoid the problem of air leakage or condensed water seepage at the wire exit hole 1372, an inner side of the wire exit hole 1372 may be abutted against the base 11, so that the base 11 may block the inner side of the wire exit hole 1372 without affecting the normal communication between the wire exit hole 1372 and the first wiring slot 1371, that is, the heating wire 252 may normally pass through the wire exit hole 1372 from the first wiring slot 1371.

In an example, the upper end of the wire exit hole 1372 has a notch 13721 in communication with the wire exit hole 1372, and the notch 13721 is gradually flared from bottom to top. The heating wire 252 may be clamped into the wire exit hole 1372 from the notch 13721, thereby facilitating the assembling of the heating wire 252. In addition, since the notch 13721 is gradually flared from bottom to top, it may provide guidance for the clamping of the heating wire 252, further improving the assembling efficiency of the heating wire 252.

In some embodiments, the wiring part 137 further includes a wiring clip 1373, the wiring clip 1373 is arranged on the side of the heat exchanger bracket 131 facing away from the heat exchanger 13, a wire threading hole 13731 is arranged in the wiring clip 1373, and the heating wire 252 passes through the wire threading hole 13731. It may be understood that the heating wire 252 passing through the wire exit hole 1372 is fixed by the wiring clip 1373, and then the heating wire 252 extends into the electric control assembly 20 to avoid the problem that the heating wire 252 shakes relative to the heat exchanger bracket 131.

Specifically, the wiring clip 1373 and the wire exit hole 1372 are arranged at intervals along the front-rear direction of the heat exchanger bracket 131, and the heating wire 252 has a bent section 253, and the bent section 253 is arranged between the wire exit hole 1372 and the wiring clip 1373, has a U-shaped structure and protrudes toward the lower end of the heat exchanger bracket 131. It may be understood that the bent section 253 of the heating wire 252 may be tightly attached to the outer wall surface of the heat exchanger bracket 131 under the constraint of the wire exit hole 1372 and the wiring clip 1373. Since the bent section 253 of the heating wire 252 is U-shaped and protrudes toward the lower end of the heat exchanger bracket 131, the condensed water generated on the heat exchanger bracket 131 may be guided downward along the bent section 253 to improve the guiding effect on the condensed water. On the other hand, since the heating wire 252 is configured in the above structure, the condensed water may be prevented from entering the electronic control assembly 20 along the extension direction of the heating wire 252, which is beneficial to reducing the electrical safety hazard of the electronic control assembly 20.

In an example, the mounting boss 1381 has a cylindrical structure, and the cylindrical structure protrudes in a direction facing away from the heater 251. An end of the cylindrical structure facing the heater 251 is provided with a plug-in interface 13811, the heater 251 has a plug-in connector, and the plug-in connector is mounted in the plug-in interface 13811. It may be understood that the end (the plug-in connector) of the heater 251 is inserted and fitted in the plug-in interface 13811 of the heat exchanger bracket 131, so as to facilitate the mounting and detachment of the heater 251.

In some embodiments, the fixing part 134 includes a plurality of fixing sleeves 1344 arranged at intervals, and the plurality of fixing sleeves 1344 protrude from the side of the bracket body 133 facing away from the heat exchanger 13. The fixing sleeve 1344 is used to fix the metal tube of the heat exchanger 13. The side of the heat exchanger bracket 131 facing away from the heat exchanger 13 is provided with a plurality of support portions arranged at intervals, and ends of the plurality of support portions are located in the same plane. The support portions include a first support portion 1391, and at least one fixing sleeve 1344 constitutes the first support portion 1391.

According to the air conditioner indoor unit of embodiments of the present disclosure, since the side of the heat exchanger bracket 131 facing away from the heat exchanger 13 is provided with the plurality of support portions arranged at intervals, and the ends of the support portions are located in the same plane, the heat exchanger bracket 131 located at the end of the heat exchanger 13 may be supported by the plurality of support portions when the heat exchanger 13 stands upright, so as to ensure the stability of the heat exchanger 13 when it stands upright, thus facilitating the welding operation of operators.

It may be understood that the ends of the plurality of support portions being located in the same plane may improve the stability of the contact between the heat exchanger bracket 131 and the ground. For example, the number of the support portions may be two, three or more.

In addition, since at least one fixing sleeve 1344 constitutes the first support portion 1391, the fixing sleeve 1344 may not only fix the metal tube of the heat exchanger 13, but also assist in supporting the upright standing of the heat exchanger 13, thereby improving the integration degree of the heat exchanger bracket 131 and saving the arrangement space on the heat exchanger bracket 131. It may be understood that compared with the scheme that the support portion is arranged separately, the heat exchanger bracket 131 of embodiments of the present disclosure may utilize the structure of the heat exchanger bracket 131 itself, and also need not occupy too much space on the heat exchanger bracket 131, thus reducing the obstruction to the condensed water on the heat exchanger bracket 131, improving the guiding effect of the heat exchanger bracket 131 on the condensed water, and improving the integration degree of the heat exchanger bracket 131.

For example, only one fixing sleeve 1344 may constitute the first support portion 1391. For another example, a plurality of fixing sleeves 1344 may jointly form the first support portion 1391.

In some embodiments, the support portions include a second support portion 1392, and the heat exchanger bracket 131 further includes a bearing housing 1383 for supporting an end of the air impeller 152. The bearing housing 1383 protrudes from the side of the bracket body 133 away from the heat exchanger 13 to form the second support portion 1392. It may be understood that a bearing is mounted in the bearing housing 1383, and the end of the air impeller 152 is rotatably supported in the bearing of the bearing housing 1383. The bearing housing 1383 has two functions of supporting the air impeller 152 and assisting in the upright standing of the heat exchanger 13. Therefore, the structure of the bearing housing 1383 of the heat exchanger bracket 131 may be utilized without occupying too much space on the heat exchanger bracket 131, so that the structural design of the heat exchanger bracket 131 is simple and it is convenient to manufacture the heat exchanger bracket 131.

In some embodiments, at least one of the first water baffle plate 13511 and the second water baffle plate 13512 constitutes a third support portion 1393.

In some embodiments, the support portions include a fourth support portion 1394, and the heat exchanger bracket 131 further includes a protruding pillar 1382, the protruding pillar 1382 is arranged at the top of the bracket body 133 and adjacent to the front side of the bracket body 133, and protrudes toward the side of the bracket body 133 facing away from the heat exchanger 13 to form the fourth support portion 1394. The heat exchanger bracket 131 of embodiments of the present disclosure may make the support effect of the heat exchanger bracket 131 more stable by adding the fourth support portion 1394, compared with the support effect of three-point support (first support portion 1391, second support portion 1392 and third support portion 1393).

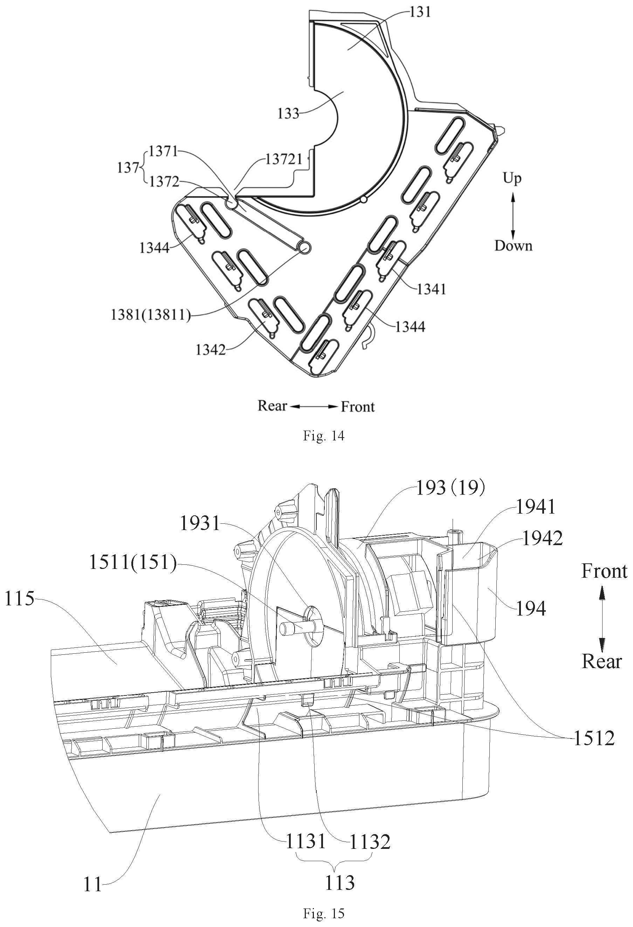

Next, an air conditioner indoor unit according to another embodiment of the present disclosure will be described with reference to Fig. 15.

The air conditioner indoor unit in this embodiment of the present disclosure includes the base 11, a motor cover 19, a cross-flow fan 151 and a wire connector. The base 11 is used for mounting the heat exchanger 13. The motor cover 19 is arranged on a side portion of the base 11 in a length direction thereof, and an upper end of the motor cover 19 has a receiving cavity 1941. The cross-flow fan 151 includes a motor body 1511 and a first motor wire 1512. The motor body 1511 is arranged in the motor cover 19 and is connected with an end of the first motor wire 1512. The wire connector is connected in series with the first motor wire 1512, and the wire connector is mounted in the receiving cavity 1941.

According to the air conditioner indoor unit of this embodiment of the present disclosure, by providing the receiving cavity 1941 in the upper end of the motor cover 19 and mounting the wire connector in the receiving cavity 1941, the position of the wire connector may be fixed, and since the wire connector is connected in series with the first motor wire 1512, when the operators need to detach the cross-flow fan 151, the first motor wire 1512 may be disconnected from the connector, so that it is not necessary to detach the whole first motor wire 1512, thus simplifying the assembling and disassembling procedures for the operators and improving the convenience of maintenance for the operators.

For example, the wire connector includes a first pair of connectors connected in series on the first motor wire 1512. It should be noted that the first pair of connectors form a detachable connection structure including a connector terminal and a terminal base. For example, the connector terminal and the terminal base of the first pair of connectors may be connected by means of plugging, crimping, threaded fitting or the like. It may be understood that the first motor wire 1512 is divided into two sections. One section of the first motor wire 1512 is connected with the motor body 1511 and the connector terminal, and the other section of the first motor wire 1512 is connected with the terminal base and the electronic control assembly 20.

In an example of the present disclosure, part of the first motor wire 1512 extends along the length direction of the base 11 and is arranged above the base 11. Since the receiving cavity 1941 of the air conditioner indoor unit of the present disclosure is arranged in the upper end of the motor cover 19, a wire routing path of the first motor wire 1512 may first pass by the receiving cavity 1941 and then be arranged above the base 11. The above wire routing manner may shorten the wire routing length of the first motor wire 1512, and make full use of the space above the motor cover 19, without increasing the size of the air conditioner indoor unit in a length direction thereof, so that the parts of the air conditioner indoor unit are arranged more compactly.

In some embodiments, the motor cover 19 includes a cover body 193 and a wiring case 194. The wiring case 194 is connected with the cover body 193 and arranged at an upper end of the cover body 193. The receiving cavity 1941 is arranged in the wiring case 194, and a motor cavity 1931 is arranged in the cover body 193, and the motor body 1511 is arranged in the motor cavity 1931. It may be understood that the cover body 193 and the wiring case 194 are mutually independent cavity structures, so that the motor body 1511 and the first pair of connectors do not interfere with each other when being arranged, and it is convenient to route the first motor wire 1512.

A side of the wiring case 194 facing away from the base 11 is open. That is, a front end face (a surface facing the frame 10) of the wiring case 194 is open. It may be understood that the front end of the wiring case 194 has an opening 1942 in communication with the receiving cavity 1941. A front-rear direction of the wiring case 194 coincides with the front-rear direction of the base 11.

Since the front end face of the wiring case 194 is open, it is convenient for the operators to observe the position of the receiving cavity 1941. When the operators route wires, the first pair of connectors (wire connectors) may be directly inserted into the receiving cavity 1941 from the opening 1942. Similarly, when the operators detach the motor, the first pair of connectors (wire connectors) may be removed out of the receiving cavity 1941 from the opening 1942.

Next, an air conditioner indoor unit according to another embodiment of the present disclosure will be described with reference to Fig. 15.

A top surface of the base 11 is provided with a wire routing part 113, and the wire routing part 113 is arranged along the length direction of the base 11 and is used for fixing the wire harness.

In some embodiments, the wire routing part 113 includes a wire routing slot 1131, and the wire routing slot 1131 extends along the length direction of the base 11 and opens toward the upper side of the base 11. The wire harness may be arranged in the wire routing slot 1131 to be hidden, thereby avoiding the problem of interference of the wire harness during the assembling of parts of the air conditioner indoor unit and reducing the probability of damage of the wire harness due to collision and friction. In addition, the wiring slot 1131 with an upward opening may facilitate the operator to take out and place the wire harness, which improves the convenience of mounting and detaching the wire harness.

Further, the wire routing part 113 further includes a plurality of wire routing clips 1132, and the plurality of wire routing clips 1132 are arranged at intervals along a length direction of the wire routing slot 1131, and enclose a wire routing cavity together the wire routing slot 1131. It may be understood that the wire routing clip 1132 may fix the wire harness in the wire routing slot 1131, so as to prevent the wire harness from coming out of the wire routing slot 1131, which is beneficial to improving the reliability of fixing the wire harness.

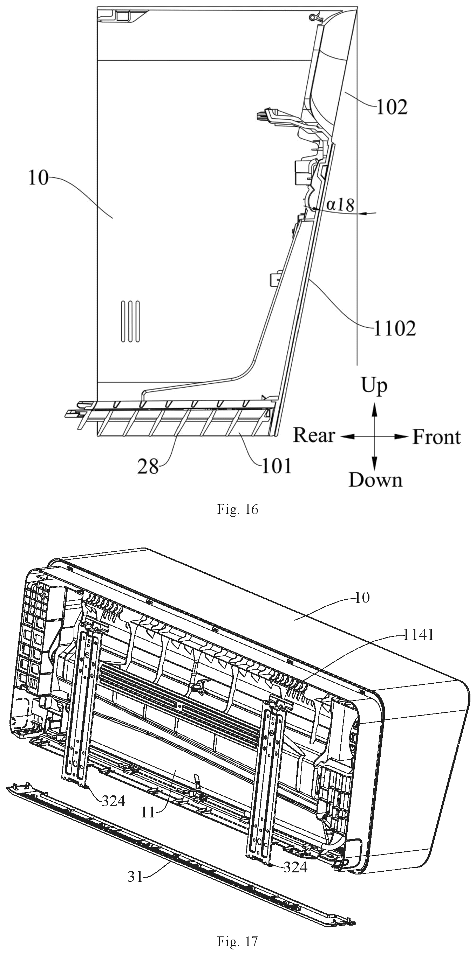

Next, an air conditioner indoor unit according to another embodiment of the present disclosure will be described with reference to Fig. 16.

The air conditioner indoor unit of this embodiment of the present disclosure includes the frame 10, a filter screen 28, clamping parts and magnetic attraction parts. The frame 10 has the air inlet 101 and the air outlet 102, the air inlet 101 is arranged at the lower end of the frame 10, the filter screen 28 is arranged outside the frame 10 and covers the air inlet 101, the filter screen 28 is clamped with the frame 10 through the clamping parts, the filter screen 28 is magnetically engaged with the frame 10 through the magnetic attraction parts, and at least part of the clamping parts and at least part of the magnetic attraction parts are arranged in different directions of the filter screen 28.

According to the air conditioner indoor unit of this embodiment of the present disclosure, since the filter screen 28 is clamped with the frame 10 through the clamping parts, and is magnetically engaged with the frame 10 through the magnetic attraction parts, and at least part of the clamping parts and at least part of the magnetic attraction parts are arranged in different directions of the filter screen 28, the filter screen 28 may be doubly fixed, thus greatly reducing the probability of the filter screen 28 coming loose from the frame 10 and reducing potential safety hazards. On the other hand, since the air inlet 101 is arranged at the lower end of the frame 10, compared with the scheme that the air inlet 101 is arranged at the top end of the frame 10, the distance between the air conditioner indoor unit and the indoor ceiling may be greatly reduced or eliminated, so that the indoor space utilization rate may be improved.

It should be noted that "at least part of the clamping parts" may be all the clamping parts or some of the clamping parts. Similarly, "at least part of the magnetic attraction parts" may be all the magnetic attraction parts or some of the magnetic attraction parts.

In some embodiments, the clamping parts are arranged on two sides of the filter screen 28 in a width direction of the filter screen 28, and the magnetic attraction parts are arranged on two sides of the filter screen 28 in a length direction of the filter screen 28. Therefore, when the clamping parts fail, the magnetic attraction parts located on two sides of the filter screen 28 in the length direction of the filter screen 28 may still firmly attract the filter screen 28 to the frame 10, thereby improving the firmness of fixing the filter screen 28.

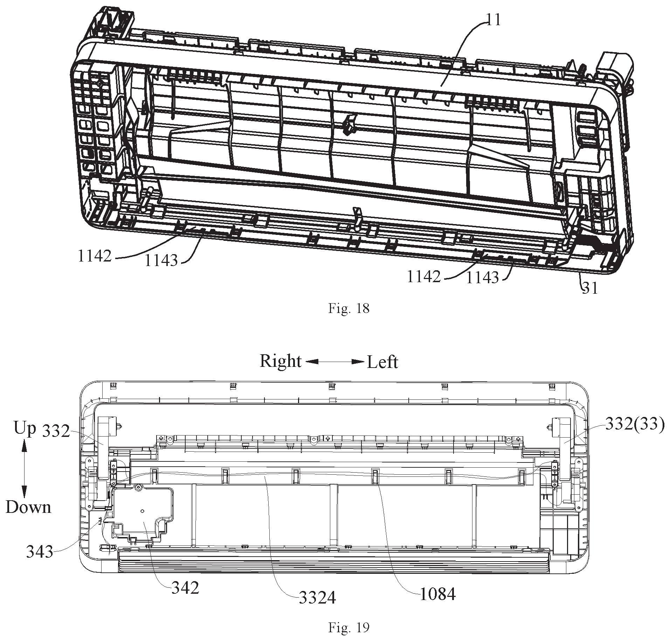

Next, an air conditioner indoor unit according to another embodiment of the present disclosure will be described with reference to Figs. 17 and 18.

The air conditioner indoor unit of this embodiment of the present disclosure includes the base 11, a decorative plate 31 and a wall mounting plate 32. A back surface of the base 11 has a wall mounting hole 1141, and the wall mounting hole 1141 is arranged adjacent to an upper end of the base 11. The base 11 includes a first support part 1142 at a bottom of the base 11, and the decorative plate 31 is detachably mounted at the bottom of the base 11. The decorative plate 31 and the first support part 1142 together enclose a limiting cavity 1143. An upper end of the wall mounting plate 32 includes a hanging hook 323, and a lower end of the wall mounting plate 32 includes a supporting hook 324. The hanging hook 323 is hooked in the wall mounting hole 1141, and the supporting hook 324 is arranged in the limiting cavity 1143 and supports a bottom surface of the first support part 1142.

According to the air conditioner indoor unit of this embodiment of the present disclosure, when the operator mounts the base 11 to the wall mounting plate 32, the hanging hook 323 of the wall mounting plate may be inserted into the wall mounting hole 1141 of the base 11, and the supporting hook 324 supports the bottom surface of the base 11 to fix the base 11. Since the decorative plate 31 is detachably mounted to the bottom of the base 11, and the decorative plate 31 and the first support part 1142 together enclose the limiting cavity 1143, the operator may mount the decorative plate 31 after the base 11 is mounted to the wall mounting plate 32, so as to limit the upward movement of the base 11 through the decorative plate 31. Therefore, when the base 11 is subject to an upward force, the decorative plate 31 may abut against the supporting hook 324, thus avoiding the problem that the hanging hook 323 is separated from the wall mounting hole 1141 due to the upward movement of the base 11. Thus, the air conditioner indoor unit of this embodiment of the present disclosure is conducive to improving the installation reliability of the air conditioner indoor unit.

It may be understood that the installation steps of the air conditioner indoor unit are as follows.

In step S1, the wall mounting plate 32 is mounted to a designated position on the wall.

In step S2, the decorative plate 31 is detached from the base 11.

In step S3, the base 11 is mounted to be hung on the wall mounting plate 32 along a direction from top to bottom. At this time, the hanging hook 323 is inserted into the wall mounting hole 1141 of the base 11, and the supporting hook 324 supports the bottom surface of the base 11.

In step S4, the decorative plate 31 is mounted to the bottom surface of the base 11, and encloses the limiting cavity 1143 together with the first support part 1142. At this time, at least part of the supporting hook 324 is located in the limiting cavity 1143.

When the base 11 moves upward under the action of an external force, since the decorative plate 31 is fixed relative to the base 11 and located below the supporting hook 324, the decorative plate 31 may restrain the upward movement of the base 11, so as to avoid the problem that the hanging hook 323 is separated from the wall mounting hole 1141 due to the upward movement of the base 11.

An upper end face of the decorative plate 31 may have a slight gap with a lower end face of the supporting hook 324, or may be attached to the lower end face of the supporting hook 324. In an example of the present disclosure, the upper end face of the decorative plate 31 abuts against the upper end face of the supporting hook 324. That is, the upper end face of the decorative plate 31 is closely fitted with the upper end face of the supporting hook 324, so as to further reduce the possibility of the base 11 moving upward relative to the wall mounting plate 32.

In some embodiments, the decorative plate 31 is clamped with the base 11, so that the convenience of mounting and detaching the decorative plate 31 may be improved.

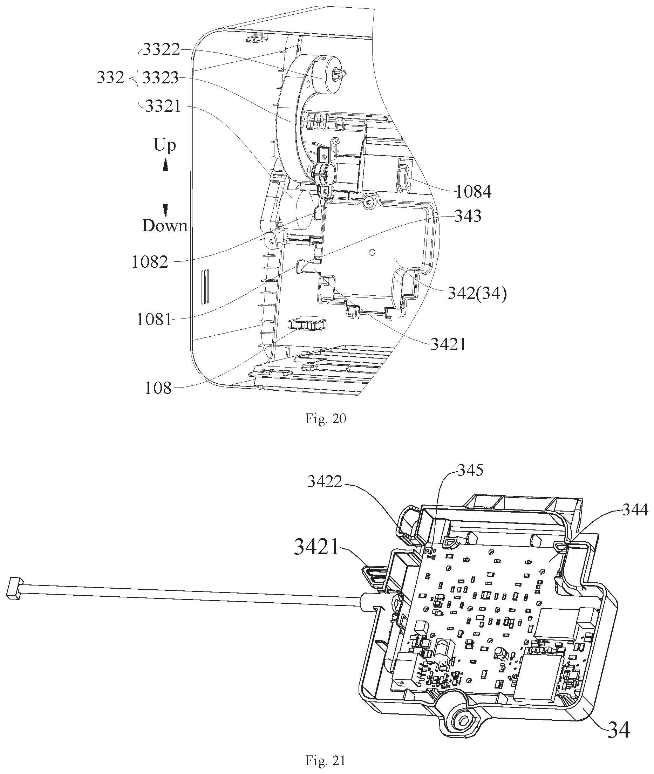

Next, an air conditioner indoor unit according to another embodiment of the present disclosure will be described with reference to Figs. 19 and 20.

An inner wall surface of the frame 10 of the air conditioner indoor unit of this embodiment of the present disclosure is provided with a wire fixing part 108, and the air conditioner indoor unit further includes an air guiding assembly 33. The air guiding assembly 33 includes an air guiding driving part 332 and an air deflector 331, the air deflector 331 is arranged at the air outlet, the air guiding driving part 332 is arranged on the frame 10 and connected with the air deflector 331, the air guiding driving part 332 has a first wire harness 33324, and the first wire harness 3324 is mounted in the wire fixing part 108.

Therefore, the first wire harness 3324 of the air guiding assembly 22 is fixed to the frame 10 through the wire fixing part 108, so that the position of the first wire harness 3324 may be restrained, and the contact of the first wire harness 3324 with the wall surface of the heat exchanger 13 may be avoided, thereby reducing the probability that the first wire harness 3324 contacts the condensed water and reducing the potential safety hazards during the operation of the air conditioner indoor unit.

In some embodiments, the air conditioner indoor unit further includes a display module 34, and the display module 34 includes a display screen and a display box 342. The display screen is arranged on a front wall surface of the frame 10, and the display box 342 is arranged on a rear side of the display screen. At least part of the wire fixing part 108 and the display box 342 define a wire fixing channel 343, and the wire fixing channel 343 is used for fixing the first wire harness 3324.

According to the air conditioner indoor unit of this embodiment of the present disclosure, since at least part of the wire fixing part 108 and the display box 342 define the wire fixing channel 343, the first wire harness 3324 may be fixed in the wire fixing channel 343, so that the position of the first wire harness 3324 may be restrained, and the contact between the first wire harness 3324 and the wall surface of the heat exchanger 13 may be avoided, thereby reducing the probability that the first wire harness 3324 contacts the condensed water and reducing the potential safety hazards during the operation of the air conditioner indoor unit.

On the other hand, the air conditioner indoor unit of this embodiment of the present disclosure may fix the first wire harness 3324 using the structure of the display box 342, so that the production cost of the air conditioner indoor unit is reduced, and the air conditioner indoor unit has a simple structure and is convenient to be processed and manufactured.

In an example of the present disclosure, the wire fixing channel 343 is arranged to extend in the up-down direction of the frame 10. It may be understood that the first wire harness 3324 needs to be introduced into an electronic control box from below, so the first wire harness 3324 needs to extend for a certain distance in the up-down direction of the frame 10 before being introduced into the electronic control box. The air conditioner indoor unit of this embodiment of the present disclosure may improve the firmness of fixing the first wire harness 3324 by arranging the wire fixing channel 343 to extend in the up-down direction of the frame 10, thus further avoiding the problem that the first wire harness 3324 is in contact with the condensed water due to the loosening of the first wire harness 3324.

In some embodiments, the wire fixing part 108 includes a first pressing plate 1081, and the display box 342 is provided with a first wire retaining block 3421. The first wire retaining block 3421 and the first pressing plate 1081 are spaced apart along the length direction of the frame 10 and define a first wire fixing cavity, and the first wire fixing cavity is in communication with the wire fixing channel 343. It may be understood that the first pressing plate 1081 and the first wire retaining block 3421 are arranged on an extending path of the wire fixing channel 343. Since the first wire retaining block 3421 and the first pressing plate 1081 are spaced apart, it is convenient for the operator to pass the wire through the gap between the first wire retaining block 3421 and the first pressing plate 1081 and press the wire into the first wire fixing cavity. Moreover, the first wire retaining block 3421 may retain the first wire harness 3324, so as to reduce the probability that the first wire harness 3324 escapes from the first wire fixing cavity.

In some embodiments, the wire fixing part 108 further includes a second pressing plate 1082, the second pressing plate 1082 is spaced apart from a side wall of the display box 342 along the length direction of the frame 10, to define a second wire fixing cavity, and the second wire fixing cavity is in communication with the wire fixing channel 343. It may be understood that the second pressing plate 1082 is spaced apart from the side wall of the display box 342 to form the second wire fixing cavity. Therefore, the first wire harness 3324 may be further restrained, and the firmness of mounting the first wire harness 3324 may be further improved.

Specifically, the wire fixing part 108 includes a first wire fixing clip 1084, the first wire fixing clip 1084 is arranged adjacent to the air outlet 102 and located below the air outlet 102, and the first wire harness 3324 is clamped in the first wire fixing clip 1084. Since the first wire fixing clip 1084 is located below the air outlet 102 and is arranged adjacent to the air outlet 102, the winding of the first wire harness 3324 may be reduced, the arrangement path of the first wire harness 3324 may be shortened, and the first wire harness 3324 may be kept as far away from the condensate pan at the lower end of the air conditioner indoor unit as possible, thereby reducing the probability that the first wire harness 3324 contacts the condensed water and improving the electrical safety of the air conditioner indoor unit.

In an example, the first wire fixing clip 1084 has a fourth wire fixing cavity therein, and the fourth wire fixing cavity opens upward. It may be understood that an upper end of the fourth wire fixing cavity has an opening. Therefore, the first wire harness 3324 may be pressed down into the fourth wire fixing cavity from an upper end of the first wire fixing clip 1084. On the one hand, the convenience of mounting the first wire harness 3324 may be improved; on the other hand, since the fourth wire fixing cavity opens upward, the first wire harness 3324 is not easy to escape from the fourth wire fixing cavity, and the reliability of mounting the first wire harness 3324 may be improved.

In an example of the present disclosure, the air guiding driving part 332 includes a first motor module 3321, a second motor module 3322 and a rocker arm 3323. The first motor module 3321 is arranged on the frame 10 and connected with one end of the rocker arm 3323, and the other end of the rocker arm 3323 is connected with the second motor module 3322. The second motor module 3322 is connected with the air deflector 331. The first motor module 3321 is used to drive the rocker arm 3323 to swing, so as to control the air deflector 331 to open or close. The second motor module 3322 is used to drive the air deflector 331 to rotate, so to control an inclination angle (air guiding angle) of the air deflector 331. The motor wires of the first motor module 3321 and the second motor module 3322 constitute the first wire harness 3324. It may be understood that the motor wires of the first motor module 3321 and the second motor module 3322 are both fixed by the first wire fixing clip 1084 and the second wire fixing clip.

The first motor module 3321 may have a structure of "motor+reducer" or a structure of a single motor. Similarly, the second motor module 3322 may have a structure of "motor+reducer" or a structure of a single motor. These are not limited in the present disclosure.

Since the motor wires of the first motor module 3321 and the second motor module 3322 are fixed through the wire fixing channel 343, it is possible to prevent the motor wires (the first wire harness 3324) from contacting the first motor module 3321 and the second motor module 3322, and avoid the problem that the vibration of the first motor module 3321 and the second motor module 3322 is transmitted to the motor wires (the first wire harness 3324) to generate abnormal sound.

Next, an air conditioner indoor unit according to another embodiment of the present disclosure will be described with reference to Fig. 21.

In some embodiments, the display module 34 includes the display box 342, a first electric control board 344 and a humidity sensor 345. The first electric control board 344 is mounted in a chamber of the display box 342, and the humidity sensor 345 is mounted on the first electric control board 344.

The humidity sensor 345 is arranged in the chamber defined by the display box 342 and mounted on the first electric control board 344. Therefore, there is no need to provide a lead for electrically connecting the humidity sensor 345 with the first electric control board 344, and also there is no need to provide a mounting position for mounting the humidity sensor 345 outside the display box 342, thus reducing the number of parts of the display module 34, making the display box 342 simple in structure and improving the assembling efficiency of the humidity sensor 345.

It should be noted that the display module 34 is mounted on the frame, and the display module 34 is integrated with display components for displaying the temperature and humidity to the outside.

In some embodiments, the display box 342 is mounted at one end of the frame in the length direction. A side of the display box 342 facing the one end of the frame in the length direction has a detection hole 3422 in communication with a mounting cavity. The detection hole 3422 extends in the first direction, and the detection hole 3422 and the humidity sensor 345 are arranged in the length direction of the frame.

By providing the detection hole 3422, the air circulation between the mounting cavity and an inner cavity of the air conditioner may be ensured, and then the air circulation between the mounting cavity and the indoor air may be ensured, so that the humidity sensor 345 may detect the humidity of the indoor air with higher accuracy. Moreover, by arranging the detection hole 3422 on the side of the display box 342 adjacent to a side plate of the frame, the communication between the air inside the display box and the outdoor air may be realized more quickly, thereby further improving the detection accuracy of the humidity sensor 345 for the humidity of the indoor air.

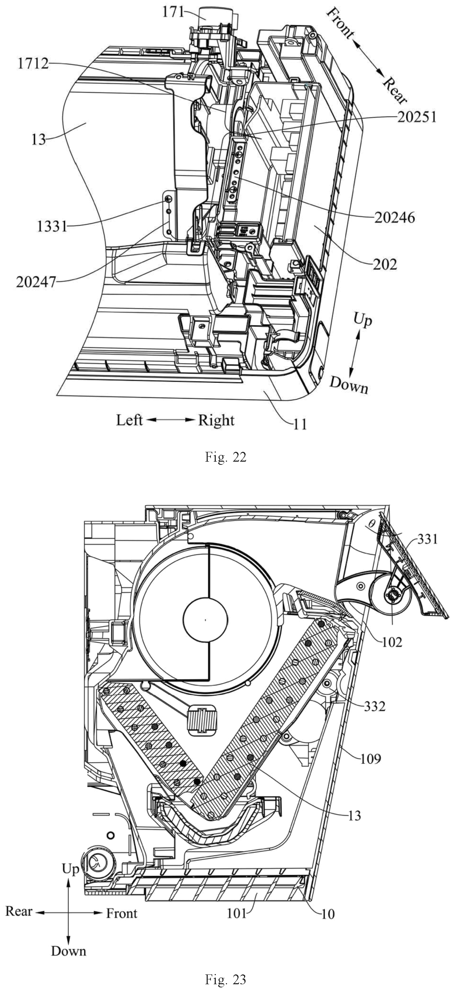

Next, an air conditioner indoor unit according to another embodiment of the present disclosure will be described with reference to Fig. 22.

The air conditioner indoor unit according to this embodiment of the present disclosure further includes the air swinging motor 171 and the electric control assembly 20, the air swinging motor 171 has a second motor wire 1712, and the electric control assembly 20 includes an electric control box 202 and an electric control board 20245. The electric control board 20245 is arranged in the electric control box 202. The electric control box 202 is arranged at a side of the heat exchanger 13 in the length direction, the electric control box 202 includes a first wire threading part 20251, the first wire threading part 20251 is arranged at a lower side of the air guiding frame 14 and adjacent to the air swinging motor 171, and the second motor wire 1712 passes through the first wire threading part 20251 and is connected to the electric control board 20245.

Specifically, the air guiding frame 14 and the heat exchanger 13 are both mounted in the space enclosed by the frame 10 and the base 11. An air guiding channel 1415 is arranged in the air guiding frame 14 and in communication with the air outlet 102, and the air swinging plate 174 is arranged in the air guiding channel 1415.

According to the air conditioner indoor unit of this embodiment of the present disclosure, by arranging the first wire threading part 20251 at the lower side of the air guiding frame 14, the air guiding frame 14 will not block and interfere with the first wire threading part 20251 when the operator mounts the air guiding frame on the base 11, and since the first wire threading part 20251 is arranged adjacent to the air swinging motor 171, the arrangement length of the second motor wire 1712 may be shortened, and it is convenient to introduce the second motor wire 1712 into the electric control box 202 through the first wire threading part 20251. Therefore, the wire routing mode of the air conditioner indoor unit of this embodiment of the present disclosure is simple, and the assembling thereof is convenient, which is beneficial to improving the production efficiency.

It may be understood that the electronic control box 202 needs to be assembled the air guiding frame 14 in the assembling process of the air conditioner indoor unit. In the related art, after the air guiding frame 14 is assembled, the air guiding frame 14 will block an original wire inlet of the electric control box 202, which will lead to the problem that it is difficult for the second motor wire 1712 of the air swinging motor 171 to be introduced into the electric control box 202 from the wire inlet, resulting in the difficulty in the wire routing of the air conditioner indoor unit.

However, according to the air conditioner indoor unit of this embodiment of the present disclosure, by arranging the first wire threading part 20251 at the lower side of the air guiding frame 14 and adjacent to the air swinging motor 171, the wire routing of the second motor wire 1712 will not be affected due to the assembling of the air guiding frame 14, and the arrangement path of the second motor wire 1712 will not be excessively extended, thus reducing the cost of the second motor wire 1712 and being beneficial to reducing the potential electrical safety hazards.

In some embodiments, the electric control assembly 20 further includes a grounding wire plate 20246 and a first grounding wire 20247, the grounding wire plate 20246 is arranged in the electric control box 202, two ends of the first grounding wire 20247 are respectively connected with the heat exchanger 13 and the grounding wire plate 20246, and the first grounding wire 20247 passes through the first wire threading part 20251. It may be understood that the heat exchanger 13 needs to be grounded to improve the electrical safety of the air conditioner indoor unit during operation. Since the first grounding wire 20247 also passes through the first wire threading part 20251, the structure of the first wire threading part 20251 may be fully utilized, and the wire routing is facilitated, which is beneficial to reducing assembling man-hours.

For example, as shown in Fig. 22, a side of the heat exchanger 13 adjacent to the electronic control box 202 is provided with a grounding part 1331, and the grounding part 1331 is connected with the first grounding wire 20247.

In some embodiments, the air guiding assembly 33 is an air guiding assembly 33 with a top air discharge. As shown in Figs. 23 to 25, the air guiding assembly 33 includes a mounting frame, the air guiding driving part 332 and the air deflector 331, and the air guiding driving part 332 is connected with the mounting frame. The air guiding driving part 332 is drivingly connected with the air deflector 331 to drive the air deflector 331 to move. The mounting frame may be formed by the frame 10.

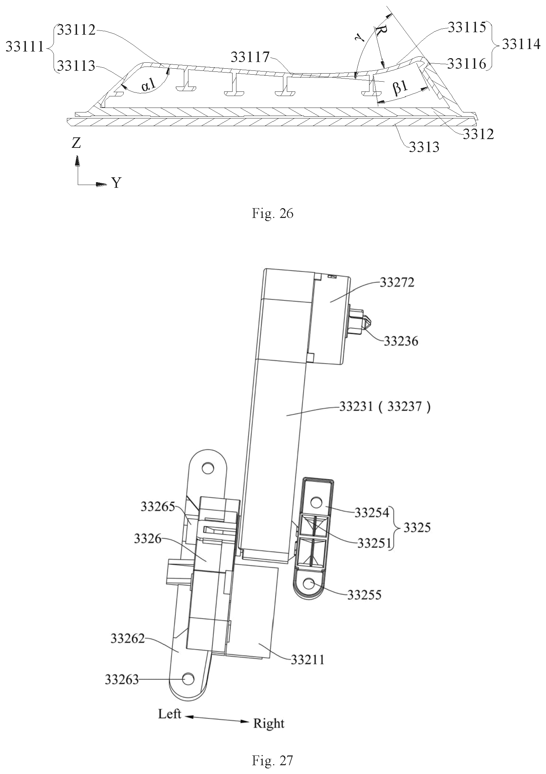

As shown in Fig. 26, the air deflector 331 includes a first air guiding surface 33111, a transitional air guiding surface 33117 and a second air guiding surface 33114, which are arranged in sequence along a width direction (i.e., a Y direction in Fig. 26) of the air deflector 331. At least part of the first air guiding surface 33111 is arranged obliquely relative to the transitional air guiding surface 33117 in a direction facing away from the transitional air guiding surface 33117, and at least part of the second air guiding surface 33114 is arranged obliquely relative to the transitional air guiding surface 33117 in another direction facing away from the transitional air guiding surface 33117.

When the air deflector 331 is closed, the width direction of the air deflector 331 coincides with the up-down direction. At least part of the first air guiding surface 33111 being arranged obliquely relative to the transitional air guiding surface 33117 in the direction facing away from the transitional air guiding surface 33117, may be understood as that only a part of the first air guiding surface 33111 is arranged obliquely relative to the transitional air guiding surface 33117 in the direction facing away from the transitional air guiding surface 33117, or that the whole first air guiding surface 33111 is arranged obliquely relative to the transitional air guiding surface 33117 in the direction facing away from the transitional air guiding surface 33117. At least part of the second air guiding surface 33114 being arranged obliquely relative to the transitional air guiding surface 33117 in the other direction facing away from the transitional air guiding surface 33117, may be understood as that only a part of the second air guiding surface 33114 is arranged obliquely relative to the transitional air guiding surface 33117 in the other direction facing away from the transitional air guiding surface 33117, or that the whole second air guiding surface 33114 is arranged obliquely relative to the transitional air guiding surface 33117 in the other direction facing away from the transitional air guiding surface 33117.

For example, the transitional air guiding surface 33117 is arranged toward one side of an air deflector body 3311 in a thickness direction (i.e., a Z direction in Fig. 26) of the air deflector body 3311, at least part of the first air guiding surface 33111 is arranged obliquely relative to the transitional air guiding surface 33117 toward the other side of the air deflector body 3311 in the thickness direction of the air deflector body 3311, and at least part of the second air guiding surface 33114 is arranged obliquely relative to the transitional air guiding surface 33117 toward the other side of the air deflector body 3311 in the thickness direction of the air deflector body 3311.

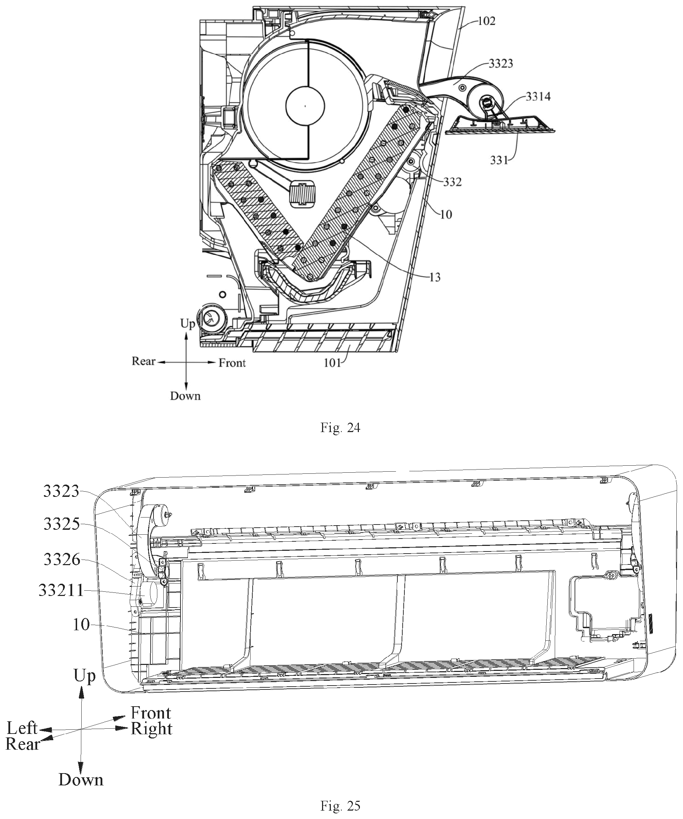

As shown in Fig. 24, the air guiding assembly 33 is arranged at the air outlet 102 of the air conditioner indoor unit. In a cooling mode, the air at the air outlet 102 flows to the first air guiding surface 33111 under the guidance of the transitional air guiding surface 33117, and the airflow is mainly guided by the first air guiding surface 33111. In a heating mode, the air at the air outlet 102 flows to the second air guiding surface 33114 under the guidance of the transitional air guiding surface 33117, and the airflow is mainly guided by the second air guiding surface 33114. By arranging at least part of the first air guiding surface 33111 obliquely relative to the transitional air guiding surface 33117 in the direction facing away from the transitional air guiding surface 33117, the eddies formed by the airflow at the air deflector 331 may be reduced, thereby reducing the risk of condensation of the air conditioner indoor unit. By arranging at least part of the second air guiding surface 33114 obliquely relative to the transitional air guiding surface 33117 in the other direction facing away from the transitional air guiding surface 33117, the landing speed of the airflow passing through the air deflector 331 may be improved, and hence the heating effect of the air conditioner indoor unit may be improved.

In specific use, as shown in Fig. 23, in the heating mode, the air deflector 331 is in a first position at this time, and the air deflector 331 rotates until the second air guiding surface 33114 is located in front of the first air guiding surface 33111, and a front end of the air deflector 331 is lower than a rear end of the air deflector 331. In this case, the airflow at the air outlet 102 is mainly guided by the second air guiding surface 33114. As shown in Fig. 24, in the cooling mode, the air deflector 331 is in a second position at this time, and the air deflector 331 rotates until the first air guiding surface 33111 is located in front of the second air guiding surface 33114, and the front end and the rear end of the air deflector 331 are generally at the same height. In this case, the airflow at the air outlet 102 is mainly guided by the first air guiding surface 33111. During the operation of the air conditioner indoor unit, the air deflector 331 may also be in other positions, such as a third position in Fig. 24.

In some embodiments, as shown in Fig. 26, the transitional air guiding surface 33117 is an arc-shaped surface.

In some embodiments, as shown in Fig. 26, the first air guiding surface 33111 includes a first portion 33112 and a second portion 33113, and the first portion 33112 is arranged between the second portion 33113 and the transitional air guiding surface 33117 in a width direction of the air deflector body 3311. The first portion 33112 is smoothly connected with the transitional air guiding surface 33117, and the second portion 33113 is arranged obliquely relative to the transitional air guiding surface 33117 in the direction facing away from the transitional air guiding surface 33117.

It may be understood that the second portion 33113 is arranged obliquely relative to the transitional air guiding surface 33117 in the direction facing away from the transitional air guiding surface 33117, so as to reduce the eddies formed by the airflow at the air deflector 331 and reduce the risk of condensation of the air conditioner indoor unit.

In some embodiments, an included angle between the first portion 33112 and the second portion 33113 ranges from 106 degrees to 158 degrees.

For example, as shown in Fig. 26, the included angle between the first portion 33112 and the second portion 33113 is denoted as α1, and α1 is 132 degrees.

Since the included angle between the first portion 33112 and the second portion 33113 ranges from 106 degrees to 158 degrees, the eddies at the air deflector 331 in the cooling mode may be effectively reduced, and the risk of condensation of the air conditioner indoor unit may be reduced.

In some embodiments, as shown in Fig. 26, the second air guiding surface 33114 includes a third portion 33115 and a fourth portion 33116, and the third portion 33115 is arranged between the fourth portion 33116 and the transitional air guiding surface 33117 in the width direction of the air deflector body 3311. The third portion 33115 is smoothly connected with the transitional air guiding surface 33117, and the fourth portion 33116 is arranged obliquely relative to the transitional air guiding surface 33117 in the other direction facing away from the transitional air guiding surface 33117.

It may be understood that the fourth portion 33116 is arranged obliquely relative to the transitional air guiding surface 33117 in the other direction facing away from the transitional air guiding surface 33117, so as to improve the landing speed of the airflow passing through the air deflector 331 and improve the heating effect of the air conditioner indoor unit.

In some embodiments, the third portion 33115 is a concave arc-shaped surface, and a radius of the third portion 33115 ranges from 30 mm to 45 mm.

For example, as shown in Fig. 26, the radius of the third portion 33115 is denoted as R, and R is 37 mm.

Since the radius of the third portion 33115 ranges from 30 mm to 45 mm, the landing speed of the airflow passing through the air deflector 331 in the heating mode may be further improved, and the heating effect of the air conditioner indoor unit may be improved.

In some embodiments, a central angle subtended by the third portion 33115 ranges from 18 degrees to 28 degrees.

For example, as shown in Fig. 26, the central angle subtended by the third portion 33115 is denoted as β1, and β1 is 23 degrees.

Since the central angle subtended by the third portion 33115 ranges from 18 degrees to 28 degrees, the landing speed of the airflow passing through the air deflector 331 in the heating mode may be further improved, and the heating effect of the air conditioner indoor unit may be improved.

In some embodiments, an included angle between the first portion 33112 and the fourth portion 33116 ranges from 42 degrees to 62 degrees.

For example, as shown in Fig. 26, the included angle between the first portion 33112 and the fourth portion 33116 is denoted as γ, and γ is 52 degrees.

Since the included angle between the first portion 33112 and the fourth portion 33116 ranges from 42 degrees to 62 degrees, the landing speed of the airflow passing through the air deflector 331 in the heating mode may be further improved, and the heating effect of the air conditioner indoor unit may be improved.

As shown in Fig. 26, the air deflector 331 further includes an interlayer 3312 and an outer plate 3313 of the air deflector, and the air deflector body 3311 is connected with the outer plate 3313 of the air deflector through the interlayer 3312.

In some embodiments, as shown in Fig. 25, Fig. 27 and Fig. 28, the air guiding driving part 332 includes a driving member 33211, a rocker arm 3323 and a limiting piece 3325, the driving member 33211 is connected with the mounting frame, and the driving member 33211 is drivingly connected with the rocker arm 3323, so as to drive the rocker arm 3323 to rotate relative to the mounting frame. The rocker arm 3323 is provided with a rocker arm protrusion 33235 on an axial side of a rotating shaft of the rocker arm 3323, and the limiting piece 3325 is arranged at a side of the rocker arm 3323 facing the rocker arm protrusion 33235 and connected with the mounting frame, and the rocker arm protrusion 33235 is rotatably connected with the limiting piece 3325.

In specific use, the rocker arm 3323 is drivingly connected with the air deflector 331.

When the air guiding assembly 33 operates, the rocker arm 3323 is driven by the driving member 33211 to rotate, and the rocker arm 3323 drives the air deflector 331 to rotate to different air supply angles. The rocker arm protrusion 33235 is arranged on the axial side of the rotating shaft of the rocker arm 3323, the limiting piece 3325 is arranged at the side of the rocker arm 3323 facing the rocker arm protrusion 33235, and the rocker arm protrusion 33235 is rotatably connected with the limiting piece 3325, so that when the rocker arm 3323 rotates, the position of the rocker arm 3323 in the axial direction of the rotating shaft may be restricted by the limiting piece 3325, and the risk of rocking of the rocker arm 3323 is reduced, thereby improving the rotation accuracy of the air deflector 331 and reducing the risk of abnormal sound generated by the rocker arm 3323.

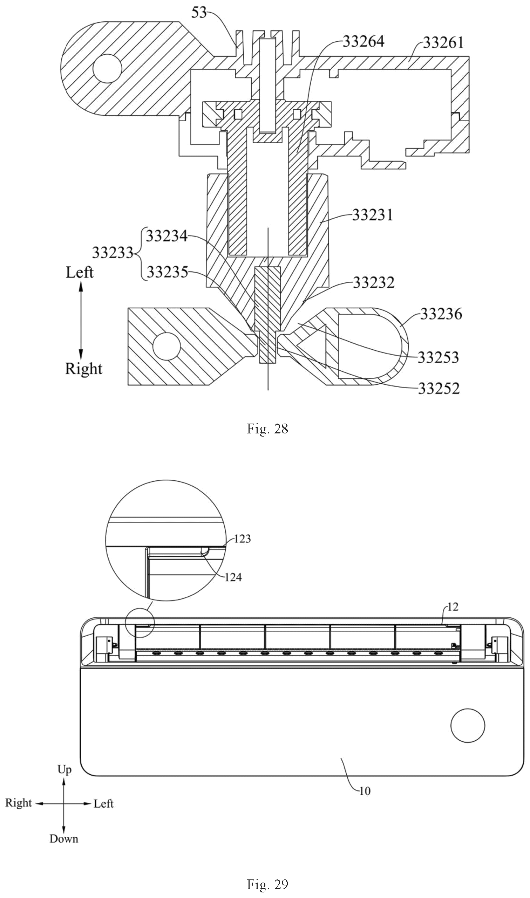

In some embodiments, as shown in Fig. 28, the rocker arm protrusion 33235 is an insertion shaft, the limiting piece 3325 has a first insertion hole 33252, and the insertion shaft is rotatably connected in the first insertion hole 33252.

In order to make the technical scheme of the present disclosure easier to understand, the technical scheme of the present disclosure will be further described by taking an example that the axial direction of the rotating shaft coincides with the left-right direction.

For example, as shown in Figs. 27 and 28, the rocker arm protrusion 33235 is arranged on a right side of the rocker arm 3323, the limiting piece 3325 is arranged at the right side of the rocker arm 3323, the first insertion hole 33252 extends in the left-right direction, and the rocker arm protrusion 33235 is inserted and fitted in the first insertion hole 33252 from left to right.

In some embodiments, as shown in Fig. 28, the limiting piece 3325 includes a guide hole 33253, and the guide hole 33253 is arranged at a side of the first insertion hole 33252 facing the rocker arm 3323 and is in communication with the first insertion hole 33252. A diameter of the guide hole 33253 gradually increases in a direction facing away from the first insertion hole 33252.

For example, as shown in Fig. 28, the rocker arm 3323 is arranged at a left side of the limiting piece 3325, the guide hole 33253 is arranged at a left side of the first insertion hole 33252, and the diameter of the guide hole 33**2**53 gradually increases from right to left.

By providing the guide hole 33253, the guide hole 33253 may guide the rocker arm protrusion 33235 when the rocker arm protrusion 33235 is inserted into the guide hole 33253, which facilitates the insertion of the rocker arm protrusion 33235 into the guide hole 33253, thus facilitating the assembling of the air guiding driving part 332.

In some embodiments, as shown in Fig. 28, the rocker arm 3323 includes an extension section 33232, and the extension section 33232 is arranged on a side of the rocker arm protrusion 33235 facing away from the limiting piece 3325. At least part of the extension section 33232 is arranged in the guide hole 33253, and a diameter of the extension section 33232 gradually increases in a direction facing away from the first insertion hole 33252.

For example, the extension section 33232 is arranged on a left side of the rocker arm protrusion 33235, and the diameter of the extension section 33232 gradually increases from right to left. A part of the extension section 33232 is arranged in the guide hole 33253, and another part of the extension section 33232 is arranged outside the guide hole 33253.

Since the extension section 33232 is arranged on the rocker arm 3323, and the diameter of the extension section 33232 gradually increases in the direction facing away from the first insertion hole 33252, the stiffness of the rocker arm 3323 may be improved, the risk of rocking of the rocker arm 3323 may be further reduced, the rotation accuracy of the air deflector 331 may be improved, and the risk of abnormal sound generated by the rocker arm 3323 may be reduced.

In some embodiments, as shown in Fig. 28, the rocker arm 3323 includes a rod body 33231 and a limiting rod 33233, the rod body 33231 is drivingly connected with the driving member 33211, and the limiting rod 33233 includes a first section 33234 and a second section, which are arranged along the axial direction of the rotating shaft. The first section 33234 is fixedly connected with the rod body 33231, and the second section forms the rocker arm protrusion 33235.

For example, the rod body 33231 is arranged on a left side of the limiting rod 33233, and the first section 33234 is arranged on a left side of the second section. The first section 33234 is embedded in the rod body 33231, the second section is located outside the rod body 33231, and the second section forms the rocker arm protrusion 33235.

Since the rocker arm 3323 is configured to have the above structure, it is convenient to design and manufacture different parts of the rocker arm 3323 according to the requirements for different parts of the rocker arm 3323, so that the stiffness of the rocker arm 3323 may meet the requirements with a low cost of the rocker arm 3323.

In some embodiments, as shown in Fig. 28, a diameter of the first section 33234 is larger than a diameter of the second section.

Since the diameter of the first section 33234 is larger than the diameter of the second section, the connection area between the limiting rod 33233 and the rod body 33231 may be increased to improve the connection reliability between the limiting rod 33233 and the rod body 33231, and also the limiting rod 33233 may be prevented from falling off from the limiting piece 3325 in a direction facing away from the rod body 33231, so as to improve the reliability of the air guiding driving part 332.

In some embodiments, the limiting rod 33233 is a metal rod.

By configuring the limiting rod 33233 as the metal rod, the friction coefficient between the limiting rod 33233 and the limiting piece 3325 may be reduced, and the abnormal sound generated due to friction between the rocker arm 3323 and the limiting piece 3325 during the rotation of the rocker arm 3323 may be avoided, further reducing the risk of the abnormal sound generated during the rotation of the rocker arm 3323.

In some embodiments, as shown in Fig. 27, the limiting piece 3325 has a fourth fixing hole 33255, and a fastener passes through the fourth fixing hole 33255 and is connected with the mounting frame. The fastener may be a bolt, a screw, etc.

In some embodiments, as shown in Fig. 27, the limiting piece 3325 includes a limiting body 33251 and fixing lugs 33254, and the fixing lugs 33254 are arranged at two opposite sides of the limiting body 33251 in a radial direction of the rotating shaft and connected with the limiting body 33251. The rocker arm protrusion 33235 is rotatably connected with the limiting body 33251, and the fixing lug 33254 is connected with the mounting frame.

In some embodiments, the smallest dimension of the rocker arm 3323 in the axial direction of the rotating shaft ranges from 12 mm to 24 mm.

For example, as shown in Fig. 27, the smallest dimension of the rocker arm 3323 in the axial direction of the rotating shaft is denoted as L3, and L3 is 19.5 mm.

Since the minimum dimension of the rocker arm 3323 in the axial direction of the rotating shaft ranges from 12 mm to 24 mm, the thickness of the rocker arm 3323 is large, and hence the stiffness of the rocker arm 3323 may be improved, thus further reducing the risk of rocking of the rocker arm 3323, improving the rotation accuracy of the air deflector 331 and reducing the risk of abnormal sound generated by the rocker arm 3323.

In some embodiments, as shown in Fig. 25, Fig. 27 and Fig. 28, the air guiding driving part 332 further includes a reduction gearbox 3326, and the reduction gearbox 3326 includes a box body 33261 and an output shaft 33264. The box body 33261 is connected with the mounting frame, and the driving member 33211 is drivingly connected with the rocker arm 3323 through the output shaft 33264. The driving member 33211 may be a motor, and a plurality of gears are arranged in the box body 33261.

By providing the reduction gearbox 3326, the output torque of the driving member 33211 may be improved, the output torque of the rocker arm 3323 may be improved, and the rotational stability of the air deflector 331 may be improved.

In some embodiments, as shown in Fig. 25, Fig. 27 and Fig. 28, the reduction gearbox 3326 and the limiting piece 3325 are arranged on two opposite sides of the rocker arm 3323 in the axial direction of the rotating shaft.

For example, the reduction gearbox 3326 is arranged at a left side of the rocker arm 3323, and the limiting piece 3325 is arranged at the right side of the rocker arm 3323. By the reduction gearbox 3326 and the limiting piece 3325, the rocker arm 3323 may be stably limited in the left-right direction, thus further reducing the risk of rocking of the rocker arm 3323, further improving the rotation accuracy of the air deflector 331 and reducing the risk of abnormal sound generated by the rocker arm 3323.

As shown in Fig. 27, the reduction gearbox 3326 is arranged at a side of the rocker arm 3323 in the axial direction of the rotating shaft of the rocker arm 3323, and a gear protrusion 33265 is arranged on a side of the reduction gearbox 3326 facing away from the rocker arm 3323, and is rotatably connected with the frame 10.

In order to make the embodiments of the present disclosure easier to understand, the technical scheme of the present disclosure will be further described by taking an example that the axial direction of the rotating shaft of the rocker arm 3323 coincides with the left-right direction. The left-right direction is shown in Fig. 23, Fig. 24 and Fig. 27.

For example, as shown in Fig. 24 and Fig. 27, the reduction gearbox 3326 is arranged at the left side of the rocker arm 3323, and the gear protrusion 33265 is arranged on the left side of the reduction gearbox 3326, and is rotatably connected with the frame 10.

Since the gear protrusion 33265 is arranged on the side of the reduction gearbox 3326 facing away from the rocker arm 3323, and the gear protrusion 33265 is rotatably connected with the frame 10, when the gears in the reduction gearbox 3326 rotate, the position of the air guiding driving part 332 in the axial direction of the rotating shaft may be limited by the frame 10, and thus the risk of shaking of the air guiding driving part 332 is reduced, thereby improving the rotating accuracy of the air deflector 331 and reducing the risk of abnormal sound generated by the rocker arm 3323.

In some embodiments, the gear protrusion 33265 is a limiting post, the frame 10 has a limiting hole, and the limiting post is rotatably connected in the limiting hole.

By configuring the gear protrusion 33265 as the limiting post and providing the limiting hole in the frame 10, it is convenient for the gear protrusion 33265 to be rotatably connected with the frame 10 by the rotatable connection of the limiting post and the limiting hole, thus facilitating the mounting and fixation of the air guiding driving part 332.

In some embodiments, the gear protrusion 33265 is arranged coaxially with the output shaft 33264.

In some embodiments, the reduction gearbox 3326 is detachably connected with the frame 10.

For example, as shown in Fig. 27, the box body 33261 includes a connecting lug 33262, and the connecting lug 33262 has a fourth connecting hole 33263. A fastener passes through the fourth connecting hole and is connected with the frame 10, thus realizing the connection and fixation of the box body 33261 and the frame 10. The fastener may be a bolt, a screw or the like.

By detachably connecting the reduction gearbox 3326 with the frame 10, it is convenient to replace and maintain the reduction gearbox 3326.

As shown in Fig. 24, the air guiding assembly 33 further includes a rotating rod 3314, one end of the rotating rod 3314 is connected with the air deflector 331, and the other end of the rotating rod 3314 is rotatably connected with the rocker arm 3323.

For example, one end of the rotating rod 3314 is integrally formed with the air deflector body 3311. As shown in Figs. 27 and 28, the rocker arm 3323 is provided with a connecting part 33236, and the connecting part 33236 is rotatably connected with the rotating rod 3314.

In some embodiments, as shown in Fig. 25, the frame 10 includes the air outlet 102, and the air deflector 331 is arranged corresponding to the air outlet 102 to close or open the air outlet 102. As shown in Fig. 24, the air guiding assembly 33 of the air conditioner indoor unit further includes the air guiding frame 14, the air guiding frame 14 is spaced apart from the frame 10, and the air guiding driving part 332 is arranged between the air guiding frame 14 and the frame 10.

Therefore, the space between the air guiding frame 14 and the frame 10 may also be used for the air guiding driving part 332 to move, so that the movement range of the air guiding driving part 332 may be increased, and the opening angle of the air outlet 102 is larger during the movement of the air deflector 331, and it is easier to realize large-angle air supply.

As shown in Fig. 23 and Fig. 24, the frame 10 further includes the air inlet 101, and the air inlet 101 is arranged in a lower part of the frame 10. The air conditioner indoor unit also includes the heat exchanger 13, and the heat exchanger 13 is arranged in the frame 10.

In specific use, the indoor air enters the frame 10 from the air inlet 101 in a lower side of the air conditioner indoor unit, passes through the heat exchanger 13 and exchanges heat with the heat exchanger 13, and then flows out from the air outlet 102 in an upper side of the air conditioner indoor unit and is blown indoors.

In some embodiments, as shown in Fig. 23, the frame 10 includes a front side plate 109, the air outlet 102 is arranged in the front side plate 109, and the front side plate 109 is inclined rearward gradually from top to bottom.

Since the front side plate 109 is inclined rearward gradually from top to bottom, a lower side of the air outlet 102 may also be used for the airflow to flow through in the heating mode, so that the temperature of the airflow entering through the air inlet 101 is high, the internal circulation of the hot airflow is realized, and the heat exchanger 13 may be sterilized at a high temperature, thus avoiding the occurrence of off-odor in the air conditioner indoor unit.

In some embodiments, as shown in Fig. 23, an inclination angle of the front side plate 109 ranges from 6 degrees to 14 degrees.

For example, the inclination angle of the front side plate 109 is denoted as θ, and θ is 10 degrees.

It may be understood that the larger the inclination angle of the front side plate 109, the more the hot airflow entering through the air inlet 101, and the better the high-temperature sterilization effect on the heat exchanger 13, but the less the indoor hot airflow, which is not conducive to improving the heating effect of the air conditioner indoor unit; the smaller the inclination angle of the front side plate 109, the less the hot airflow entering through the air inlet 101, and the more the indoor hot airflow, which is conducive to improving the heating effect of the air conditioner indoor unit, but the high-temperature sterilization effect on the heat exchanger 13 is worse.

Since the inclination angle of the front side plate 109 ranges from 6 degrees to 14 degrees, the high-temperature sterilization effect on the heat exchanger 13 may be ensured without affecting the indoor heating effect.

In some embodiments, as shown in Fig. 29 to Fig. 30, the air duct 12 is an air duct 12 with a top air discharge, and the wall surface of the air duct 12 is provided with a protruding part 124.

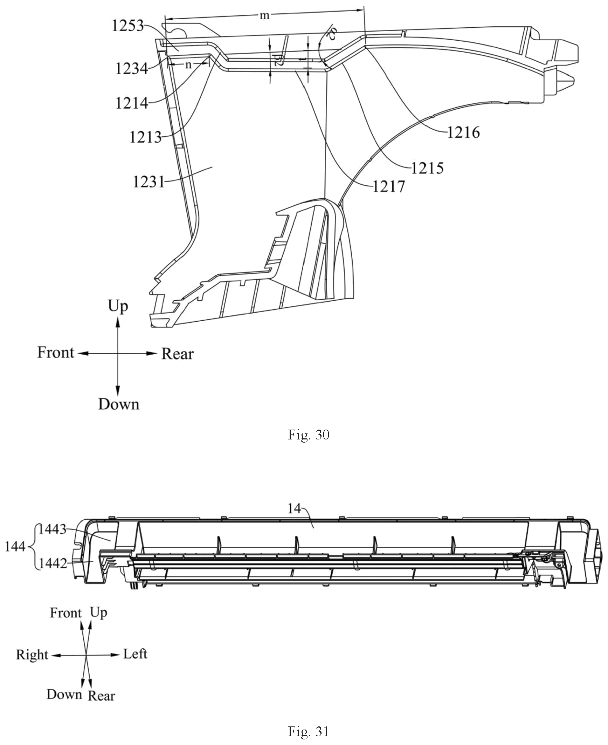

For example, the air duct 12 includes an air duct housing 123 and the protruding part 124. The air duct housing 123 has an air duct body 1231 extending in the front-rear direction and an air duct outlet 1234 in communication with the air duct body 1231. The air duct outlet 1234 is arranged on a front side of the air duct body 1231 and is in communication with the air outlet 102. The protruding part 124 is arranged at the air duct outlet 1234 and connected with the air duct housing 123. The up-down direction is shown in Fig. 29 to Fig. 30, and the front-rear direction is shown in Fig. 30.

In the air conditioner indoor unit according to this embodiment of the present disclosure, the protruding part 124 is arranged at the air duct outlet 1234 of the air duct body 1231, so that the flow cross-sectional area of the air duct outlet 1234 may be reduced, thereby addressing the problem of insufficient discharge airflow at the air duct outlet 1234, reducing the risk of airflow backflow at the air duct outlet 1234, and further reducing the noise generated by the air duct 12, that is, reducing the noise when the air conditioner indoor unit with the air duct body 1231 operates.

In some embodiments, as shown in Figs. 29 and 30, the protruding part 124 is arranged at an upper part of the air duct body 1231.

Experiments and studies have shown that the upper part of the air duct outlet 1234 of the air duct body 1231 is most prone to the problem of insufficient discharge airflow and tends to generate noise due to the airflow backflow.

By arranging the protruding part 124 at the upper part of the air duct body 1231, the problem of insufficient discharge airflow at the air duct outlet 1234 may be more effectively solved, thus reducing the noise of the air duct 12 more effectively.

In some embodiments, as shown in Fig. 29, the protruding part 124 is arranged on either side of the air duct body 1231 in the left-right direction.

Experiments and studies have shown that both sides of the air duct body 1231 in the left-direction are most prone to the problem of insufficient discharge airflow, and tend to generate noise due to the airflow backflow.

By arranging the protruding parts 124 on both sides of the air duct body 1231 in the left-right direction, the problem of insufficient discharge airflow at the air duct outlet 1234 may be more effectively solved, thus reducing the noise of the air duct 12 more effectively.

In some embodiments, as shown in Fig. 29, the protruding parts 124 arranged on both sides of the air duct body 1231 are symmetrically arranged in the left-right direction.

In some embodiments, as shown in Fig. 30, the protruding part 124 has a first end portion 1214 and a second end portion 1216 which are arranged opposite to each other in the front-rear direction, and the first end portion 1214 is arranged at a front side of the second end portion 1216. A distance between the first end portion 1214 and the air duct outlet 1234 is denoted as n, and a distance between the second end portion 1216 and the air duct outlet 1234 is denoted m, where m>n, 0≤n≤70mm, and 10mm≤m≤120mm.

For example, as shown in Fig. 30, a front opening of the air duct body 1231 is the air duct outlet 1234. A front end of the protruding part 124 is the first end portion 1214, and the distance between the front end of the protruding part 124 and the air duct outlet 1234 is greater than or equal to 0 and less than or equal to 70mm. A rear end of the protruding part 124 is the second end portion 1216, and the distance between the rear end of the protruding part 124 and the air duct outlet 1234 is greater than or equal to 10mm and less than or equal to 120 mm.

Since the distance between the first end portion 1214 and the air duct outlet 1234 is greater than or equal to 0 and less than or equal to 70mm, and the distance between the second end portion 1216 and the air duct outlet 1234 is greater than or equal to 10mm and less than or equal to 120mm, the problem of insufficient discharge airflow at the air duct outlet 1234 may be effectively solved, thereby more effectively reducing the noise generated by the air duct 12.

In some embodiments, a height of the protruding part 124 is greater than or equal to 2mm and less than or equal to 30 mm. In other words, as shown in Fig. 30, the height of the protruding part 124 is denoted as t, and 2mm≤t≤30mm.

It may be understood that the larger the height of the protruding part 124, the smaller the flow area of the air duct outlet 1234, and the greater the impact on the discharge air volume of the air duct outlet 1234, which is not conducive to improving the air volume of the air duct 12; the smaller the height of the protruding part 124, the larger the flow area of the air duct outlet 1234, which is not conducive to solving the problem of insufficient discharge airflow at the air duct outlet 1234, and noise still may be generated due to airflow backflow.

Since the height of the protruding part 124 is greater than or equal to 2mm and less than or equal to 30mm, the flow area of the air duct outlet 1234 will not be reduced too much, and the problem of insufficient discharge airflow at the air duct outlet 1234 may be solved while the discharge air volume at the air duct outlet 1234 may be ensured, so that the air conditioner indoor unit with the air duct 12 has a large discharge air volume and also has a low noise.

In some embodiments, as shown in Fig. 30, the air duct housing 123 includes a mounting wall 1235, and the protruding part 124 is connected with the mounting wall 1235. The protruding part 124 has a first surface 1213 and a second surface 1215 which are arranged opposite to each other in the front-rear direction, and the first surface 1213 is arranged at a front side of the second surface 1215. The first surface 1213 is arranged obliquely in a direction facing away from the mounting wall 1235 from front to rear, and/or the second surface 1215 is arranged obliquely in a direction facing the mounting wall 1235 from front to back.

In some embodiments, an included angle between the second surface 1215 and the mounting wall 1235 is greater than 0 degrees and less than 70 degrees. In other words, the included angle between the second surface 1215 and the mounting wall 1235 is denoted as α2, and 0 degree<α2<70 degrees.

Since the included angle between the second surface 1215 and the mounting wall 1235 is greater than 0 degree and less than 70 degrees, the flow resistance of the discharge airflow may be effectively reduced, the air volume loss of the air duct 12 may be reduced, and the discharge air volume of the air duct 12 may be improved.

In some embodiments, as shown in Fig. 30, the protruding part 124 further includes a connection surface 1217 arranged toward the air duct body 1231, and the connection surface 1217 is arranged between the first surface 1213 and the second surface 1215. The connection surface 1217 is gradually arranged obliquely in a direction facing away from the mounting wall 1235 from front to back.

In some embodiments, an included angle between the connection surface 1217 and the mounting wall 1235 is greater than or equal to 0 degree and less than 40 degrees. In other words, as shown in Fig. 30, the included angle between the connection surface 1217 and the mounting wall 1235 is denoted as β2, and 0 degree≤β2<40 degrees.

Since the included angle between the connection surface 1217 and the mounting wall 1235 is greater than or equal to 0 degree and less than 40 degrees, the flow resistance of the discharge airflow may be effectively reduced, the air volume loss of the air duct 12 may be reduced, and the discharge air volume of the air duct 12 may be improved.

In some embodiments, as shown in Fig. 30, the protruding part 124 is a hollow structure.

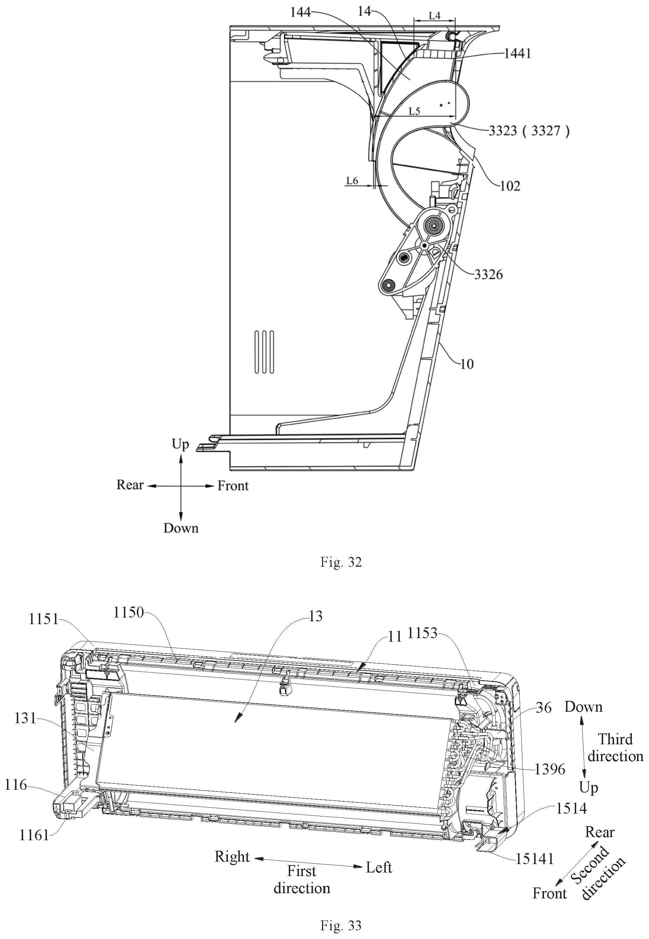

In some embodiments, as shown in Figs. 31 to 32, the air guiding frame 14 includes the recess 144 and an inlet/outlet opening 1441 in communication with the recess 144. The recess 144 is arranged on at least one side of the air guiding frame 14 in the left-right direction, and the inlet/outlet opening 1441 opens forward. The recess 144 is used to accommodate an output member 3327 of the driving mechanism 18, and the inlet/outlet opening 1441 allows the output member 3327 to pass through the recess 144. The left-right direction is shown in Fig. 31, and the front-rear direction is shown in Figs. 31 and 32.

When the air guiding frame 14 is used in the air conditioner indoor unit, the recess 144 of the air guiding frame 14 may accommodate the output member 3327 of the driving mechanism 18, and the output member 3327 may enter or exit the recess 144 in the front-rear direction through the inlet/outlet opening 1441, so that the air deflector 331 of the air conditioner indoor unit may be driven to rotate or move by the output member 3327. Thus, sufficient accommodation space is reserved for the output member 3327 inside the air conditioner indoor unit.

The output member 3327 may be the rocker arm 3323.

In some embodiments, as shown in Fig. 27, the recess 144 includes a first accommodating part 1442 and a second accommodating part 1443. The first accommodating part 1442 extends in the up-down direction for accommodating a fifth portion 33271 of the output member 3327. The second accommodating part 1443 extends in the left-right direction for accommodating a sixth portion 33272 of the output member 3327. The up-down direction is shown in Fig. 31 to Fig. 32.

The recess 144 includes the first accommodating part 1442 and the second accommodating part 1443, the first accommodating part 1442 extends in the up-down direction, and the second accommodating part 1443 extends in the left-right direction, so that the fifth portion 33271 and the sixth portion 33272 of the output member 3327 are accommodated by the first accommodating part 1442 and the second accommodating part 1443, respectively. According to the shapes and sizes of the fifth portion 33271 and the sixth portion 33272, the first accommodating part 1442 and the second accommodating part 1443 may be designed respectively, so that there is enough space to accommodate the output member 3327 with a small overall size of the recess 144, thus improving the structural strength of the air guiding frame 14.

In some embodiments, as shown in Fig. 31, the recess 144 is arranged on each of left and right sides of the air guiding frame 14.

Since the recesses 144 are arranged on the left and right sides of the air guiding frame 14 respectively, the output members 3327 located at the left and right sides of the air guiding frame 14 may be accommodated respectively.

In some embodiments, as shown in Fig. 31, the recesses 144 arranged on both sides of the air guiding frame 14 are symmetrically arranged in the left-right direction.

Since the recesses 144 on both sides of the air guiding frame 14 are symmetrically arranged in the left-right direction, it is convenient to process and manufacture the air guiding frame 14, which is conducive to reducing the cost of the air guiding frame 14.

In some embodiments, a minimum dimension of the recess 144 in the front-rear direction ranges from 16 mm to 26 mm. In other words, a minimum depth of the recess 144 ranges from 16 mm to 26 mm.

A maximum dimension of the recess 144 in the front-rear direction ranges from 52 mm to 78 mm. In other words, a maximum depth of the recess 144 ranges from 16 mm to 26 mm.

For example, as shown in Fig. 32, the minimum dimension of the recess 144 in the front-rear direction is denoted as L4, and L4 is 21 mm; and the maximum dimension of the recess 144 in the front-rear direction is denoted L5, and L5 is 66 mm.

Since the minimum dimension of the recess 144 in the front-rear direction ranges from 16 mm to 26 mm and the maximum dimension of the recess 144 in the front-rear direction ranges from 52 mm to 78 mm, the output member 3327 may be completely accommodated by the recess 144 with a small overall size of the recess 144, thus improving the structural strength of the air guiding frame 14.

In some embodiments, as shown in Fig. 27, the output member 3327 is movable between a first position and a second position. In the first position, the output member 3327 at least partially extends out of the recess 144. As shown in Fig. 32, in the second position, the output member 3327 is at least partially retracted into the recess 144.

It should be noted that the first position and the second position are only two limit positions of the output member 3327. During the operation of the air guiding assembly 33, the output member 3327 is not limited to the first position and the second position, but may also move to any position between the first position and the second position.

In some embodiments, in the second position, a minimum distance between the output member 3327 and a cavity wall of the recess 144 is greater than or equal to 3 mm.

For example, in the position shown in Fig. 32, the minimum distance between the output member 3327 and a rear cavity wall of the recess 144 is denoted L6, and L6 is greater than or equal to 3 mm.

That is, after the output member 3327 is retracted into the recess 144, there is no contact between the output member 3327 and the cavity wall of the recess 144. Therefore, the recess 144 may provide sufficient accommodation space for the output member 3327, and also the interference between the cavity wall of the recess 144 and the output member 3327 is avoided, thus improving the reliability of the air guiding assembly 33.

In some embodiments, as shown in Fig. 33, the base 11 includes a base body 1150 and a base extension part 116. The base extension part 116 is arranged on an end of the base body 1150 in the second direction, and the cross-flow fan 151 is mounted on the base body 1150. The cross-flow fan 151 and the base extension part 116 are located on the same end of the base body 1150 in the second direction, and the cross-flow fan 151 and the base extension part 116 are arranged at intervals in the first direction. The cross-flow fan 151 includes a cover 1514, and the cover 1514, the base extension part 116 and one end face of the base 1150 in the third direction jointly support the base 1150 when the base 1150 is erected in the third direction.

The base extension part 116 is formed by extending from a side of the base body 1150 in the second direction, and the base extension part 116 and the cover 1514 of the cross-flow fan 151 mounted on the base body 1150 are arranged at intervals in the first direction. In this case, the base extension part 116, the cover 1514 and one end face of the base body 1150 in the third direction may simultaneously abut against a workbench, so as to realize stable support for the base 11 erected in the third direction, thereby ensuring that a base body notch 1153 on the base body 1150 may be exposed, which effectively improves the mounting efficiency of the evaporator on the base body 1150.

Specifically, the base extension part 116 is arranged in front of the base body 1150, and the base extension part 116 and the cover 1514 of the cross-flow fan 151 are respectively adjacent to two ends of the base body 1150 in the left-right direction.

In some embodiments, the end face of the base body 1150 in the third direction includes a first end face 1151 and a second end face, and the cover 1514, the base extension part 116 and the second end face jointly support the base body 1150 when the base 11 is erected in the third direction.

In this case, the heat exchanger 13 may be moved from top to bottom, so that copper tubes of the heat exchanger 13 may be inserted into the base body notch 1153 from top to bottom to complete the tube threading operation, then the heat exchanger 13 may be moved to a set position on the base body 1150, and the heat exchanger 13 and the base body 1150 may be connected by fasteners, that is, the mounting of the heat exchanger 13 on the base body 1150 is realized. Thus, the mounting efficiency of the heat exchanger 13 is high.

Specifically, as shown in Fig. 33, the first end surface 1151 is a lower end surface of the base body 1150, and the base extension part 116 and the cover 1514 of the cross-flow fan 151 are arranged at an upper end surface of the base body 1150, that is, when the heat exchanger 13 is mounted, the base body 1150 is placed upside down on the workbench. The base extension part 116 has a third end face 1161 in the third direction, and the cover 1514 has a fourth end face 15141 in the third direction. The third end face 1161, the fourth end face 15141 and the second end face are coplanar.

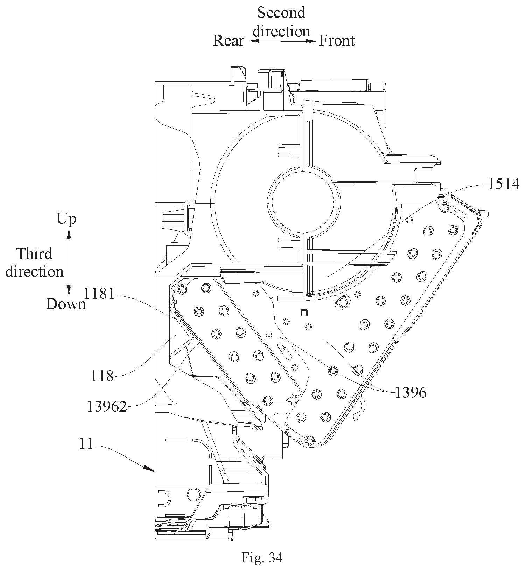

In some embodiments, as shown in Figs. 33-35, the heat exchanger 13 further includes a second bracket 1396. Both the heat exchanger bracket 131 and the second bracket 1396 are clamped with the base body 1150, and the heat exchanger bracket 131 is also connected with the base body 1150 through fasteners. A first end and a second end of the base body 1150 in the second direction are respectively provided with a first supporting part 117 and a bracket clamping part 119, and at least part of the heat exchanger bracket 131 is pressed between the first supporting part 117 and the bracket clamping part 119 in the second direction.

The first end of the base body 1150 along the second direction is further provided with a second supporting part 118, and the second supporting part 118 abuts against a side surface of the second bracket 1396 along the second direction. Since the second bracket 1396 is only clamped with a right end of the base body 1150, the connection strength between a right end of the heat exchanger 13 and the base body 1150 is lower than the connection strength between a left end of the heat exchanger 13 and the base body 1150. The second supporting part 118 is arranged to abut against a rear side surface of the second bracket 1396, so as to support the right end of the heat exchanger 13 in the front-rear direction, so that the heat exchanger 13 may be better prevented from shaking and deforming when subjected to an external force, and thus the heat exchanger 13 is mounted on the base body 1150 with high reliability.

Specifically, the second supporting part 118 has a third supporting surface 1181 parallel to the rear side surface of the heat exchanger 13. The second bracket 1396 includes a third folded edge 13962 protruding from a side of a first heat exchange part 1397 facing away from a second heat exchange part 1398, and the third folded edge 13962 abuts against the third supporting surface 1181. The base 11 is clamped with the second bracket 1396 through the cross-flow fan 151.

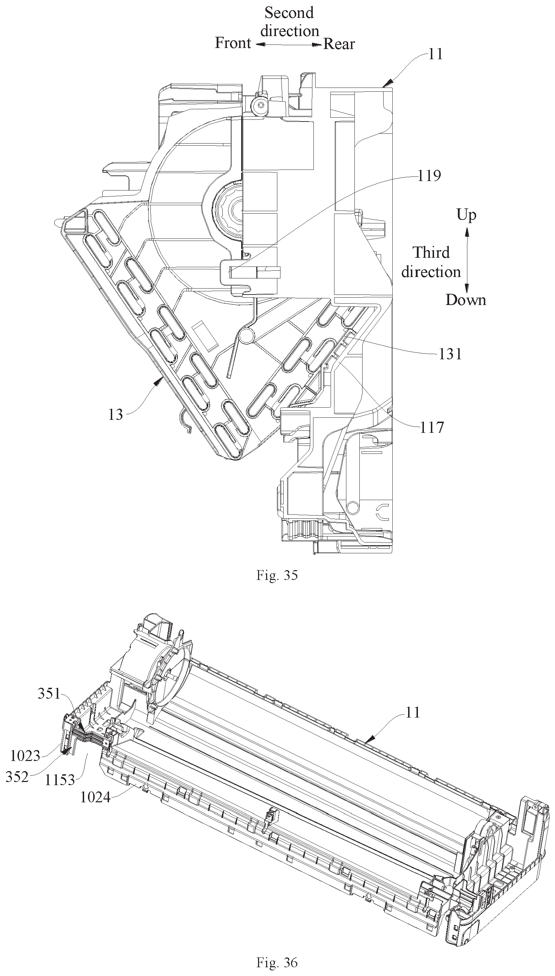

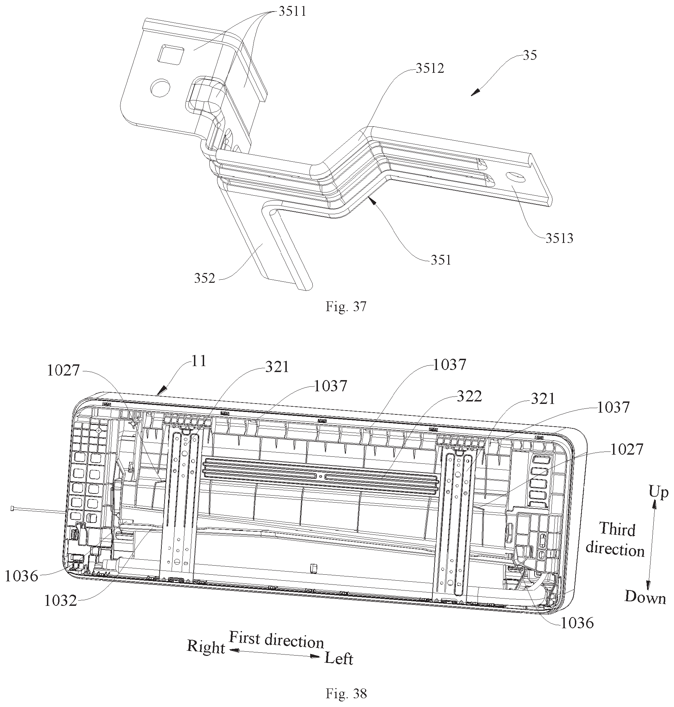

In some embodiments, as shown in Figs. 36 and 37, the air conditioner indoor unit further includes a bottom support 35, and the bottom support 35 includes a first reinforcing piece 351 and a second reinforcing piece 352. The base 11 includes a main section 1024 and a cantilever 1023 arranged at intervals along the first direction, and the base body notch 1153 for a pipeline to pass through is defined between the main section 1024 and the cantilever 1023. The first reinforcing piece 351 may be connected with the main section 1024 and the cantilever 1023. The second reinforcing member 352 is connected with the first reinforcing member 351 and extends in the second direction, and the second reinforcing member 352 is configured to abut against an opposite side surface of the cantilever 1023 in the first direction.

The first reinforcing piece 351 connects the main section 1024 of the base 11 with the cantilever 1023, and the second reinforcing piece 352 connected with the first reinforcing piece 351 extends in the second direction and abuts against the opposite side surface of the cantilever 1023 in the first direction. The main section 1024 supports the cantilever 1023 in the first direction through the first reinforcing piece 351 and the second reinforcing piece 352. The contact area between the bottom support 35 and the cantilever 1023 is further increased by the second reinforcing piece 352. When the base 11 falls to make the cantilever 1023 suffer from an impact from the ground, a support surface of the bottom support 35 for the cantilever 1023 in the first direction is wider, the stability of support for the cantilever 1023 is higher, and the cantilever 1023 is less likely to be broken under a larger impact force. At this time, a projected area of the first reinforcing piece 351 along the first direction and a projected area of the first reinforcing piece 351 along the second direction may be configured to be smaller, and the first reinforcing piece 351 is less disturbed by the pipelines when connected with the cantilever 1023 and the main section 1024, so that the first reinforcing piece 351 may be mounted on the base 11 conveniently and quickly.

It should be noted that both the cantilever 1023 and the main section 1024 are bottom plates closest to the ground of the base 11. The dimension of the cantilever 1023 in the first direction is much smaller than the dimension of the main section 1024 in the first direction. When the base 11 falls to the ground, the cantilever 1023 tends to be bent too much and hence damaged in the first direction under the impact from the ground. The sum of the dimensions of the first reinforcing piece 351 and the second reinforcing piece 352 in the second direction is slightly smaller than or equal to the dimension of the cantilever 1023 in the second direction, thereby effectively ensuring the stability of support for the cantilever 1023.

In some embodiments, as shown in Fig. 37, the first reinforcing piece 351 includes a first connecting portion 3511, a reinforcing portion 3512 and a second connecting portion 3513 which are connected in sequence. The first connecting portion 3511 is connected with the cantilever 1023, the second connecting portion 3513 is connected with the main section 1024, and the reinforcing portion 3512 is connected with the second reinforcing piece 352. The second reinforcing piece 352 is located in the base body notch 1153 and is connected with a side surface of the cantilever 1023 facing the main section 1024.

When the base 11 falls by mistake, a side surface of the cantilever 1023 facing away from the main section 1024 is more likely to collide with the ground first, and then the cantilever 1023 is more likely to be bent and broken toward the main section 1024. At this time, since the second reinforcing piece 352 abuts against the side surface of the cantilever 1023 facing the main section 1024, the second reinforcing piece 352 may better support the cantilever 1023 in the first direction, and thus the cantilever 1023 is less prone to fracture under impact. Moreover, the second reinforcing piece 352 is hidden in the base body notch 1153, thus effectively ensuring the aesthetic appearance of the base 11**.**

In some embodiments, as shown in Fig. 33, the air conditioner indoor unit further includes a pipeline pressing plate 36, the pipeline pressing plate 36 is connected with the base 11, and encloses and forms a pipeline channel, and the pipeline pressing plate 36 is located above and spaced apart from the bottom support 35.

The pipeline pressing plate 36 may restrain a connecting pipeline, so as to prevent the connecting pipeline from occupying too much space of the air conditioner indoor unit and affecting the operation reliability of other components. In addition, at this time, the pipeline pressing plate 36 does not need to completely close an opening of a through groove on the base 11, but only needs to achieve the constraint effect on the connecting pipeline, so that when the pipeline pressing plate 36 is connected to the base 11, the pipeline pressing plate 36 only needs to overcome a smaller reaction force from the connecting pipeline, thus reducing the difficulty of mounting the pipeline pressing plate 36 on the base 11.

Specifically, the pipeline pressing plate 36 is connected with the base 11 through at least two threaded members.

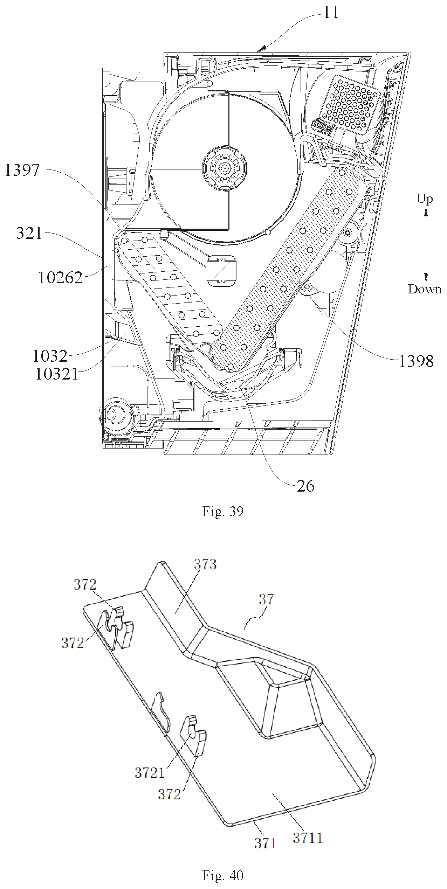

In some embodiments, as shown in Fig. 38 and Fig. 39, a second end of the base 11 in the second direction is connected with a wall mounting vertical plate 321, and an isolation cavity 10262 is defined between the wall mounting vertical plate 321 and the base 11. The base 11 is provided with a first water guiding rib 1027 on a surface of the second end of the base 11 in the second direction, and an extension direction of the first water guiding rib 1027 is at an acute angle with the first direction. A part of the first water guiding rib 1027 is located in the isolation cavity 10262, and a lower end of the first water guiding rib 1027 is located outside the isolation cavity 10262.

Since the first water guiding rib 1027 whose extension direction is at the acute angle with the first direction is arranged on the rear surface of the base 11, the part of the first water guiding rib 1027 is located in the isolation cavity 10262 formed between the wall mounting vertical plate 321 and the base 11, and the lower end of the first water guiding rib 1027 is located outside the isolation cavity 10262, when the condensed water in the isolation cavity 10262 flows downward along the rear surface of the base 11 under the action of gravity, the condensed water may be blocked by the first water guiding rib 1027, and flow out of the isolation cavity 10262 under the guidance of the first water guiding rib 1027, thus effectively preventing the condensed water from continuing to flow downward in the isolation cavity 10262. In this case, a width of a portion of the isolation cavity 10262 below the first water guiding rib 1027 may be designed to be smaller to meet the size requirements, and the water dripping caused by the contact between the condensed water and the wall-mounted vertical plate 321 may be avoided, thus improving the user experience.

In some embodiments, as shown in Fig. 38, an upper end of the first water guiding rib 1027 is located outside the isolation cavity 10262.

As a result, the first water guiding rib 1027 spans the wall mounting vertical plate 321, and the condensed water in a portion of the isolation cavity 10262 above the first water guiding rib 1027 may be completely blocked by the first water guiding rib 1027 when flowing down along the rear surface of the base 11, so that the probability of the condensed water entering the portion of the isolation cavity 10262 below the first water guiding rib 1027 is lower, thereby causing a lower probability of water dripping and a higher user experience.

Specifically, on a projection plane perpendicular to a height direction, a dimension in the first direction of a projection of the first water guiding rib 1027 is larger than a width of the wall mounting vertical plate 321. The included angle between the extension direction of the first water guiding rib 1027 and the first direction is denoted as α, where 10 degrees≤α≤45 degrees.

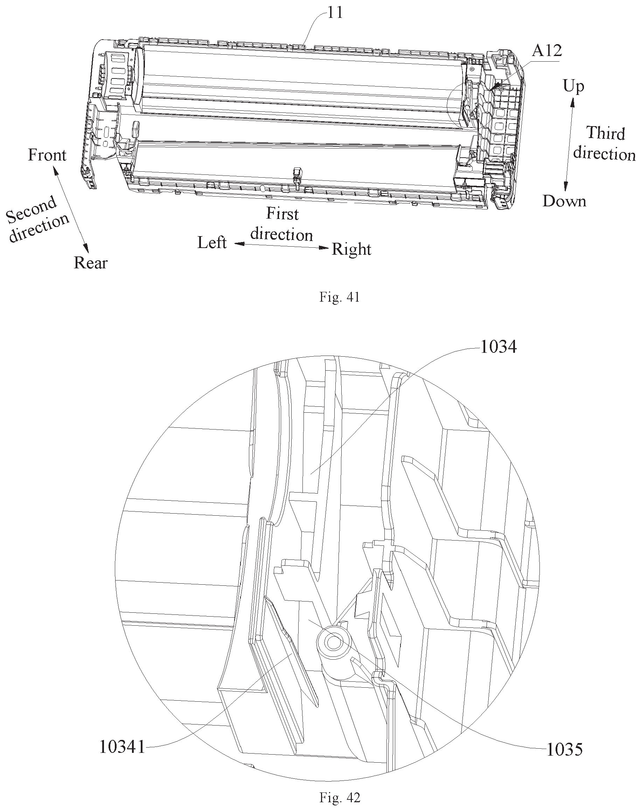

As shown in Figs. 41 and 42, a first end of the base 11 in the second direction has a bearing housing mounting groove 1034, an inner wall surface of the bearing housing mounting groove 1034 has a first drainage hole 1035 penetrating through the base 11 in the second direction, and the first drainage hole 1035 is used for guiding the condensed water in the bearing housing mounting groove 1034 to the second end of the base 11 in the second direction.

When the condensed water generated on the bearing housing mounted in the bearing housing mounting groove 1034 slides into the bearing housing mounting groove 1034, the condensed water may be guided to the first drainage hole 1035, then guided to the second end of the base 11 in the second direction by the first drainage hole 1035, and finally guided to the condensate pan 26 along the surface of the second end of the base 11 in the second direction, thus effectively preventing the condensed water in the bearing housing mounting groove 1034 from directly overflowing, which otherwise will cause water dripping of the air conditioner. Thus, the user experience is great.

It should be noted that a clamping piece is arranged in the bearing housing mounting groove 1034, and at least part of the bearing housing extends into the bearing housing mounting groove 1034 and is clamped with the clamping piece.

In some embodiments, as shown in Fig. 42, a water retaining rib 10341 is arranged on the inner wall surface of the bearing housing mounting groove 1034, which is opposite to an end face of the bearing housing. The water retaining rib 10341 is located at a side of the bearing housing facing the first drainage hole 1035 in the height direction, an extension direction of the water retaining rib 10341 is angled with respect to the height direction, and an end of the water retaining rib 10341 facing from the bearing housing in the height direction is joined with the first drainage hole 1035.

After at least part of the bearing housing is clamped with the clamping piece in the bearing housing mounting groove 1034, the bearing housing, the water retaining rib 10341 and the inner wall surface of the bearing housing mounting groove 1034 enclose and form a guide channel, and an extension direction of the guide channel is angled with respect to the height direction and the front-rear direction. An upper end of the guide channel is joined at a lower edge of the bearing housing, and a lower end of the guide channel is joined at the first drainage hole 1035, so that the condensed water may be better prevented from slipping out of the bearing housing mounting groove 1034 and may be guided to the first drainage hole more 1035 quickly.

Specifically, the inner wall surface of the bearing housing mounting groove 1034 opposite to the end surface of the bearing housing is a vertical surface, and the water retaining rib 10341 extends obliquely downward and rearward.

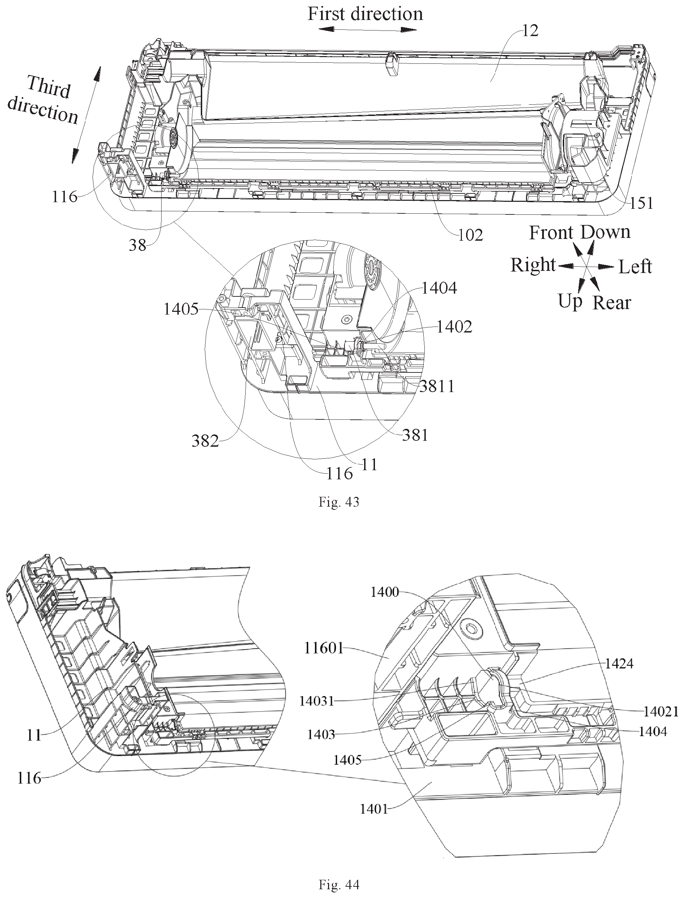

In some embodiments, as shown in Fig. 43, the base 11 is provided with a water receiving plate 1032 on the surface of the second end of the base 11 in the second direction. The water receiving plate 1032 and the base 11 enclose and form a water receiving groove 10321 with an upward opening. The base 11 has a second drainage hole 1036 communicating the water receiving groove 10321 with the condensate pan 26. The water receiving groove 10321 is located below the first drainage hole 1035 and may receive the condensed water from the first drainage hole 1035.

The water receiving groove 10321 enclosed and formed by a top surface of the water receiving plate 1032 and the rear surface of the base 11 extends to the left and right ends of the base 11 in the left-right direction, and the water receiving groove 10321 is used to receive all the condensed water from a rear end face of the base 11 and the first water guiding rib 1027. At this time, the condensed water guided out by the first drainage hole 1035 and the first water guiding rib 1027 also flows into the water receiving groove 10321, and flows to the condensate pan 26 through the second drainage hole 1036, so that there is no need to additionally provide a structure for guiding this part of condensed water to the condensate pan 26, and thus the drainage structure of the air conditioner is simple with a low manufacturing cost.

Specifically, the water receiving plate 1032 has a V-shaped plate structure with a downward opening, that is, a height of a center of the water receiving plate 1032 in the left-right direction is higher than heights of both ends of the water receiving plate 1032, and two second drainage holes 1036 are provided and located at both ends of the water receiving plate 1032 in the left-right direction.

In some embodiments, as shown in Fig. 38, the top surface of the base 11 has an accommodating groove with an upward opening, and an inner wall surface of the accommodating groove has a third drainage hole 1037 extending to the surface of the second end of the base 11 in the second direction. The water receiving groove 10321 is located below the third drainage hole 1037 and may receive the condensed water from the third drainage hole 1037.

The upper end of the base 11 is adjacent to the air duct, and thus has a low temperature, so that the condensed water tends to be generated on the top surface of the base 11. At this time, by arranging the accommodating groove on the top surface of the base 11, the condensed water may be effectively accumulated, and the phenomenon of water dripping caused by the random flow of the condensed water in a horizontal direction may be avoided. Moreover, by arranging the third drainage hole 1037 which is in communication with the accommodating groove and extends to the rear end face of the base 11, the condensed water in the accommodating groove may be guided to the rear end face of the base 11 by the third drainage hole 1037, and finally guided to the condensate pan 26 by a second water guiding assembly, so that the phenomenon of water dripping is effectively avoided, and also, it is avoided that the condensed water is accumulated in the accommodating groove and cannot be discharged.

Specifically, the third drainage hole 1037 is located at a lower edge of the opening of the accommodating groove and has a height equal to the lowest position of the accommodating groove, thereby effectively ensuring the complete discharge of the condensed water in the accommodating groove. A plurality of third drainage holes 1037 may be arranged at intervals along the first direction.

In some embodiments, as shown in Figs. 6 and 40, the air conditioner indoor unit further includes a water retaining piece 37, the water retaining piece 37 includes a main plate body 371, a first connecting plate 372 and a side baffle 373. The main plate body 371 has a guide surface 3711 for guiding the condensed water to the condensate pan 26. The first connecting plate 372 is arranged on the guide surface 3711 of the main plate body 371, and is configured to be connected with the heat exchanger 13 so that the main plate body 371 is located below the exposed copper tube of the heat exchanger 13. The side baffle 373 is arranged on the guide surface 3711 of the main plate body 371, parallel to the first connecting plate 372 and spaced apart from the first connecting plate 372 along the first direction, and located on an opposite side of the heat exchanger 13 along the first direction.

The main plate body 371 is mounted on the heat exchanger 13 through the first connecting plate 372, so that the guide surface 3711 is located below the exposed copper tube. After the condensed water on the exposed copper tube drips on the guide surface 3711, the condensed water will flow downward to the condensate pan 26 under the guidance of the guide surface 3711. Moreover, the side baffle 373 is arranged on the guide surface 3711 of the main plate body 371, and the side baffle 373 is located at the side of the heat exchanger 13. The side baffle 373 may effectively block the condensed water splashed from the heat exchanger 13 in the first direction and guide the condensed water to the condensate pan 26, thus effectively avoiding the influence of the condensed water on the air conditioner. The first connecting plate 372 and the side baffle 373 are parallel to each other, so that it is convenient for the first connecting plate 372 to be connected with the heat exchanger 13, and also part of the condensed water splashed from the heat exchanger 13 in the first direction may be blocked, thereby further improving the blocking effect on the condensed water.

It should be noted that the side baffle 373 is located at the side of the exposed copper tube of the heat exchanger 13, and on a projection plane perpendicular to the first direction, a projection of the exposed copper tube not located directly above the condensate pan 26 is located in a projection of the side baffle 373.

In some embodiments, as shown in Fig. 6, part of the main plate body 371 is recessed toward the exposed copper tube of the heat exchanger 13 relative to the rest of the main plate body 371, so as to form an avoidance groove 3712 on a side surface of the main plate body 371 facing away from the guide surface 3711.

Therefore, the main plate body 371 is ensured to have a guiding effect on the condensed water, and also, the interference between the main plate body 371 and other parts such as the cross-flow fan 151 is avoided, so that the air conditioner has a compact structure at the water retaining piece 37 and thus have a high space utilization rate.

Specifically, a contour of the avoidance groove 3712 matches an outer contour of the cross-flow fan 151. For example, the avoidance groove 3712 is a triangular groove matching a corner position of the cross-flow fan 151.

In some embodiments, as shown in Fig. 40, an end face of the first connecting plate 372 facing away from the main plate body 371 has a first clamping groove 3721, the first clamping groove 3721 penetrates through the first connecting plate 372 in the first direction, and the first connecting plate 372 is sleeved on the exposed copper tube of the heat exchanger 13 through the first clamping groove 3721.

Therefore, the first clamping groove 3721 directly faces the corresponding copper tube, and the copper tube may be clamped in the first clamping groove 3721 when the water retaining piece 37 is subject to a certain external force toward the copper tube, so that the water retaining piece 37 may be mounted on the heat exchanger 13, and the mounting of the water retaining piece 37 is simple and convenient.

Specifically, along a depth direction of the first clamping groove 3721, the first clamping groove 3721 has at least one constricted opening with a width smaller than a diameter of the copper tube, and the copper tube will press the first connecting plate 372 to deform to pass through the constricted opening during the process of clamping the copper tube into the first clamping groove 3721, thereby realizing the reliable clamping of the copper tube and the first connecting plate 372.

The air conditioner indoor unit according to this embodiment of the present disclosure further includes an ion generator 38, the air guiding frame 14 has a frame through hole 1423, a front end of the base 11 has the base extension part 116 extending forward, and the base extension part 116 is spaced apart from the air duct 12 and arranged adjacent to the air outlet 102. The ion generator 38 includes a probe 381 and a high-voltage pack 382, which are electrically connected with each other. The probe 381 is arranged on the base 11, and an emitting end 3811 of the probe extends into the air duct 12 through the frame through hole 1423. The high-voltage pack 382 is arranged on the base extension part 116, and the high-voltage pack 382 is electrically connected with the probe 381.

Specifically, as shown in Fig. 43 to Fig. 46, a rear end of the air guiding frame 14 is connected with the front end of the base 11, the frame through hole 1423 penetrates through the air guiding frame 14 in the left-right direction, and the frame through hole 1423 opens rearward. Since the probe 381 is arranged on the base 11, the air guiding frame 14 has the frame through hole 1423 which is fitted with the emitting end 211 of the probe, and the emitting end 3811 of the probe extends into the air duct 12 through the frame through hole 1423, so that only a mounting position of the probe 381 needs to be reserved on the air guiding frame 14 in the process of processing and/or assembling the air guiding frame 14 and the base 11. When the ion generator 38 needs to be mounted, the probe 381 may be mounted at a corresponding mounting position, so that the processing and/or assembling of the air guiding frame 14 and the base 11 are simple, and the processing and assembling of the air conditioner indoor unit are simple, thus reducing the cost.

In the manufacturing process of the air conditioner interior unit, the frame through hole 1423 which may be fitted with the emitting end 211 of the probe is reserved in the air guiding frame 14, and only the mold of the air guiding frame 14 needs to be adjusted, so as to form the frame through hole 1423 on the air guiding frame 14 by means of interchanging inserts with each other, thus reducing the complexity of the mold, eliminating the need for additional complex structural arrangements, and hence reducing the cost.

In some embodiments, the base extension part 116 has a high-voltage pack mounting groove 11601 penetrating through the base extension part 116 in the up-down direction. By mounting the high-voltage pack 382 in the high-voltage pack mounting groove 11601, and arranging the base extension part 116 adjacent to the air outlet 102, since the base extension part 116 protrudes forward from the base 11, the mounting position of the high-voltage pack 382 protrudes forward from the base 11, thus facilitating the mounting and maintenance of the high-voltage pack 382 and reducing the influence of the high-voltage pack 382 on other components.

Further, in this embodiment, the high-voltage pack 382 and the probe 381 are mounted on the base 11 at the same time, and the probe 381 and the high-voltage pack 382 are located on the same side in the up-down direction, so that a length of a connecting line between the probe 381 and the high-voltage pack 382 is shortened while avoiding the arrangement of the joint, which facilitates the direct electrical connection between the high-voltage pack 382 and the probe 381 and reduces the cost of the ion generator 38.

Further, by arranging the emitting end 3811 of the probe near the air outlet 102 and extending the emitting end 3811 of the probe into the air duct 12, positive ions and/or negative ions generated by the ion generator 38 may directly purify the air in the air duct 12 and adjacent to the air outlet 102, and the negative ions may directly diffuse into the room along with the air discharged from the air outlet 102, thus quickly covering the indoor space and improving the purification efficiency and effect of the ion generator 38.

In some embodiments, the base 11 has a mating plane 1424 orthogonal to the front-rear direction, and a peripheral surface of the probe 381 is tangent to the mating plane 1424.

Specifically, as shown in Fig. 43 to Fig. 46, a right front end face of the base extension part 116 is in connection and/or contact with a right rear end face of the air guiding frame 14. In this embodiment, the outer peripheral surface of the emitting end 3811 of the probe is above and tangent to the mating plane 1424 of the base 11, so that the emitting end 3811 of the probe extends into the air duct 12 through the frame through hole 1423 of the air guiding frame 14.

In some embodiments, the front end of the base 11 has a base clamping groove 1400, and a part of the probe 381 is fitted in the base clamping groove 1400. The probe 381 is mounted in the base clamping groove 1400, so that it is convenient to assemble the probe 381 with the base 11 and also to fix the probe 381, thus improving the stability of the probe 381.

In some embodiments, the base 11 includes a main base body 1401, a first mating part 1402 and a second mating part 1403. The first mating part 1402 and the second mating part 1403 are arranged at a front end of the main base body 1401 and are spaced apart in the front-rear direction to form the base clamping groove 1400. The probe 381 is mated with a rear side surface 14021 of the first mating part and a front side surface 14031 of the second mating part. The rear side surface 14021 of the first mating part is a forward convex arc surface, and the front side surface 14031 of the second mating part is a rearward concave arc surface.

Specifically, as shown in Fig. 43 to Fig. 46, the first mating part 1402 and the second mating part 1403 are spaced apart in the front-rear direction to form the base clamping groove 1400. By configuring the rear side surface 14021 of the first mating part as an arc surface protruding forward and the front side surface 14031 of the second mating part as an arc surface recessed rearward, it is convenient for the probe 381 to be fitted and mounted in the base clamping groove 1400. A front end of the probe 381 is limited by the first mating part 1402, and a rear end of the probe 381 is limited by the second mating part 1403, so that the connection reliability between the probe 381 and the base 11 is improved.

In some embodiments, the base 11 further includes a first limiting part 1404 and a second limiting part 1405, which are arranged at intervals in the left-right direction, and at least part of the probe 381 is fitted between the first limiting part 1404 and the second limiting part 1405. By limiting the probe 381 through the first limiting part 1404 and the second limiting part 1405, the probe 381 is prevented from moving in the left-right direction, and thus the stability is improved.

In some embodiments, as shown in Fig. 43, the air conditioner indoor unit further includes the cross-flow fan 151, the cross-flow fan 151 is mounted on a left side of the base 11, and the high-voltage pack 382 and the probe 381 are mounted on a right side of the base 11. By arranging the high-voltage pack 382 and the cross-flow fan 151 on both sides of the air conditioner indoor unit, the separation distance between the high-voltage pack 382 and the cross-flow fan 151 is increased, the electrostatic accumulation on the cross-flow fan 151 is reduced, and the service life of the cross-flow fan 151 is improved.

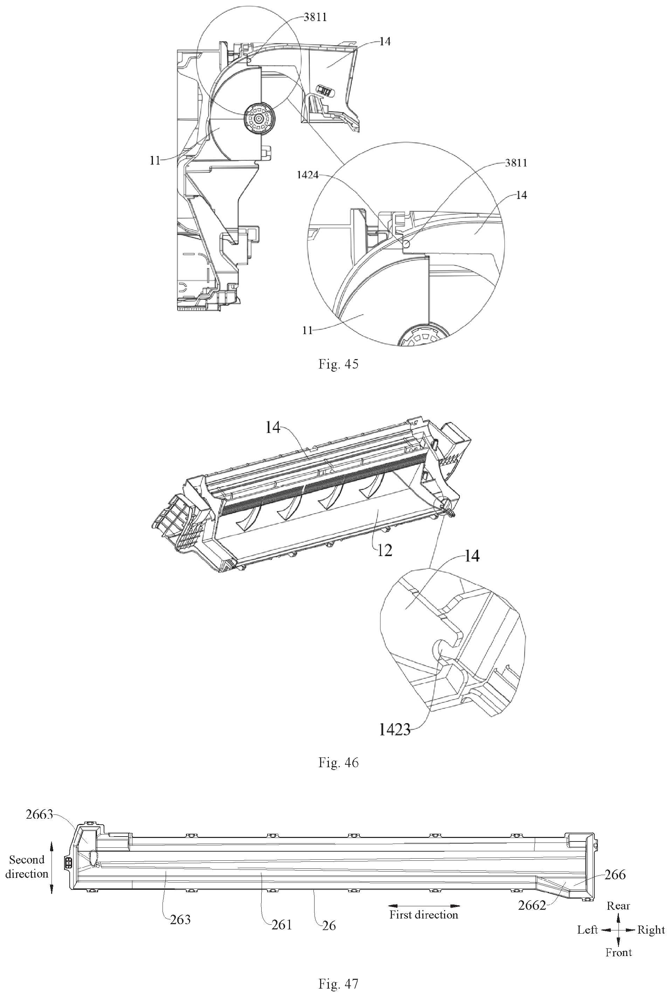

The condensate pan 26 of this embodiment of the present disclosure has a condensate-pan water receiving groove 261 extending in the first direction (the left-right direction as shown in Fig. 47), and the condensate pan 26 includes a first layer 262, a third layer 265 and a second layer 263 arranged in sequence in the up-down direction. A surface of the first layer 262 facing away from the second layer 263 forms a bottom surface of the condensate pan 26, and a surface of the second layer 263 facing from the first layer 262 at least partially forms a wall surface of the condensate-pan water receiving groove 261. An outer edge of the first layer 262 in the second direction (the front-rear direction as shown in Fig. 47) is clamped with an outer edge of the second layer 263 in the front-rear direction.

Specifically, as shown in Fig. 47 to Fig. 49, the first layer 262 is located below the second layer 263, and in the condensate pan of this embodiment of the present disclosure, the front outer edge of the first layer 262 is clamped with the front outer edge of the second layer 263, and the rear outer edge of the first layer 262 is clamped with the rear outer edge of the second layer 263, so as to realize rapid assembling of the first layer 262 and the second layer 263. Through the connection of the first layer 262 and the second layer 263, the lower surface of the first layer 262 forms the outer wall surface of the condensate pan 26, and the upper surface of the second layer 263 forms the inner wall surface of the condensate pan 26, which simplifies the assembling structure of the condensate pan 26 and also reduces the manufacturing cost of the condensate pan 26.

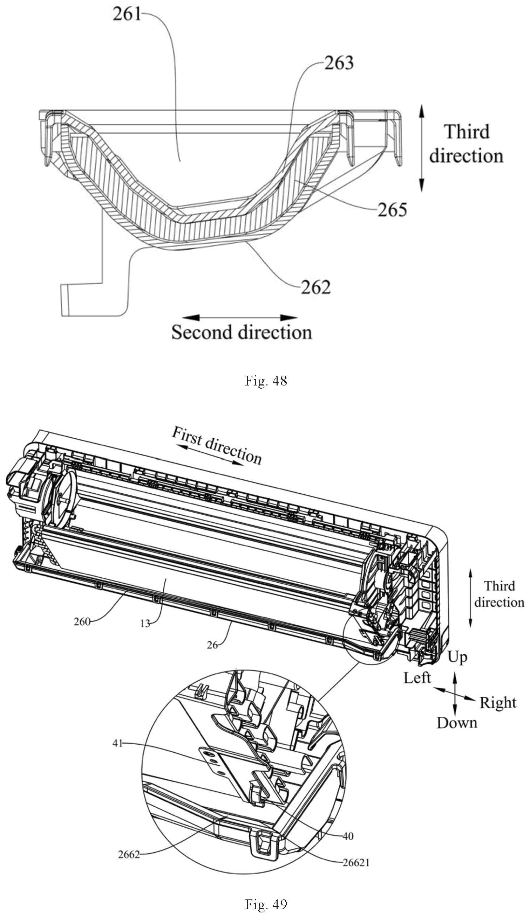

As shown in Fig. 48, the third layer 265 is a thermal insulation layer. By arranging the thermal insulation layer between the first layer 262 and the second layer 263, the condensed water in the condensate pan 26 is prevented from directly contacting with the outside air, so as to avoid the phenomenon that the temperature difference increases to produce condensed water, and the thermal insulation effect is better.

Compared with the arrangement of the peripheral wall surface of the condensate-pan water receiving groove 261 formed by coating a film on the thermal insulation layer in the related art, coating the film on the thermal insulation layer requires a very large thickness of the thermal insulation layer, and the increase of the thickness of the thermal insulation layer will increase a width of the condensate pan 26, thus affecting an air intake area of the air conditioner indoor unit. In this embodiment, the thermal insulation layer is arranged between the first layer 262 and the second layer 263, and the first layer 262 and the second layer 263 are clamped, so that the width of the condensate pan 26 may be reduced, thus increasing the air intake area of the air conditioner indoor unit.

Further, in this embodiment, a drain nozzle is arranged on the first layer 262 of the condensate pan 26, thus facilitating the mounting of the thermal insulation layer.

In some embodiments, the condensate pan 26 includes a pan body 260 and a first pan extension part 2662. The pan body 260 includes the condensate-pan water receiving groove 261 extending along the first direction (the left-right direction as shown in Fig. 47), and the condensate-pan water receiving groove 261 is used for receiving the condensed water on the heat exchanger 13. The first pan extension part 2662 is arranged at at least one end of the pan body 260 in the first direction, the first pan extension part 2662 has a first extension groove 26621 extending along a width direction of the pan body 260 (the front-rear direction as shown in Fig. 47), and the first extension groove 26621 is used for receiving the condensed water on the grounding wire and a wire clamping assembly 40 on the heat exchanger bracket.

The left end of the heat exchanger 13 is provided with a pipeline extending out of the heat exchanger 13, and the right end of the heat exchanger 13 is provided with a grounding sheet 41 and the wire clamping assembly 40. The grounding sheet 41 is provided with the grounding wire, and the grounding wire passes through the wire clamping assembly 40 and is connected with an electric control box. The wire clamping assembly 40 and the grounding wire passing through the wire clamping assembly 40 protrude forward from the surface of the heat exchanger 13. The condensate pan 26 is used to receive the condensed water on the surface of the heat exchanger 13, the condensed water on the pipeline extending from the end of the heat exchanger 13, and the condensed water on the grounding wire and the wire clamping assembly 40 during the operation of the heat exchanger 13, so as to prevent the condensed water from damaging other parts of the air conditioner indoor unit and preventing the condensed water from flowing out through the air outlet.

According to embodiments of the present disclosure, the first pan extension part 2662 extending forward is arranged on a right end of the pan body 260, the first extension groove 26621 is in communication with the condensate-pan water receiving groove 261, and the first pan extension part 2662 is arranged below the wire clamping assembly 40 and the grounding wire at a front side of the right end of the heat exchanger 13, so that the first extension groove 26621 may directly receive the condensed water on the wire clamping assembly 40 and the grounding wire, and guide the condensed water received by the first extension groove 26621 to the condensate-pan water receiving groove 261, thus improving the water receiving reliability.

In some embodiments, as shown in Fig. 47, the pan extension 266 further includes a second pan extension 2663. The first pan extension part 2662 is located at a front side of the right end of the pan body 260 and extends forward, so that the first pan extension part 2662 is located below the wire clamping assembly 40 and the grounding wire, and thus it is convenient for the first pan extension part 2662 to directly receive the condensed water on the pipeline extending from the left end of the heat exchanger 13. The second pan extension 2663 is located at a rear side of a left end of the pan body 260 and extends rearward, so that the second pan extension 2663 is located below the pipeline extending from the end of the heat exchanger 13, and thus it is convenient for the second pan extension 2663 to directly receive the condensed water on the pipeline extending from the left end of the heat exchanger 13. Since the extension directions of the first pan extension part 2662 and the second pan extension 2663 are opposite, it is convenient for the first pan extension part 2662 to directly receive the condensed water on the wire clamping assembly 40 and the grounding wire and the second pan extension 2663 to directly receive the condensed water on the pipeline extending from the left end of the heat exchanger 13, thus improving the water receiving reliability of the condensate pan 26.

The air conditioner indoor unit according to embodiments of the present disclosure further includes a water guiding assembly 42, and the inner wall surface of the air duct 12 includes a first wall surface 1103 and a second wall surface 1104. The heat exchanger 13 is arranged in the air duct, and has a first end 14004 and a second end 14005. The first end 14004 of the heat exchanger is opposite to the first wall surface 1103, and the second end 14005 of the heat exchanger is opposite to the second wall surface 1104. The water guiding assembly 42 includes a first water guiding strip 421 and a second water guiding strip 423. The first water guiding strip 421 is arranged on the first wall surface 1103, and a free end of the first water guiding strip 421 abuts against a lower side of the first end 14004 of the heat exchanger. The second water guiding strip 423 is arranged on the second wall surface 1104, and a free end of the second water guiding strip 423 abuts against at least a lower side of the second end 14005 of the heat exchanger.

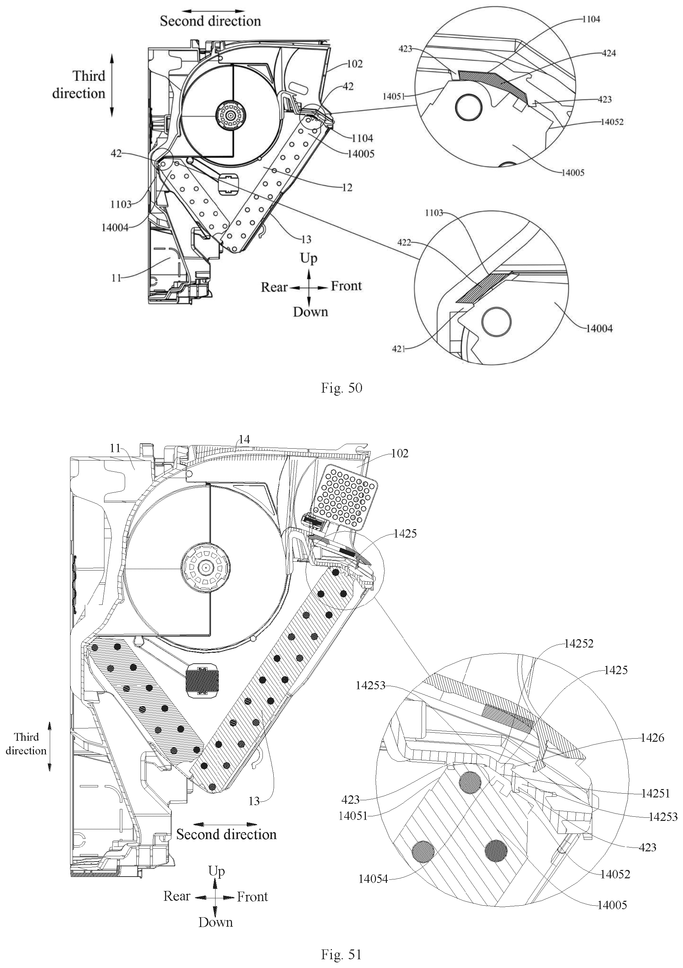

As shown in Fig. 50, the first end 14004 of the heat exchanger is a rear end of the heat exchanger 13, the second end 14005 of the heat exchanger is a front end of the heat exchanger 13, the first wall surface 1103 is located at a rear side of the second wall surface 1104, the rear end of the heat exchanger 13 is arranged opposite to the first wall surface 1103 located at the rear side and the front end of the heat exchanger 13 is arranged opposite to the second wall surface 1104 located at the front side.

One end of the first water guiding strip 421 is connected with the first wall surface 1103, and the other end of the first water guiding strip 421, that is, the free end of the first water guiding strip 421, abuts against the lower side of the first end 14004 of the heat exchanger, and interrupts the flow path of the condensed water on the first wall surface 1103. Since the first water guiding strip 421 abuts against the lower side of the heat exchanger 13, the condensed water on the first wall surface 1103 may flow toward the heat exchanger 13 along the extension direction of the first water guiding strip 421, and flow into the condensate pan 26 along the heat exchanger 13, thus realizing the guide of the condensed water on the first wall surface 1103.

As shown in Fig. 50, the second end 14005 of the heat exchanger is arranged opposite to the second wall surface 1104, one end of the second water guiding strip 423 is connected with the second wall surface 1104, and the other end of the second water guiding strip 423, that is, the free end of the second water guiding strip 423, abuts against the second end 14005 of the heat exchanger. Through the arrangement of the second water guiding strip 423, the flow path of the condensed water on the second wall surface 1104 may be interrupted. Since the free end of the second water guiding strip 423 abuts against at least the lower side of the second end 14005 of the heat exchanger, the second water guiding strip 423 may guide the condensed water on the second wall surface 1104 to the heat exchanger 13, thus avoiding the outflow of the condensed water on the second wall surface 1104 and improving the user experience.

In this embodiment, the first end 14004 of the heat exchanger is arranged opposite to the first wall surface 1103 of the air duct 12, the second end 14005 of the heat exchanger is arranged opposite to the second wall surface 1104, and the first water guiding strip 421 abuts against the lower side of the heat exchanger 13, so that the condensed water on the first wall surface 1103 may flow toward the heat exchanger 13 along the extension direction of the first water guiding strip 421. Through the arrangement of the second water guiding strip 423, the second water guiding strip 423 may guide the condensed water on the second wall surface 1104 to the heat exchanger 13, avoiding water leakage of the air conditioner indoor unit caused by the downward flow of the condensed water on the first wall surface 1103 and the second wall surface 1104, realizing the guide of the condensed water on the first wall surface 1103 and the second wall surface 1104, and improving the user experience.

Further, through the arrangement of the first water guiding strip 421 and the second water guiding strip 423 in this embodiment, positions of a first water absorption member 422 and a second water absorption member 424 may be limited, an arrangement position of the first water absorption member 422 may be standardized, and the uniformity of the arrangement position of the first water absorption member 422 may be improved.

In some embodiments, as shown in Fig. 50, at least two second water guiding strips 423 are arranged, and the two second water guiding strips 423 are arranged at intervals in the front-rear direction. The upper end of the second water guiding strips 423 at the front side is connected with the second wall surface 1104, and the lower end of the second water guiding strip 423 at the front side abuts against the lower side of the second end 14005 of the heat exchanger. The upper end of the second water guiding strip 423 located at the rear side is connected with the second wall surface 1104, and the lower end of the second water guiding strip 423 located at the rear side abuts against the upper side of the second end 14005 of the heat exchanger. Through the arrangement of the two second water guiding strips 423, the flow path of the condensed water on the second wall surface 1104 is blocked from the front and rear sides, so that the condensed water on the second wall surface 1104 is prevented from flowing down along the second wall surface 1104, and the guiding effect of the second water guiding strip 423 is ensured, thereby improving the user experience.

In some embodiments, the second end 14005 of the heat exchanger has an upper side surface 14051 and a lower side surface14052, and at least two second water guiding strips 423 are located between the upper side surface and the lower side surface of the second end of the heat exchanger 13. In this embodiment, the second water guiding strip 423 is arranged between the upper side surface 14051 of the second end of the heat exchanger and the lower side surface 14052 of the second end of the heat exchanger, so that it is convenient for the second water guiding strip 423 to guide the condensed water on the second wall surface 1104 to the heat exchanger 13, thus improving the guiding effect.

As shown in Fig. 51, the air guiding frame 14 of this embodiment of the present disclosure has a frame mating part 1425 opposite to an end of the heat exchanger 13 of the air conditioner indoor unit. The frame mating part 1425 has a first side surface 14251 and a second side surface 14252 arranged opposite to each other in the third direction (the up-down direction as shown in Fig. 51). The first side surface 14251 is adjacent to and opposite to the end of the heat exchanger 13. The frame mating part 1425 has a drainage slot 14253. The drainage slot 14253 penetrates through the air guiding frame 14 along the third direction, and is configured to guide the condensed water on the air guiding frame 14 onto the heat exchanger 13 via the drainage slot 14253.

Specifically, as shown in Fig. 51, the lower end of the air guiding frame 14 is opposite to the front end of the heat exchanger 13, and the frame mating part 1425 of the air guiding frame 14 refers to a portion abutting against the front end of the heat exchanger 13. The frame mating part 1425 is plate-shaped, and has the first side surface 14251 and the second side surface 14252 in the up-down direction, and the second side surface 14252 is located above the first side surface 14251. The frame mating part 1425 includes the drainage slot 14253 that penetrates through the frame mating part 1425 in the up-down direction.

In the air guiding frame 14 of this embodiment of the present disclosure, the drainage slot 14253 is formed in the frame mating part 1425 of the air guiding frame 14, and penetrates through the frame mating part 1425 along a thickness direction of the air guiding frame 14, the frame mating part 1425 is opposite to the end of the heat exchanger 13, and the drainage slot 14253 communicates the heat exchanger 13 with the air guiding frame 14, so that the condensed water on the air guiding frame 14 may flow to the heat exchanger 13 through the drainage slot 14253 and flow downward to the condensate pan along the heat exchanger 13, and thus it is convenient to discharge the condensed water on the air guiding frame 14, thereby improving the safety and reliability of the air conditioner indoor unit and improving the user experience.

Further, in this embodiment, through the arrangement of the drainage slot 14253 on the frame mating part 1425 of the air guiding frame 14, it is convenient to guide the condensed water on the air guiding frame 14 to the heat exchanger 13 through the drainage slot 14253, so as to avoid the influence of the condensed water of the air guiding frame 14 on other components of the air conditioner indoor unit, and further avoid the problems of electric leakage and short circuit of the air conditioner indoor unit.

In some embodiments, as shown in Fig. 51, the second side surface 14252 is provided with a frame reinforcing rib 1426 extending along a length direction of the air guiding frame 14, and the drainage slot 14253 is located at at least one side of the frame reinforcing rib 1426 in a width direction of the air guiding frame 14. The second side surface 14252 is located above the first side surface 14251, and the frame reinforcing rib 1426 is arranged on the second side surface 14252, so that the structural strength of the frame mating part 1425 is improved, thereby improving the structural strength of the air guiding frame 14.

In some embodiments, one end of the heat exchanger 13 has a recessed portion 14054, and the drainage slot 14253 is arranged in a region of the air guiding frame 14 opposite to the recessed portion 14054. Since the drainage slot 14253 and the recessed portion 14054 are arranged opposite to each other in the up-down direction, and the condensed water first enters the recessed portion 14054 and then enters the heat exchanger 13 through the recessed portion 14054, so as to prevent the condensed water from flowing downward along the outer surface of the heat exchanger 13, thereby preventing the condensed water from dripping from the air inlet of the air conditioner indoor unit, and improving the user experience.

In some embodiments, the drainage slot 14253 has a first limit position and a second limit position in the width direction of the air guiding frame 14. The first limit position is the position of one second water guiding strip 423 on the frame mating part 1425, and the second limit position is the position of the other second water guiding strip 423 on the frame mating part 1425.

Specifically, as shown in Fig. 51, at least part of the drainage slot 14253 is arranged between the front side surface of the second water guiding strip 423 at the front side and the rear side surface of the second water guiding strip 423 at the rear side, and the drainage slot 14253 may be arranged between the two second water guiding strips 423, or at least part of the drainage slot 14253 penetrates through the second water guiding strip 423 at the front side, or at least part of the drainage slot 14253 penetrates through the second water guiding strip 423 at the rear side.

In this embodiment, the limit positions of the drainage slot 14253 in the front-rear direction is limited by two second water guiding strips 423, so that the condensed water on the air guiding frame 14 is guided through the drainage slot 14253, a part of the condensed water directly flows to the heat exchanger 13, and another part of the condensed water is guided to the heat exchanger 13 through the second water guiding strips 423. Thus, the condensed water is prevented from flowing down along the first side surface 14251, and the guiding effect of the condensed water on the air guiding frame 14 is improved.

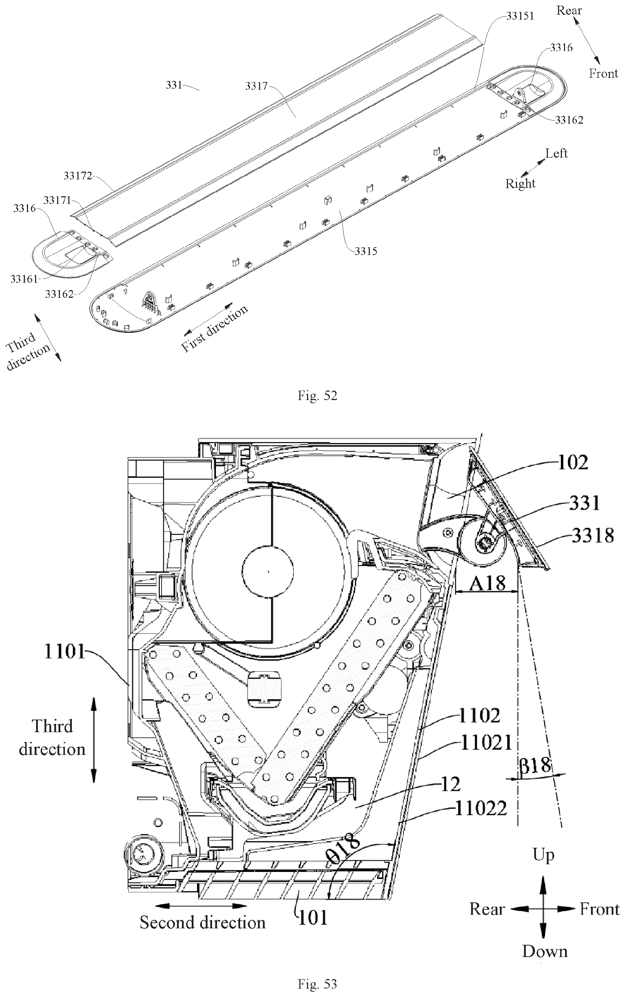

As shown in Fig. 52, the air deflector 331 of this embodiment of the present disclosure includes an outer air deflector 3315, a cover plate 3316 and an inner lining plate 3317. The cover plate 3316 is arranged at at least one end of the outer air deflector 3315 in a length direction of the outer air deflector 3315 (the left-right direction as shown in Fig. 52), and the cover plate 3316 is located on a side of the outer air deflector 3315 in a thickness direction of the outer air deflector 3315 (the front-rear direction as shown in Fig. 52). The inner lining plate 3317 is arranged on the outer air deflector 3315, and the inner lining plate 3317 and the cover plate 3316 are located on the same side of the outer air deflector 3315 in the thickness direction of the outer air deflector 3315. The inner lining plate 3317 and the cover plate 3316 are arranged in sequence and clamped with each other in the length direction of the outer air deflector 3315.

Specifically, the cover plate 3316 is arranged on a rear side of the outer air deflector 3315, and the inner lining plate 3317 is also arranged on the rear side of the outer air deflector 3315. When the air deflector 331 closes the air outlet of the air conditioner indoor unit, the cover plate 3316 and the inner lining plate 3317 are arranged toward the air conditioner indoor unit. When the air deflector 331 opens the air outlet of the air conditioner indoor unit, the airflow at the air outlet is guided through the cover plate 3316 and the inner lining plate 3317 of the air deflector 331.

In the air deflector 331 of this embodiment of the present disclosure, the cover plate 3316 is arranged at either end of the outer air deflector 3315, the inner lining plate 3317 and the cover plate 3316 are arranged on the same side of the outer air deflector 3315 in the thickness direction of the outer air deflector 3315, and the inner lining plate 3317 and the cover plate 3316 are arranged in sequence and clamped with each other along the left-right direction, so that the inner lining plate 3317 and the two cover plates 3316 form an integrated structure, thus improving the connection strength between the inner lining plate 3317 and the cover plate 3316, avoiding the bending of the air deflector 331 caused by the separation of the inner lining plate 3317 and the cover plate 3316 when the end of the air deflector 331 is subjected to a bending moment, improving the structural strength of the air deflector 331, further ensuring the smooth air flow at the air outlet of the air conditioner indoor unit, and improving the user experience.

In some embodiments, the cover plate 3316 has a plate extension 33162 extending toward the inner lining plate 3317, and a side surface of the plate extension 33162 facing away from the outer air deflector 3315 is more adjacent to the outer air deflector 3315 than a side surface of the cover plate 3316 facing away from the outer air deflector 3315, and a first plate clamping part 33161 is arranged on the plate extension 33162.

In this embodiment, the first plate clamping part 33161 is arranged on the plate extension 33162, and a rear side surface of the plate extension 33162 is more adjacent to the outer air deflector 3315 than the rear side surface of the cover plate 3316, so that when a second plate clamping part 33171 on the inner lining plate 3317 is clamped with the first plate clamping part 33161, a rear side surface of the inner lining plate 3317 is flush with the rear side surface of the cover plate 3316, and thus it is convenient for the inner lining plate 3317 and the cover plate 3316 to guide the airflow at the air outlet.

In some embodiments, as shown in Fig. 52, a side surface of the inner lining plate 3317 facing the outer air deflector 3315 is provided with a third plate clamping part 33172, a side surface of the outer air deflector 3315 facing the inner lining plate 3317 is provided with a fourth plate clamping part 33151, and the third plate clamping part 33172 is clamped with the fourth plate clamping part 33151. The third plate clamping part 33172 is arranged on a front side surface of the inner lining plate 3317 and the fourth plate clamping part 33151 is arranged on a rear side surface of the outer air deflector 3315, so that the inner lining plate 3317 and the outer air deflector 3315 form an integrated structure by the clamping connection therebetween, thus preventing the inner lining plate 3317 from being separated from the outer air deflector 3315 when the air deflector 331 is subjected to a bending moment, improving the connection stability of the inner lining plate 3317 and the outer air deflector 3315, and further improving the structural strength of the air deflector 331.

Further, for the inner lining plate 3317 of this embodiment, the third plate clamping part 33172 may be clamped and connected with the fourth plate clamping part 33151 on the outer air deflector 3315, and the second plate clamping part 33171 on the inner lining plate 3317 may be clamped and connected with the first plate clamping part 33161 on the cover plate 3316, so that the inner lining plate 3317 is clamped and connected with the outer air deflector 3315 and the cover plate 3316 at the same time, thus effectively avoiding the forward or rearward bending of the air deflector 331, improving the air guiding performance of the air deflector 331, making the air flow at the air outlet smoother, and further reducing the energy consumption and noise of the air conditioner indoor unit.

As shown in Fig. 16, the frame 10 of this embodiment of the present disclosure includes a frame body 1101 and a front panel 1102, and the front panel 1102 is arranged at a front end of the frame body 1101 and below the air outlet 102. The front panel extends from top to bottom and is obliquely arranged rearward, and an included angle α18 between the front panel 1102 and a vertical plane ranges from 6 degrees to 14 degrees.

Specifically, as shown in Fig. 53, a front side surface 11021 of the front panel forms a front end face of the frame 10, and extends from top to bottom and is obliquely arranged rearward, so that an upper end of the front side surface 11021 of the front panel is located at a front side of a lower end of the front side surface 11021 of the front panel.

For the arrangement in the related art that the front side surface 11021 of the front panel extends in the up-down direction and is parallel to the vertical plane or the front side surface 11021 of the front panel extends from top to bottom and is obliquely arranged forward, when the airflow at the air outlet 102 flows downward along the front side surface 11021 of the front panel, a part of the airflow tends to flow back to the air inlet 101, and another part of the airflow tends to flow upward, rather than flowing downward, so that it is difficult to realize the landing of the airflow.

For the frame 10 of this embodiment of the present disclosure, the front side surface 11021 of the front panel extends from top to bottom and is obliquely arranged rearward, so that the lower end of the front side surface 11021 of the front panel is located at a rear side of the upper end of the front side surface 11021 of the front panel, the air outlet 102 opens forward and is located above the front panel 1102, and the airflow flowing out of the air outlet 102 will flow downward along an extension direction of the front panel 1102. Since the front side surface 11021 of the front panel is obliquely arranged rearward, the front side surface 11021 of the front panel guides the airflow to flow obliquely downward along the front side surface 11021 of the front panel. The farther the airflow flows downward, the more rearward the distance from the front side surface 11021 of the front panel to the vertical plane becomes, and the more easily the airflow may flow downward to reach the ground, thus increasing the flowing distance of the airflow on the ground.

Further, a rear side surface 11022 of the front panel extends from top to bottom and is obliquely arranged rearward, the rear side surface 11022 of the front panel is arranged in parallel with the front side surface 11021 of the front panel, and an included angle θ18 between the rear side surface 11022 of the front panel and a direction of the air inlet 101 ranges from 90 degrees to 150 degrees. In this embodiment, by defining the included angle between the front side surface 11021 of the front panel and the vertical plane and the included angle between the rear side surface 11022 of the front panel and the direction of the air inlet 101, it is avoided that the included angle between the front side surface 11021 of the front panel and the vertical plane is too large so that it is difficult for the airflow to flow downward along the front side surface 11021 of the front panel, and also, it is avoided that the included angle between the front side surface 11021 of the front panel and the vertical plane is too small so that there is no guiding effect, thus ensuring that the front side surface 11021 of the front panel may better guide the airflow flowing out of the air outlet 102 to flow downward, and also reducing the area of the air duct 12 occupied by the rear side surface 11022 of the front panel and increasing the area of the air duct 12.

In some embodiments, the air deflector 331 is rotatably connected with the frame body 1101 to open or close the air outlet 102. When the air deflector 331 closes the air outlet 102, the front side surface 3318 of the air deflector extends from top to bottom and is obliquely arranged rearward, so that the upper end of the front side surface 3318 of the air deflector is located at the front side of the lower end of the front side surface 3318 of the air deflector, thus facilitating the flow of air.

In some embodiments, the air deflector 331 extends from top to bottom and is obliquely arranged rearward, so that the upper end of the air deflector 331 is located at the front side of the lower end of the air deflector 331, and thus it is convenient to adjust an air discharge angle of the airflow blown out of the air outlet 102, thereby improving the comfort.

In some embodiments, the air deflector 331 has a first state. In the first state, the air deflector 331 partially opens the air outlet 102 and at least part of the air deflector 331 is opposite to the air outlet 102. In the first state, the shortest distance between an inner edge of the lower end of the air deflector 331 and an upper end of the front panel 1102 is denoted as A18, 60mm≤A18≤85mm, the lower end of the air deflector 331 is separated from the frame 10 to partially open the air outlet 102, and the upper end of the air deflector 331 is opposite to the air outlet 102. In this embodiment, by limiting the shortest distance between the inner edge of the lower end of the air deflector 331 and the upper end of the front panel 1102 in the first state, it is convenient to adjust the air discharge angle of the air deflector 331 partially opening the air outlet 102, thereby facilitating the front panel 1102 to better guide the airflow and improving the landing effect.

It may be understood that the first state is an air discharge state of the air conditioner indoor unit in a floor air supply mode.

In some embodiments, in the first state, an included angle between a tangent direction of the inner edge of the lower end of the air deflector 331 and the vertical plane is denoted as β18, and 6 degrees≤β18≤ 14 degrees. By limiting the included angle between the tangent direction of the inner edge of the lower end of the air deflector 331 and the vertical plane, it is convenient for the air deflector 331 to guide the airflow at the air outlet 102, thus reducing the flow resistance of the airflow at the air deflector 331, and improving the air volume of the air conditioner indoor unit.

An air conditioning system according to an embodiment of the present disclosure will be described below. The air conditioning system of this embodiment of the present disclosure includes an air conditioner indoor unit and an air conditioner outdoor unit, and the air conditioner indoor unit may be the air conditioner indoor unit described in any of the above embodiments.

In the description of the present disclosure, it should be understood that the orientation or position relationship indicated by terms "central", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing the present disclosure and simplifying the description, and does not indicate or imply that the referred device or element must have a specific orientation, and be constructed and operated in a specific orientation, so it cannot be understood as a limitation of the present disclosure.

In addition, terms "first" and "second" are only used for purpose of description, and cannot be understood as indicating or implying relative importance or implicitly indicating the number of indicated technical features. Therefore, the feature defined as the "first" or the "second" may explicitly or implicitly include at least one such feature. In the description of the present disclosure, "a plurality of" means at least two, such as two, three, etc., unless otherwise specifically defined.

In the present disclosure, unless otherwise expressly defined, terms such as "install/mount", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present disclosure may be understood according to the specific situations.

In the present disclosure, unless otherwise expressly defined, a first feature "below", "under", "on bottom of", "above", "on", or "on top of" a second feature may include an embodiment in which the first feature is in direct contact with the second feature, or the first feature is in indirect contact with the second feature through an intermediate media. And, a first feature "above", "on", or "on top of" a second feature may include an embodiment in which the first feature is right or obliquely "above", "on", or "on top of" the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

In the description of the present disclosure, terms such as "an embodiment", "some embodiments", "an example", "a specific example" or "some examples" means that a particular feature, structure, material, or characteristic described in connection with the embodiment or example is included in at least one embodiment or example of the present disclosure. Thus, the appearances of these terms in various places throughout this specification are not necessarily referring to the same embodiment or example of the present disclosure. Furthermore, the particular features, structures, materials, or characteristics may be combined in one or more embodiments or examples in any suitable manner. In addition, without contradiction, those skilled in the art may combine and unite different embodiments or examples or features of the different embodiments or examples described in this specification.

Although the embodiments of the present disclosure have been shown and described above, it may be understood that the above embodiments are illustrative and shall not be understood as limitation to the present disclosure. Changes, modifications, alternatives and variations made by those skilled in the art to the above embodiments fall within the protection scope of the present disclosure.

All embodiments of the present disclosure may be implemented independently or in combination with other embodiments, which are all regarded as the protection scope claimed by the present disclosure.

## Claims

1. An air conditioner indoor unit, comprising:
a frame having an air inlet and an air outlet, and the air outlet being located above the air inlet;
a base connected with the frame, wherein an air duct extending in a first direction is defined between the base and the frame, and the base and the frame are arranged opposite to each other in a second direction orthogonal to the first direction;
a heat exchanger arranged in the air duct, adjacent to the air inlet and protruding toward the air inlet;
an air guiding frame detachably connected with the base and arranged adjacent to the air outlet, and configured to guide an airflow in the air duct to the air outlet; and
a cross-flow assembly arranged in the air duct and located between the air guiding frame and the heat exchanger in a third direction, and configured to convey the airflow from the air inlet to the air outlet, wherein the third direction is perpendicular to the first direction and the second direction.

2. The air conditioner indoor unit according to claim 1, wherein the air conditioner indoor unit further comprises a mounting seat and an air swinging motor, the air guiding frame has an accommodating cavity and a recess, the mounting seat is mounted on the air guiding frame and arranged opposite to the accommodating cavity, the air swinging motor is mounted on the mounting seat, at least part of the motor is embedded in the accommodating cavity, and the recess is arranged at at least one end of the air guiding frame in the first direction, and is configured to avoid a driving mechanism for driving an air deflector to move; and/or
one of the base and the air guiding frame has a first plug-in hole, and the other of the base and the air guiding frame comprises a first plug-in part, wherein the first plug-in part is inserted and fitted in the first plug-in hole to realize plug-in assembling of the base and the air guiding frame; and/or
the air conditioner indoor unit further comprises a motor cover, and the motor cover is connected with the base; one of the motor cover and the air guiding frame has a second plug-in hole, and the other of the motor cover and the air guiding frame comprises a second plug-in part; and the second plug-in part is inserted and fitted in the second plug-in hole.

3. The air conditioner indoor unit according to claim 1, wherein the air conditioner indoor unit further comprises an air sweeping assembly, and the air swinging assembly comprises:
a plurality of blades and a connecting rod, wherein the plurality of blades are arranged at intervals in the first direction, each blade is provided with a first swinging rod for driving the blade to rotate, the connecting rod extends in the first direction, and the connecting rod is rotatably connected with the first swinging rods of the plurality of blades;
a transmission shaft, one end of the transmission shaft being rotatably connected with an end of the connecting rod, and the other end of the transmission shaft being connected with a driving shaft of a driver, wherein a length of the transmission shaft is larger than a length of the first swinging rod, so as to increase an acting force applied to the connecting rod by the transmission shaft in a case that the connecting rod is driven by the transmission shaft to move in the first direction; and/or
an air swinging seat, the frame comprising a plurality of mounting points connected with the air guiding frame, and the air swinging seat shielding the plurality of mounting points.

4. The air conditioner indoor unit according to any one of claims 1-3, wherein an inner wall surface of the air duct is provided with one protrusion or at least two protrusions, and the at least two protrusions are arranged at intervals in the third direction, wherein the protrusion is arranged to extend in the first direction, and the protrusion is configured to change a flow direction of a condensate flowing along the inner wall surface so that the condensate is configured to be discharged to the heat exchanger located below the air duct.

5. The air conditioner indoor unit according to any one of claims 1-4, wherein the air conditioner indoor unit further comprises a heat exchanger bracket, and the heat exchanger bracket comprises a bracket body, a fixing part, a water baffle plate and a wiring part, wherein the fixing part is arranged on the bracket body for a metal tube of the heat exchanger to pass through, the water baffle plate and the fixing part are both arranged on a side of the bracket body facing away from the heat exchanger, the water baffle plate is arranged at an outer edge of the bracket body and extends gradually toward a lower end of the bracket body, the wiring part is arranged on the bracket body, and the wiring part is configured to fix a wire harness.

6. The air conditioner indoor unit according to any one of claims 1-5, wherein a back surface of the base has a wall mounting hole, the base comprises a first support part at a bottom of the base, and the air conditioner indoor unit further comprises a decorative plate and a wall mounting plate, wherein the decorative plate is clamped at the bottom of the base and encloses a limiting cavity with the first support part, an upper end of the wall mounting plate comprises a hanging hook, the wall mounting plate comprises a supporting hook, the hanging hook is hooked in the wall mounting hole, and the supporting hook is arranged in the limiting cavity and supports a bottom surface of the first support part.

7. The air conditioner indoor unit according to any one of claims 1-6, wherein an inner wall surface of the frame is provided with a wire fixing part, the air conditioner indoor unit further comprises an air guiding assembly, the air guiding assembly comprises an air guiding driving part and an air deflector, the air deflector is arranged at the air outlet, the air guiding driving part is arranged on the frame and connected with the air deflector, the air guiding driving part has a first wire harness, and the first wire harness is mounted in the wire fixing part.

8. The air conditioner indoor unit according to any one of claims 1-7, wherein the air conditioner indoor unit further comprises a display module, the display module comprises a display box, the display box is mounted on the frame, a first electric control board is arranged in the display box, at least part of the wire fixing part and the display box define a wire fixing channel, and the wire fixing channel is configured to fix the first wire harness; and/or
the air conditioner indoor unit further comprises a display module, the display module comprises a humidity sensor and a display box, a first electric control board is arranged in the display box, and the humidity sensor is mounted on the first electric control board.

9. The air conditioner indoor unit according to any one of claims 1-6, further comprising an air guiding assembly, wherein the air guiding assembly comprises an air deflector and an air guiding driving part, the air deflector is movably arranged at the air outlet to open or close the air outlet, and the air guiding driving part is connected with the air deflector to drive the air deflector to move, wherein the air guiding frame is spaced apart from the frame, and the air guiding driving part is arranged between the air guiding frame and the frame.

10. The air conditioner indoor unit according to claim 9, wherein the air deflector comprises a first air guiding surface, a transitional air guiding surface and a second air guiding surface arranged in sequence along a width direction of the air deflector, at least part of the first air guiding surface is obliquely arranged relative to the transitional air guiding surface in a direction facing away from the transitional air guiding surface, and at least part of the second air guiding surface is obliquely arranged relative to the transitional air guiding surface in another direction facing away from the transitional air guiding surface.

11. The air conditioner indoor unit according to claim 9 or 10, wherein the air guiding assembly comprises a mounting frame, and the air guiding driving part comprises:
a driving member and a rocker arm, wherein the driving member is connected with the mounting frame, the driving member is drivingly connected with the rocker arm to drive the rocker arm to rotate relative to the mounting frame, and the rocker arm is provided with a rocker arm protrusion on an axial side of a rotating shaft of the rocker arm; and
a limiting piece connected with the mounting frame, and arranged on a side of the rocker arm facing the rocker arm protrusion, and the rocker arm protrusion being rotatably connected with the limiting piece.

12. The air conditioner indoor unit according to any one of claims 9-11, wherein the air deflector comprises an outer air deflector, a cover plate and an inner lining plate, wherein the cover plate is arranged at either end of the outer air deflector in a length direction of the outer air deflector, and the cover plate is located on a side of the outer air deflector in a thickness direction of the outer air deflector; the inner lining plate is arranged on the outer air deflector, the inner lining plate and the cover plate are located on the same side of the outer air deflector in the thickness direction of the outer air deflector, and the inner lining plate and the cover plate are arranged in sequence and clamped with each other along the length direction of the outer air guide plate.

13. The air conditioner indoor unit according to any one of claims 1-12, wherein the frame comprises a frame body and a front panel, and the front panel is arranged at a front end of the frame body and located below the air outlet; the front panel extends from top to bottom and is obliquely arranged rearward, and an included angle between the front panel and a vertical plane ranges from 6 degrees to 14 degrees; and/or
a protruding part is arranged at an air duct outlet of the air duct, and the air duct outlet is in communication with the air outlet.

14. The air conditioner indoor unit according to any one of claims 1-13, wherein the base comprises a base body and a base extension part, and the base extension part is arranged at an end of the base body in the second direction; and
a cross-flow fan is mounted on the base body, the cross-flow fan and the base extension part are located at the same end of the base body in the second direction, and the cross-flow fan and the base extension part are arranged at intervals in the first direction, wherein the cross-flow fan comprises a cover, and the cover, the base extension part and one end face of the base body in the third direction jointly support the base body in a case that the base body is erected in the third direction.

15. The air conditioner indoor unit according to claim 14, wherein the air conditioner indoor unit further comprises an ion generator, and the ion generator comprises a high-voltage pack and a probe electrically connected with each other; the high-voltage pack is arranged on the base extension part, the base extension part is spaced apart from the air duct and arranged adjacent to the air outlet, the cross-flow assembly is arranged on a side of the base body in the first direction, and the base extension part is located on another side of the base body in the first direction; the probe is arranged on the base, the air guiding frame has a frame through hole, and an emitting end of the probe extends into the air duct through the frame through hole.

16. The air conditioner indoor unit according to any one of claims 1-15, wherein the air conditioner indoor unit further comprises a bottom support, and the bottom support comprises:
a first reinforcing piece, wherein the base comprises a main section and a cantilever arranged at intervals in the first direction, a base body notch for a pipeline to pass through is defined between the main section and the cantilever, and the first reinforcing piece is configured to connect the main section with the cantilever; and
a second reinforcing piece connected with the first reinforcing piece and extending in the second direction, and configured to abut against an opposite side surface of the cantilever in the first direction.

17. The air conditioner indoor unit according to any one of claims 1-16, wherein a first end of the base in the second direction has a bearing housing mounting groove, an inner wall surface of the bearing housing mounting groove has a first drainage hole penetrating through the base in the second direction, and the first drainage hole is configured to guide condensed water in the bearing housing mounting groove to a second end of the base in the second direction; and/or
a second end of the base in the second direction is connected with a wall mounting vertical plate, an isolation cavity is defined between the wall mounting vertical plate and the base, and a first water guiding rib is arranged on a surface of the second end of the base in the second direction, wherein an extension direction of the first water guiding rib is at an acute angle with the first direction, a part of the first water guiding rib is located in the isolation cavity, and a lower end of the first water guiding rib is located outside the isolation cavity.

18. The air conditioner indoor unit according to any one of claims 1-17, wherein the air conditioner indoor unit further comprises a condensate pan,
wherein the condensate pan has a condensate-pan water receiving groove extending in the first direction, and the condensate pan comprises a first layer, a third layer and a second layer arranged in sequence along the third direction, wherein a surface of the first layer facing away from the second layer forms a bottom surface of the condensate pan, at least part of a surface of the second layer facing away from the first layer forms a wall surface of the condensate-pan water receiving groove, and an outer edge of the first layer in a width direction of the condensate pan is clamped with an outer edge of the second layer in the second direction; and/or
the condensate pan comprises a pan body and a first pan extension part, wherein the pan body has a water receiving groove extending in the first direction, the water receiving groove is configured to receiving condensed water on the heat exchanger, the first pan extension part is arranged at at least one end of the pan body in the first direction, the first pan extension part extends forward from a front side of a right end of the pan body, the first pan extension part has a first extension groove extending along an extension direction of the first pan extension part, the first extension groove is in communication with the water receiving groove, and the first extension groove is at least configured to receive condensed water on a wire clamping assembly and/or a grounding wire on an evaporator bracket.

19. The air conditioner indoor unit according to any one of claims 1-18, wherein the air conditioner indoor unit further comprises a water guiding assembly, an inner wall surface of the air duct comprises a first wall surface and a second wall surface, the heat exchanger is arranged in the air duct, the heat exchanger has a first end and a second end, the first end of the heat exchanger is opposite to the first wall surface, and the second end of the heat exchanger is opposite to the second wall surface, wherein the water guiding assembly comprises a first water guiding strip and a second water guiding strip, the first water guiding strip is arranged on the first wall surface, a free end of the first water guiding strip abuts against a lower side of the first end of the heat exchanger, the second water guiding strip is arranged on the second wall surface, and a free end of the second water guiding strip at least abuts against a lower side of the second end of the evaporator; and/or
the air guiding frame comprises a frame mating part opposite to an end of the heat exchanger, and the frame mating part has a first side surface and a second side surface arranged opposite to each other in the third direction, wherein the first side surface is adjacent to and opposite to the end of the heat exchanger, the frame mating part has a drainage slot, and the drainage slot penetrates through the air guiding frame in the third direction and is configured to guide condensed water on the air guiding frame onto the heat exchanger through the drainage slot.

20. An air conditioning system, comprising the air conditioner indoor unit according to any one of claims 1-19.
